(19) Europäisches Patentamt / European Patent Office / Office européen des brevets

(11) **EP 3 675 490 A1**

(12) **EUROPEAN PATENT APPLICATION**
published in accordance with Art. 153(4) EPC

(43) Date of publication:
**01.07.2020 Bulletin 2020/27**

(21) Application number: **18848702.9**

(22) Date of filing: **08.08.2018**

(51) Int Cl.:
**H04N 19/109** *(2014.01)*     **H04N 19/176** *(2014.01)*
**H04N 19/51** *(2014.01)*

(86) International application number:
**PCT/JP2018/029735**

(87) International publication number:
**WO 2019/039283 (28.02.2019 Gazette 2019/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.08.2017 JP 2017159408**

(71) Applicant: **Sony Corporation
Tokyo 108-0075 (JP)**

(72) Inventor: **KONDO, Kenji
Tokyo 108-0075 (JP)**

(74) Representative: **D Young & Co LLP
120 Holborn
London EC1N 2DY (GB)**

(54) **IMAGE PROCESSING DEVICE AND IMAGE PROCESSING METHOD**

(57)   The present technology relates to an image processor and an image processing method that make it possible to improve encoding efficiency.

A prediction section generates a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block. The present technology is applicable to, for example, an image encoder that encodes an image, an image decoder that decodes an image, and the like.

[ FIG. 14 ]

EP 3 675 490 A1

**Description**

Technical Field

The present technology relates to an image processor and an image processing method, and more particularly, to an image processor and an image processing method that make it possible to improve encoding efficiency, for example.

Background Art

In the JVET (Joint Video Exploration Team) that searches for next-generation video encoding of ITU-T (International Telecommunication Union Telecommunication Standardization Sector) has proposed inter-prediction processing (Affine motion compensation (MC) prediction) that performs motion compensation by performing affine transformation of a reference image on the basis of motion vectors of two apexes (e.g., see NPTLs 1 and 2). According to such inter-prediction processing, it is possible to generate a high-accuracy predicted image by compensating not only translational movement (parallel movement) between screens but also motion in a rotational direction and changes in shapes such as enlargement and reduction.

Citation List

Non-Patent Literature

NPTL 1: Jianle Chen et al., "Algorithm Description of Joint Exploration Test Model 4 (JVET-C1001", JVET of ITU-T SG16 WP3 and ISO/IEC JTC1/SC29/WG11, 26 May-1 June 2016

NPTL 2: Feng Zou,"Improved affine motion prediction (JVET-C0062)", JVET of ITU-T SG16 WP3 and ISO/IEC JTC1/SC29/WG11, 26 May-1 June 2016

Summary of the Invention

Problem to be Solved by the Invention

However, the number of parameters used in motion compensation that uses affine transformation is increased as compared with the inter-prediction processing in which only translational movement is compensated to generate a predicted image on the basis of one motion vector. Thus, overhead is increased to lower encoding efficiency.
The present technology has been made in view of such a circumstance, and is directed to making it possible to improve encoding efficiency.

Means for Solving the Problem

A first image processor of the present technology is an image processor including a prediction section that generates a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.
A first image processing method of the present technology is an image processing method including causing an image processor to generate a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.
In the first image processor and the first image processing method of the present technology, a predicted image of a block to be processed is generated by performing motion compensation in a motion compensation mode selected from a plurality of motion compensation modes in accordance with a POC (Picture Order Count) distance which is a distance between POC of the block and POC of a reference image used for generation of the predicted image of the block.
A second image processor of the present technology is an image processor including a prediction section that generates a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

A second image processing method of the present technology is an image processing method including causing an image processor to generate a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

In the second image processor and the second image processing method of the present technology, a predicted image of a block to be processed is generated in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

Effect of the Invention

According to the present technology, it is possible to improve encoding efficiency. That is, according to the present technology, for example, in a case where a high-accuracy predicted image is generated on the basis of a motion vector, it is possible to reduce overhead and thus to improve the encoding efficiency.

It is to be noted that the effects described here are not necessarily limitative, and may be any of the effects described in the present disclosure.

Brief Description of the Drawings

[FIG. 1] FIG. 1 describes inter-prediction processing that performs motion compensation on the basis of one motion vector.

[FIG. 2] FIG. 2 describes inter-prediction processing that performs motion compensation on the basis of one motion vector and a rotation angle.

[FIG. 3] FIG. 3 describes inter-prediction processing that performs motion compensation on the basis of two motion vectors.

[FIG. 4] FIG. 4 describes inter-prediction processing that performs motion compensation on the basis of three motion vectors.

[FIG. 5] FIG. 5 describes blocks before and after affine transformation on the basis of three motion vectors.

[FIG. 6] FIG. 6 describes QTBT.

[FIG. 7] FIG. 7 is a block diagram illustrating a configuration example of an embodiment of an image encoder.

[FIG. 8] FIG. 8 describes a translation mode.

[FIG. 9] FIG. 9 describes a first example of a translation rotation mode.

[FIG. 10] FIG. 10 describes a second example of the translation rotation mode.

[FIG. 11] FIG. 11 describes a first example of a translation scaling mode.

[FIG. 12] FIG. 12 describes a second embodiment of the translation scaling mode.

[FIG. 13] FIG. 13 illustrates a state in which the motion compensation is performed.

[FIG. 14] FIG. 14 describes an example of a mode selection method for selecting a motion compensation mode to be used for the motion compensation from a plurality of motion compensation modes in accordance with POC distance.

[FIG. 15] FIG. 15 illustrates examples of a relationship between POC distance of PU 31 to be processed and a motion compensation mode of a motion compensation that is able to be used in inter-prediction processing of the PU 31.

[FIG. 16] FIG. 16 describes motion compensation mode information and parameter information.

[FIG. 17] FIG. 17 describes a motion vector included in adjacent parameters to be candidates of a prediction vector.

[FIG. 18] FIG. 18 is a flowchart that describes image encoding processing.

[FIG. 19] FIG. 19 is a flowchart that describes processing of setting inter-prediction processing mode.

[FIG. 20] FIG. 20 is a flowchart that describes merge mode encoding processing.

[FIG. 21] FIG. 21 is a flowchart that describes AMVP mode encoding processing.

[FIG. 22] FIG. 22 is a block diagram illustrating a configuration example of an embodiment of an image decoder.

[FIG. 23] FIG. 23 is a flowchart that describes image decoding processing.

[FIG. 24] FIG. 24 is a flowchart that describes motion compensation mode information decoding processing.

[FIG. 25] FIG. 25 is a flowchart that describes merge mode decoding processing.

[FIG. 26] FIG. 26 is a flowchart that describes AMVP mode decoding processing.

[FIG. 27] FIG. 27 illustrates a first example of interpolation of a pixel at a fractional position by an interpolation filter.

[FIG. 28] FIG. 28 illustrates a second example of interpolation of pixels at fractional positions by the interpolation filter.

[FIG. 29] FIG. 29 illustrates a third example of interpolation of pixels at fractional positions by the interpolation filter.

[FIG. 30] FIG. 30 illustrates an example of interpolation in a horizontal direction for generating pixels at fractional positions pointed to by motion vectors v of a unit block in a case where the unit block is configured by $2\times2$ pixels.

[FIG. 31] FIG. 31 illustrates an example of interpolation in a vertical direction for generating pixels at fractional positions pointed to by the motion vectors v of a unit block in a case where the unit block is configured by $2\times2$ pixels.

[FIG. 32] FIG. 32 describes a first example of motion compensation in complete affine transformation mode.

[FIG. 33] FIG. 33 illustrates a state in which a motion vector v of an i-th unit block is determined in a case where the PU 31 is divided into $4\times4$ pieces of 16 unit blocks.

[FIG. 34] FIG. 34 describes a second example of the motion compensation in the complete affine transformation mode.

[FIG. 35] FIG. 35 illustrates a state in which a motion vector v of an i-th unit block is determined in a case where the PU 31 is divided into $8\times8$ pieces of 64 unit blocks.

[FIG. 36] FIG. 36 illustrates examples of a relationship between POC distance of the PU 31 and unit block size.

[FIG. 37] FIG. 37 is a flowchart that describes an example of processing in motion compensation that divides the PU into unit blocks in accordance with the POC distance.

[FIG. 38] FIG. 38 illustrates a first example of accuracy in the motion vector v of unit blocks.

[FIG. 39] FIG. 39 illustrates a second example of accuracy in the motion vector v of the unit blocks.

[FIG. 40] FIG. 40 is a block diagram illustrating a configuration example of hardware of a computer.

[FIG. 41] FIG. 41 is a block diagram illustrating an example of a schematic configuration of a television apparatus.

[FIG. 42] FIG. 42 is a block diagram illustrating an example of a schematic configuration of a mobile phone.

[FIG. 43] FIG. 43 is a block diagram illustrating an example of a schematic configuration of a recording reproduction apparatus.

[FIG. 44] FIG. 44 is a block diagram illustrating an example of a schematic configuration of an imaging apparatus.

[FIG. 45] FIG. 45 is a block diagram illustrating an example of a schematic configuration of a video set.

[FIG. 46] FIG. 46 is a block diagram illustrating an example of a schematic configuration of a video processor.

[FIG. 47] FIG. 47 is a block diagram illustrating another example of the schematic configuration of the video processor.

[FIG. 48] FIG. 48 is a block diagram illustrating an example of a schematic configuration of a network system.

Modes for Carrying Out the Invention

Before describing embodiments of the present technology in the following, description is given of inter-prediction processing.

<Inter-Prediction Processing>

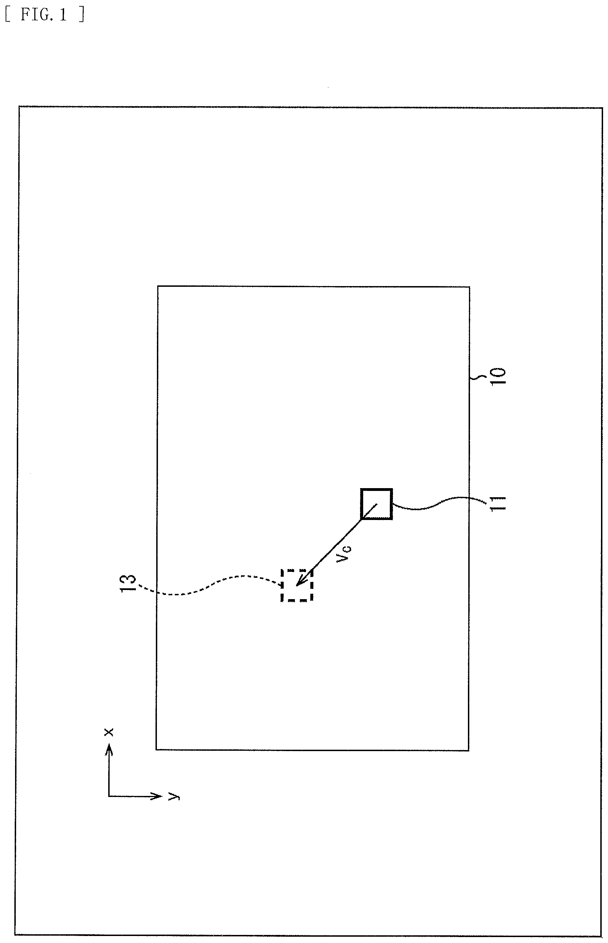

FIG. 1 describes inter-prediction processing (hereinafter, also referred to as 2-parameter MC prediction processing) in which motion compensation is performed on the basis of one motion vector.

It is to be noted that, in the following, unless otherwise specified, a lateral direction (horizontal direction) of an image (picture) is set as an x-direction, and a longitudinal direction (vertical direction) thereof sis set as a y-direction.

As illustrated in FIG. 1, in the 2-parameter MC prediction processing, one motion vector $v_c$ ($v_{cx}$, $v_{cy}$) is decided for a PU 11 (current block) to be predicted. Then, a block 13 of the same size as the PU 11 and being present at a position distant from the PU 11 by the motion vector $v_c$ in a reference image at time different from a picture 10 including the PU 11 is used as a block (hereinafter, also referred to as a reference block) for generating a predicted image; the block 13 as the reference block is translationally moved on the basis of the motion vector $v_c$ to thereby perform motion compensation, thus generating a predicted image of the PU 11.

That is, in the 2-parameter MC prediction processing, affine transformation is not performed on a reference image, and a predicted image is generated in which only a translational movement between screens is compensated. In addition, two parameters used for the motion compensation are $v_{cx}$ and $v_{cy}$. Such inter-prediction processing is adopted in AVC (Advanced Video encoding), HEVC (High Efficiency Video Coding), or the like.

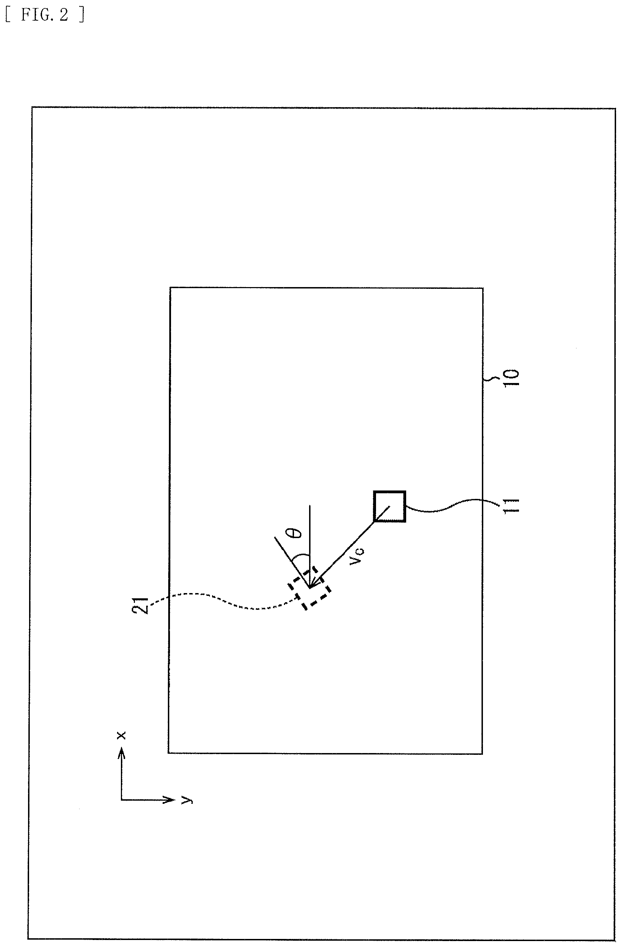

FIG. 2 describes inter-prediction processing that performs motion compensation on the basis of one motion vector and a rotation angle.

As illustrated in FIG. 2, in the inter-prediction processing in which motion compensation is performed on the basis of one motion vector and a rotation angle, one motion vector $v_c$ ($v_{cx}$, $v_{cy}$) and a rotation angle $\theta$ are decided for the PU 11 to be predicted. Then, a block 21 of the same size as the PU 11 and being present at a position distant from the PU 11 by the motion vector $v_c$ and at a rotation angle $\theta$ in a reference image at time different from the picture 10 including the PU 11 is used as a reference block; the block 21 as the reference block is affine-transformed on the basis of the motion vector $v_c$ and the rotation angle $\theta$ to thereby perform motion compensation, thus generating a predicted image of the PU 11.

That is, in the inter-prediction processing in which motion compensation is performed on the basis of one motion vector and the rotation angle, affine transformation is performed on a reference image on the basis of one motion vector and the rotation angle. As a result, a predicted image is generated in which the translational movement and the motion in the rotational direction between the screens are compensated. Accordingly, the accuracy in the predicted image is improved as compared with the 2-parameter MC prediction processing. In addition, three parameters used for the motion compensation are $v_{cx}$, $v_{cy}$ and $\theta$.

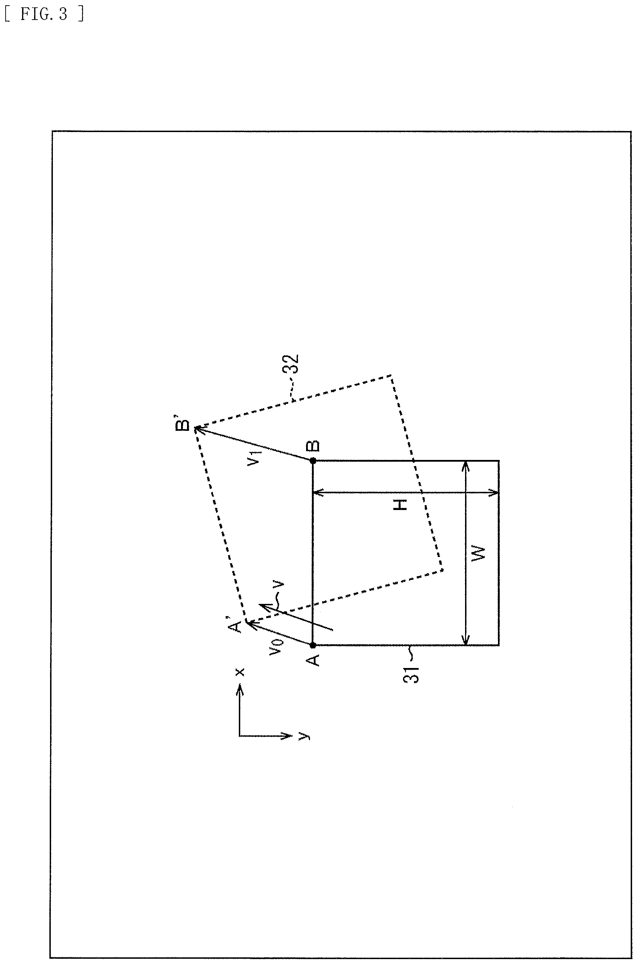

FIG. 3 describes inter-prediction processing (hereinafter, also referred to as 4-parameter affine MC prediction processing) in which motion compensation is performed on the basis of two motion vectors.

As illustrated in FIG. 3, in the 4-parameter affine MC prediction processing, a motion vector $v_0=(v_{0x}, v_{0y})$ at an upper left apex A of the PU 31 and a motion vector $v_{1=}(v_{1x}, v_{1y})$ at an upper right apex B are decided with respect to the PU 31 to be predicted (to be processed) (to be encoded or to be decoded).

Then, a block 32 having a point A', as an upper left apex, distant from the apex A by the motion vector $v_0$ and having a point B', as an upper right apex, distant from the apex B by the motion vector $v_1$ in a reference image at time different from the picture including the PU 31 is used as a reference block; the block 32 as the reference block is affine-transformed on the basis of the motion vector $v_0$ and the motion vector $v_1$ to thereby perform motion compensation, thus generating a predicted image of the PU 31.

Specifically, the PU 31 is divided into blocks of a predetermined size (hereinafter, referred to as unit block) which is a unit of generation of a predicted image. Then, a motion vector $v=(v_x, v_y)$ of each unit block is determined by the following expression (1) on the basis of the motion vector $v_0=(v_{0x}, v_{0y})$ and the motion vector $v_{1=}(v_{1x}, v_{1y})$.

$$v_x=(v_{1x}-v_{0x})x/W-(v_{1y(}-v_{0y})y/H+v_{0x}$$
$$v_y=(v_{1y}-v_{0y})x/W-(v_{1x}-v_{0x})y/H+v_{0y} \dots (1)$$

In the expression (1), W is a size of the PU 31 in the x-direction, and H represents a size of the PU 31 in the y-direction. In the following, W and H are assumed to be equal to each other, and the PU 31 is assumed to have a square shape for simplification of description. x and y represent positions of the unit block in the x-direction and the y-direction, respectively (x=0, 1, ..., and y=0, 1, ...). In accordance with the expression (1), the motion vector v of the unit block is decided on the basis of the position of the unit block.

Then, a predicted image of the PU 31 is generated in a unit of unit block by translationally moving, on the basis of the motion vector v, a block (hereinafter, also referred to as "reference unit block"), in the unit block, of the same size as a unit block and being distant from each unit block by the motion vector v.

As described above, in the 4-parameter affine MC prediction processing, affine transformation is performed on a reference image on the basis of two motion vectors. As a result, a predicted image is generated in which not only the translational movement and the motion in the rotational direction between screens but also changes in shapes such as enlargement and reduction are compensated. Accordingly, accuracy in the predicted image is improved as compared with the inter-prediction processing in which motion compensation is performed on the basis of one motion vector and a rotation angle. In addition, four parameters used for the motion compensation are $v_{0x}$, $v_{0y}$, $v_{1x}$ and $v_{1y}$. Such inter-prediction processing is adopted in JEM (Joint Exploration Model) reference software.

It is to be noted that the affine transformation based on two motion vectors is affine transformation on the assumption that a block before and after the affine transformation is a rectangle. Even in a case where the block before and after the affine transformation is a quadrangle other than the rectangle, three motion vectors are required to perform the affine transformation.

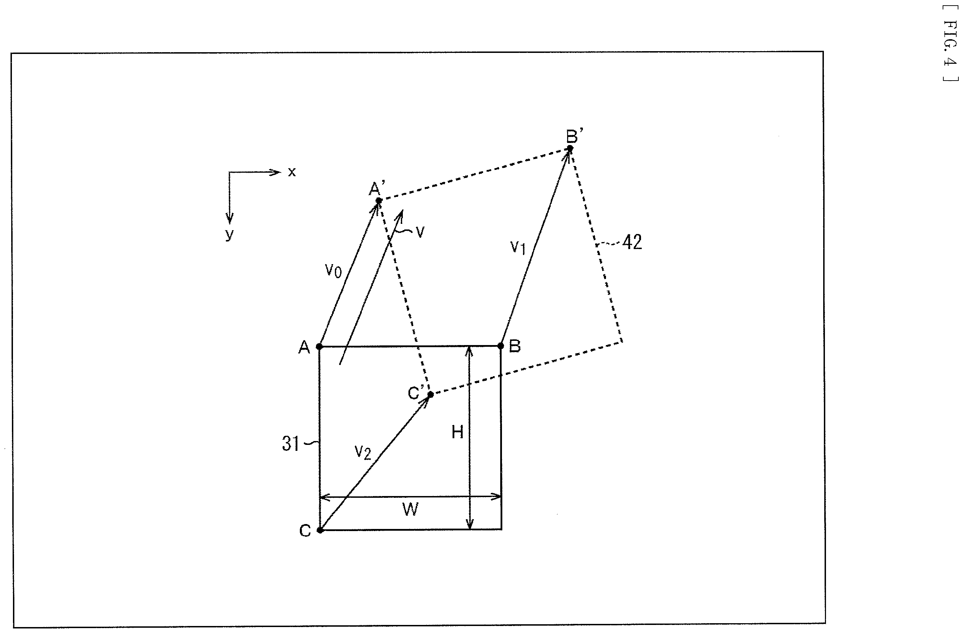

FIG. 4 describes inter-prediction processing (hereinafter, also referred to as 6-parameter affine MC prediction processing) in which motion compensation is performed on the basis of three motion vectors.

As illustrated in FIG. 4, in the 6-parameter affine MC prediction processing, not only the motion vector $v_0=(v_{0x}, v_{0y})$ and the motion vector $v_{1=}(v_{1x}, v_{1y})$ but also a motion vector $v_2=(v_{2x}, v_{2y})$ of a lower left apex C is decided for the PU 31 to be predicted.

Then, a block 42 having a point A', as an upper left apex, distant from the apex A by the motion vector $v_0$, having a point B', as an upper right apex, distant from the apex B by the motion vector $v_1$, and having a point C', as a lower left apex, distant from the apex C by the motion vector $v_2$ in a reference image at time different from the picture including the PU 31 is used as a reference block; the block 42 as the reference block is affine-transformed on the basis of the motion vector $v_0$ to the motion vector $v_2$ to thereby perform motion compensation, thus generating a predicted image of the PU 31.

That is, the PU 31 is divided into unit blocks, and the motion vector $v=(v_x, v_y)$ of each unit block is determined, on the basis of motion vector $v_0=(v_{0x}, v_{0y})$, $v_1=(v_{1x}, v_{1y})$, and $v_2=(v_{2x}, v_{2y})$, in accordance with the expression (2).

$$v_x=(v_{1x}-v_{0x})x/W+(v_{2x}-v_{0x})y/H+v_{0x}$$
$$v_y=(v_{1y}-v_{0y})x/W+(v_{2y}-v_{0y})y/H+v_{0y} \ldots (2)$$

In the expression (2), W, H, x, and y represent the size of the PU 31 in the x-direction, the size thereof in the y-direction, and the positions of the unit block in the x-direction and the y-direction, respectively, as described with reference to the expression (1). According to the expression (2), the motion vector v of the unit block is determined to proportionally distribute the motion vector $v_0$ to $v_2$ in accordance with the position (x, y) of the unit block.

Hereinafter, in the 6-parameter affine MC prediction processing, similarly to the 4-parameter affine MC prediction processing described with reference to FIG. 3, the predicted image of the PU 31 is generated in a unit of unit block by translationally moving, on the basis of the motion vector v, a reference unit block, in a reference image, of the same size as a unit block and being distant from each unit block by the motion vector v.

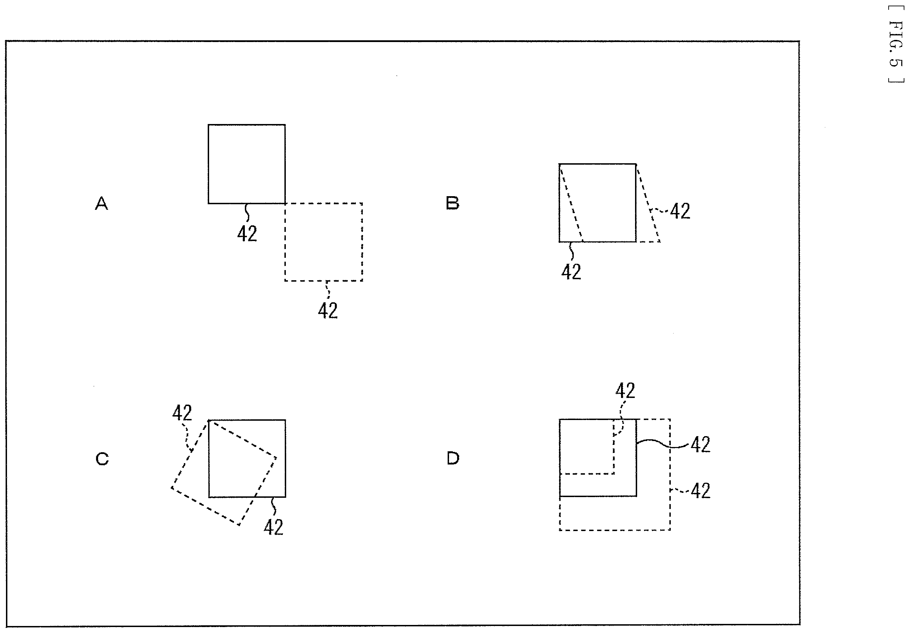

FIG. 5 illustrates an overview of affine transformation performed on a reference image on the basis of three motion vectors in the 6-parameter affine MC prediction processing.

In accordance with the affine transformation performed on a reference image on the basis of the three motion vectors, it is possible to express translational movement (Translation) as illustrated in A of FIG. 5, skew (Skew) as illustrated in B of FIG. 5, rotation (Rotation) as illustrated in C of FIG. 5, and enlargement or reduction (Scaling) as illustrated in D of FIG. 5 for the block 42 that is a reference block.

As a result, it is possible to generate a predicted image in which translational movement, rotation, enlargement/reduction, skew, or a motion of a combination thereof (including changes in shapes) between screens is compensated.

It is to be noted that, in FIG. 5, the block 42 before the affine transformation is indicated by a solid line, and the block 42 after the affine transformation is indicated by a dotted line.

Meanwhile, in the 4-parameter affine MC prediction processing described with reference to FIG. 3, it is not possible to compensate the skew for the predicted image; however it is possible to compensate the translational movement, the rotation, the scaling/reduction, or the motion of the combination thereof between the screens.

In the 4-parameter affine MC prediction processing and the 6-parameter affine MC prediction processing, the accuracy in the predicted image is improved as compared with the 2-parameter MC prediction processing in which only the translational movement between the screens is compensated.

However, in the 4-parameter affine MC prediction processing, parameters in the inter-prediction processing are $v_{0x}$, $v_{0y}$, $v_{1x}$ and $v_{1y}$. In addition, in the 6-parameter affine MC prediction processing, parameters used for the motion compensation are $v_{0x}$, $v_{0y}$, $v_{1x}$, $v_{1y}$, $v_{2x}$ and $v_{2y}$. Accordingly, in the 4-parameter affine MC prediction processing and the 6-parameter affine MC prediction processing, the number of parameters used for the motion compensation is increased as compared with the 2-parameter MC prediction processing.

As described above, improvement in prediction accuracy in the inter-prediction processing and suppression of overhead are in a trade-off relationship.

It is to be noted that JVET proposes a technique that switches between the 4-parameter affine MC prediction processing and the 6-parameter affine MC prediction processing using a control signal.

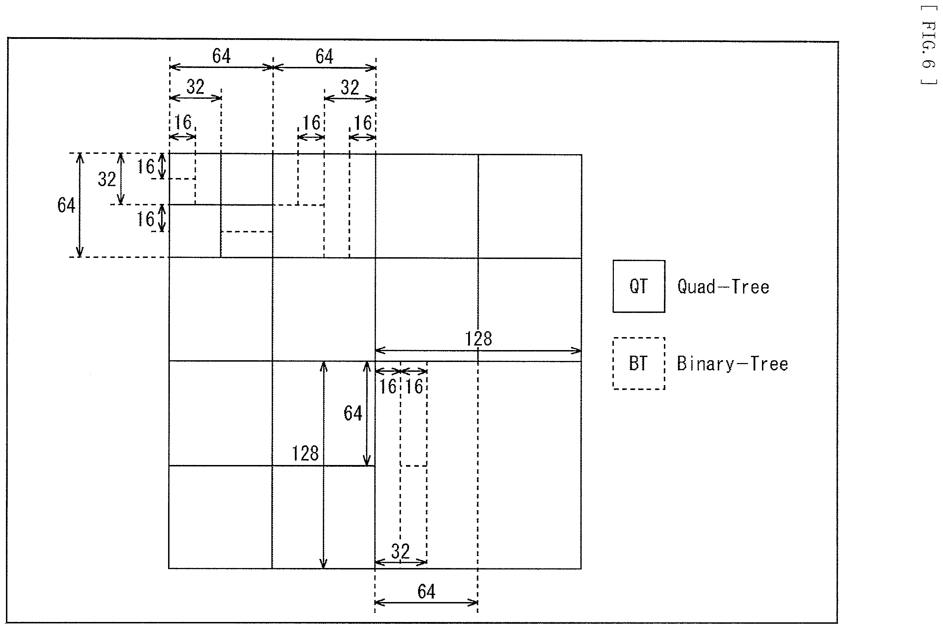

FIG. 6 describes QTBT (Quad tree plus binary tree) adopted in the JVET.

In image encoding systems such as MPEG2 (Moving Picture Experts Group 2 (ISO/IEC 13818-2) and AVC, encoding processing is executed in a processing unit called macroblock. The macroblock is a block having a uniform size of 16×16 pixels. Meanwhile, in the HEVC, encoding processing is executed in a processing unit called CU (coding unit). The CU is a block having a variable size formed by recursively dividing LCU (largest Coding Unit) that is the largest coding unit. The largest size of selectable CU is a size of 64×64 pixels. The smallest size of a selectable CU is a size of 8×8 pixels. The CU of the smallest size is called SCU (Smallest Coding Unit). It is to be noted that the largest size of the CU is not limited to the 64×64 pixels, but may be a larger block size such as a block size of 128×128 pixels, 256×256 pixels, etc.

As described above, as a result of employing the CU having a variable size, it is possible for the HEVC to adaptively adjust image quality and encoding efficiency in accordance with the content of an image. Prediction processing for prediction encoding is executed in a processing unit called PU. The PU is formed by dividing the CU using one of several dividing patterns. In addition, the PU is configured by processing units each called PB (Prediction Block) for each of luminance (Y) and color difference (Cb, Cr). Further, orthogonal transformation processing is executed in a processing unit called TU (Transform Unit). The TU is formed by dividing the CU or PU to a certain depth. In addition, the TU is configured by processing units (transformation blocks) each called TB (Transform Block) for each of luminance (Y) and color difference (Cb, Cr).

In the following, a "block" (not a block of a processing unit) is used as a partial region or a processing unit of an image (picture) for description in some cases. The "block" in this case indicates an arbitrary partial region in a picture, and its size, shape, characteristics, and the like are not limited. That is, the "block" in this case is assumed to include an arbitrary partial region (processing unit), such as TB, TU, PB, PU, SCU, CU, LCU (CTB), sub-block, macroblock, tile, slice, or the like.

It is only possible for the HEVC to divide one block into 4 (=2×2) sub-blocks in a horizontal direction and a vertical direction. Meanwhile, it is possible for the QTBT to divide one block not only into 4 (=2×2) sub-blocks, but also into 2 (=1×2, 2×1) sub-blocks by dividing the block in only one of the horizontal direction and the vertical direction. That is, in the QTBT, formation of the CU (Coding Unit) is performed by recursively repeating the division of one block into four or two sub-blocks, resulting in formation of a tree-like structure of quadtree (Quad-Tree) or binary tree (Binary-Tree). Thus, the shape of the CU may be possibly be not only square but also rectangular. It is to be noted that, in the following, it is assumed that PU and TU are the same as CU for simplicity of description.

<Embodiment of Image Encoder to which the Technology is Applied>

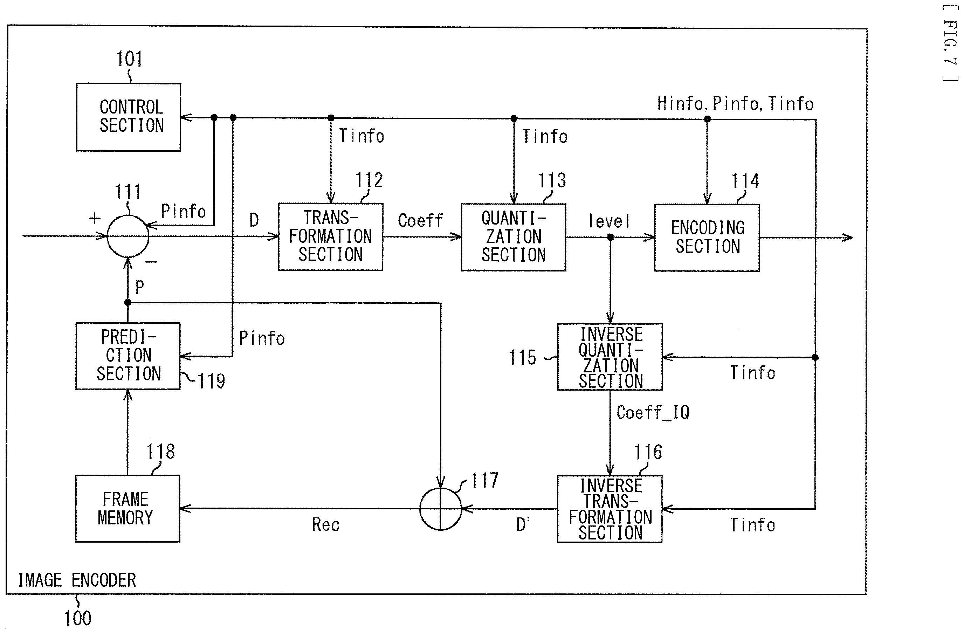

FIG. 7 is a block diagram illustrating a configuration example of an embodiment of an image encoder as an image processor to which the present technology is applied.

In FIG. 7, an image encoder 100 encodes a prediction residual between an image and a predicted image of the image, as in AVC or HEVC. For example, the image encoder 100 is able to implement a technique of the HEVC or a technique proposed in the JVET.

It is to be noted that FIG. 7 illustrates main elements such as processing sections and data flows, and not all elements are illustrated in FIG. 7. That is, in the image encoder 100, there may be a processing section not illustrated as a block in FIG. 7, or there may be processing or a flow of data not indicated by an arrow, etc. in FIG. 7.

The image encoder 100 encodes an image by inter-prediction processing as necessary. Further, in the image encoder 100, for example, there are prepared, as the motion compensation mode of motion compensation to be performed in the inter-prediction processing, a translation mode, a translation rotation mode, a translation scaling mode, a simple affine transformation mode, and a complete affine transformation mode; motion compensation is performed in an appropriate motion compensation mode in the inter-prediction processing of the PU.

Here, the translation mode is a motion compensation mode in which the 2-parameter MC prediction processing is performed, as described with reference to FIG. 1, and is a motion compensation mode in which the motion of the translational movement is compensated on the basis of two parameters of one motion vector $v_c=(v_{cx}, v_{cy})$.

The translation rotation mode is a motion compensation mode in which the translational movement and the motion in the rotational direction are compensated by performing a translational movement and rotation on the basis of three parameters of one motion vector $v_c= (v_{cx}, v_{cy})$ and angle information indicating rotation angles.

The translation scaling mode is a mode in which the translational movement and scaling are compensated by performing a translational movement and scaling on the basis of three parameters of one motion vector $v_c=(v_{cx}, v_{cy})$ and scaling information indicating scaling rates.

The simple affine transformation mode is a motion compensation mode in which the 4-parameter affine MC prediction processing is performed as described with reference to FIG. 3, and is a motion compensation mode in which the translational movement, the rotation, and the scaling movement are compensated on the basis of four parameters as two motion vectors $v_0=(v_{0x}, v_{0y})$ and $v_{1=}(v_{1x}, v_{1y})$.

As described with reference to FIG. 4, the complete affine transformation mode is a motion compensation mode in which the 6-parameter affine MC prediction processing is performed, and is a motion compensation mode in which the translational movement, the rotation, the scaling, and the skew movement are compensated on the basis of six parameters as three motion vectors $v_0=(v_{0x}, v_{0y})$, $v_{1=}(v_{1x}, v_{1y})$ and $v_2=(v_{2x}, v_{2y})$.

For the translation mode, the translation rotation mode, the translation scaling mode, the simple affine transformation mode, and the complete affine transformation mode, the prediction accuracy in the predicted image tends to improve in the order of the translation mode, the translation rotation mode and the translation scaling mode, the simple affine transformation mode, and the complete affine transformation mode; however, in this order, the number of parameters required for the motion compensation and thus the overhead increase.

Therefore, in the inter-prediction processing, for example, the image encoder 100 selects an appropriate motion compensation mode from the translation mode, the translation rotation mode, the translation scaling mode, the simple affine transformation mode, and the complete affine transformation mode, which are a plurality of motion compensation modes, for each PU, and performs motion compensation in the selected motion compensation mode.

As a result, it is possible to reduce the overhead and to improve the encoding efficiency as compared with the case where the inter-prediction processing is performed in one motion compensation mode in a fixed manner. Further, the prediction accuracy in a predicted image is improved, thereby reducing the prediction residual; as a result, it is possible to improve the encoding efficiency.

It is to be noted that the plurality of motion compensation modes prepared in the image encoder 100 are not limited to the five modes of the translation mode, the translation rotation mode, the translation scaling mode, the simple affine transformation mode, and the complete affine transformation mode.

In FIG. 7, the image encoder 100 includes a control section 101, an operation section 111, a transformation section 112, a quantization section 113, an encoding section 114, an inverse quantization section 115, an inverse transformation section 116, an operation section 117, a frame memory 118, and a prediction section 119. The image encoder 100 performs encoding, for each CU, of a picture that is a moving image in a unit of frame to be inputted.

Specifically, the control section 101 (setting section) of the image encoder 100 sets encoding parameters (header information Hinfo, prediction information Pinfo, transformation information Tinfo, etc.) on the basis of inputs from the outside, RDO (Rate-Distortion Optimization), etc.

The header information Hinfo includes, for example, information such as a video parameter set (VPS (Video Parameter Set)), a sequence parameter set (SPS (Sequence Parameter Set)), a picture parameter set (PPS (Picture Parameter Set)), and a slice header (SH). For example, the header information Hinfo includes information defining an image size (lateral width PicWidth, longitudinal width PicHeight), a bit depth (luminance bitDepthY, color difference bitDepthC), a maximum value MaxCUSize/ minimum value MinCUSize of the CU size, and the like. Needless to say, the content of the header information Hinfo is optional, and any information other than the above-mentioned examples may be included in this header information Hinfo.

The prediction information Pinfo includes, for example, a split flag indicating whether or not there is a horizontal-direction or a vertical-direction division in each division layer when a PU (CU) is formed. In addition, the prediction information Pinfo includes, for each PU, a mode information pred_mode_flag indicating whether the prediction processing of the PU is intra-prediction processing or inter-prediction processing.

In a case where the mode information pred_mode_flag indicates the inter-prediction processing, the prediction information Pinfo includes a Merge flag, motion compensation mode information, parameter information, reference image specifying information for specifying a reference image, and the like. The Merge flag indicates whether the mode of the inter-prediction processing is the merging mode or the AMVP mode. The merging mode is a mode in which the inter-prediction processing is performed on the basis of a prediction parameter selected from candidates including a parameter (hereinafter, referred to as an adjacent parameter) generated on the basis of parameters (motion vectors, angle information, and scaling information) used for motion compensation of an adjacent PU that is an encoded PU adjacent to a PU to be processed. The AMVP mode is a mode in which inter-prediction processing is performed on the basis of parameters of the PU to be processed. The Merge flag is 1 in a case of indicating a merge mode, and is 0 in a case of indicating the AMVP mode.

The motion compensation mode information is information indicating that the motion compensation mode is the translation mode, the translation rotation mode, the translation scaling mode, the simple affine transformation mode, or the complete affine transformation mode, together with a POC distance described later.

The parameter information is information for specifying, in a case where the Merge flag is 1, a parameter used for the inter-prediction processing from the candidates including adjacent parameters, as a prediction parameter (prediction vector, prediction angle information, prediction scaling information). In addition, the parameter information is information for specifying a prediction parameter in a case where the Merge flag is 0, and is a difference between the prediction parameter and the parameter of the PU to be processed.

In a case where the mode information pred mode flag indicates the intra-prediction processing, the prediction information Pinfo includes intra prediction mode information indicating an intra prediction mode that is a mode of the intra-prediction processing, and the like. Needless to say, the content of the prediction information Pinfo is optional, and any information other than the above-mentioned examples may be included in this prediction information Pinfo.

The transformation information Tinfo includes TBSize indicating the size of TB, and the like. Needless to say, the content of the transformation information Tinfo is optional, and any information other than the above-mentioned examples may be included in this transformation information Tinfo.

The operation section 111 sets inputted pictures, in order, as pictures to be encoded, and sets CU (PU and TU) to be encoded, for pictures to be encoded on the basis of the split flag of the prediction information Pinfo. The operation section 111 subtracts, from an image I (current block) of the PU to be encoded, a predicted image P (predicted block) of the PU supplied from the prediction section 119 to determine a prediction residual D, and supplies the determined prediction residual D to the transformation section 112.

The transformation section 112 performs orthogonal transformation, etc. on the prediction residual D supplied from the operation section 111 on the basis of the transformation information Tinfo supplied from the control section 101 to calculate a transformation coefficient Coeff. The transformation section 112 supplies the transformation coefficient coeff to the quantization section 113.

The quantization section 113 scales (quantizes) the transformation coefficient Coeff supplied from the transformation section 112 on the basis of the transformation information Tinfo supplied from the control section 101 to calculate a quantization transformation coefficient level level. The quantization section 113 supplies the quantization transformation coefficient level level to the encoding section 114 and the inverse quantization section 115.

The encoding section 114 encodes the quantization transformation coefficient level level, or the like supplied from the quantization section 113 in a predetermined manner. For example, the encoding section 114 transforms the encoding parameters (the header information Hinfo, the prediction information Pinfo, the transformation information Tinfo, etc.) supplied from the control section 101 and the quantization transformation coefficient level level supplied from the quantization section 113 to syntax values of respective syntax elements in accordance with a definition of a syntax table. Then, the encoding section 114 encodes the respective syntax values (e.g., performs arithmetic encoding such as CABAC (Context-based Adaptive Binary Arithmetic encoding).

At this time, the encoding section 114 switches a context of a CABAC probability model on the basis of the motion compensation mode information of the adjacent PU, so sets the CABAC probability model as to allow the probability of the motion compensation mode information of the adjacent PU to be high, and encodes the motion compensation mode information of the PU.

That is, the motion compensation mode information between a PU and its adjacent PU is highly likely to be the same, thus making it possible to reduce overhead and to improve encoding efficiency by setting the CABAC possibility model to encode the motion compensation mode information of the PU to allow the probability of the motion compensation mode information of the adjacent PU of the PU whose motion compensation mode information is encoded, to be high in encoding section 114.

It is to be noted that when the number of adjacent PU is more than one, the encoding section 114 may set CABAC probability model on the basis of the number of the adjacent PUs per motion compensation mode information. In addition, the encoding section 114 may switch a code (bit string) to be assigned to the motion compensation mode information, instead of switching the context of the CABAC probability model on the basis of the motion compensation mode information.

For example, the encoding section 114 multiplexes encoded data that is a bit string of syntax elements obtained as a result of encoding, and outputs the multiplexed encoded data as an encoded stream.

The inverse quantization section 115 scales (inverse-quantizes) a value of the quantization transformation coefficient level level supplied from the quantization section 113 on the basis of the transformation information Tinfo supplied from the control section 101 to calculate a transformation coefficient Coeff_IQ after the inverse-quantization. The inverse quantization section 115 supplies the transformation coefficient Coeff_IQ to the inverse transformation section 116. The inverse quantization performed by the inverse quantization section 115 is inverse processing of the quantization performed by the quantization section 113.

The inverse transformation section 116 performs inverse orthogonal transformation, or the like on the transformation coefficient Coeff_IQ supplied from the inverse quantization section 115 on the basis of the transformation information Tinfo supplied from the control section 101 to calculate a prediction residual D'. The inverse transformation section 116 supplies the prediction residual D' to the operation section 117. The inverse orthogonal transformation performed by the inverse transformation section 116 is inverse processing of the orthogonal transformation performed by the transformation section 112.

The operation section 117 adds the prediction residual D' supplied from the inverse transformation section 116 and the predicted image P, corresponding to the prediction residual D', supplied from the prediction section 119 to calculate a local decoded image Rec. The operation section 117 supplies the local decoded image Rec to the frame memory 118.

The frame memory 118 reconstructs a decoded image in a unit of picture using the local decoded image Rec supplied from the operation section 117, and stores the reconstructed decoded image in a buffer (not illustrated) called a DPB (Decoded Picture Buffer) in the frame memory 118. The frame memory 118 reads the decoded image specified by the prediction section 119 as a reference image from the buffer, and supplies the read decoded image to the prediction section 119. In addition, the frame memory 118 may store the header information Hinfo, the prediction information Pinfo, the transformation information Tinfo, and the like related to generation of the decoded image, in a buffer in the frame memory 118.

In a case where the mode information pred_mode_flag of the prediction information Pinfo indicates intra-prediction processing, the prediction section 119 acquires, as a reference image, a decoded image at the same time as the CU to be encoded stored in the frame memory 118. Then, the prediction section 119 uses the reference image to perform intra-prediction processing of the intra prediction mode indicated by the intra prediction mode information for the PU to be encoded.

In addition, in a case where the mode information pred_mode_flag indicates the inter-prediction processing, the prediction section 119 acquires, as a reference image, a decoded image at time different from that of the CU to be encoded stored in the frame memory 118, on the basis of the reference image specifying information. The prediction section 119 performs inter-prediction processing of the PU to be encoded using the reference image on the basis of the Merge flag, the motion compensation mode information, the parameter information, and the like.

Specifically, in a case where the motion compensation mode is the translation mode, the prediction section 119 performs inter-prediction processing by the motion compensation in the translation mode that performs compensation of the translational movement on the reference image on the basis of one motion vector. It is to be noted that in a case where the Merge Flag is 1, one motion vector to be used for the inter-prediction processing is one prediction vector specified by the parameter information. On the other hand, in a case where the Merge flag is 0, one motion vector used for the inter-prediction processing is one motion vector obtained by adding one prediction vector specified by the parameter information and a difference included in the parameter information.

In a case where the motion compensation mode is the translation rotation mode, the prediction section 119 performs inter-prediction processing according to the motion compensation in the translation rotation mode that compensates the translational movement and the motion in the rotational direction on the reference image on the basis of one motion vector and the angle information. It is to be noted that, in a case where the Merge Flag is 1, one motion vector and the angle information used for the inter-prediction processing are, respectively, the prediction vector and prediction angle information specified by the parameter information. On the other hand, in a case where the Merge flag is 0, one motion vector used for the inter-prediction processing is one motion vector obtained by adding one prediction vector specified by the parameter information and the difference included in the parameter information. In addition, the angle information is one angle information obtained by adding the prediction angle information specified by the parameter information and the difference included in the parameter information.

In a case where the motion compensation mode is the translation scaling mode, the prediction section 119 performs inter-prediction processing according to the motion compensation in the translation scaling mode that compensates the translational movement and the scaling on the reference image on the basis of one motion vector and the scaling information. It is to be noted that, in a case where the Merge Flag is 1, one motion vector and scaling information used for the inter-prediction processing are, respectively, the prediction vector and prediction scaling information specified by the parameter information. On the other hand, in a case where the Merge flag is 0, one motion vector used for the inter-prediction processing is one motion vector obtained by adding one prediction vector specified by the parameter information and the difference included in the parameter information. In addition, the scaling information is one scaling information obtained by adding the prediction scaling information specified by the parameter information and the difference included in the parameter information.

In a case where the motion compensation mode is the simple affine transformation mode, the prediction section 119 performs affine transformation based on the two motion vectors on the reference image, thereby performing inter-prediction processing by the motion compensation in the simple affine transformation mode that compensates the translational movement, the rotations, and the scaling. It is to be noted that, in a case where the Merge Flag is 1, the two motion vectors used for the inter-prediction processing are two prediction vectors specified by the parameter information. On the other hand, in a case where the Merge flag is 0, the two motion vectors used for the inter-prediction processing are two motion vectors obtained by adding the two prediction vectors specified by the parameter information and the difference included in the parameter information corresponding to each prediction vector.

In a case where the motion compensation mode is the complete affine transformation mode, the prediction section 119 performs affine transformation based on three motion vectors on the reference image, thereby performing inter-prediction processing by the motion compensation in the complete affine transformation mode that compensates the translational movement, the rotation, the scaling, and the skew. It is to be noted that, in a case where the Merge Flag is 1, the three motion vectors used for the inter-prediction processing are three prediction vectors specified by the parameter information. On the other hand, in a case where the Merge flag is 0, the three motion vectors used for the inter-prediction processing are three motion vectors obtained by adding the three prediction vectors specified by the parameter information and the difference included in the parameter information corresponding to each prediction vector.

The prediction section 119 supplies the predicted image P generated as a result of the intra-prediction processing or the inter-prediction processing to the operation sections 111 and 117.

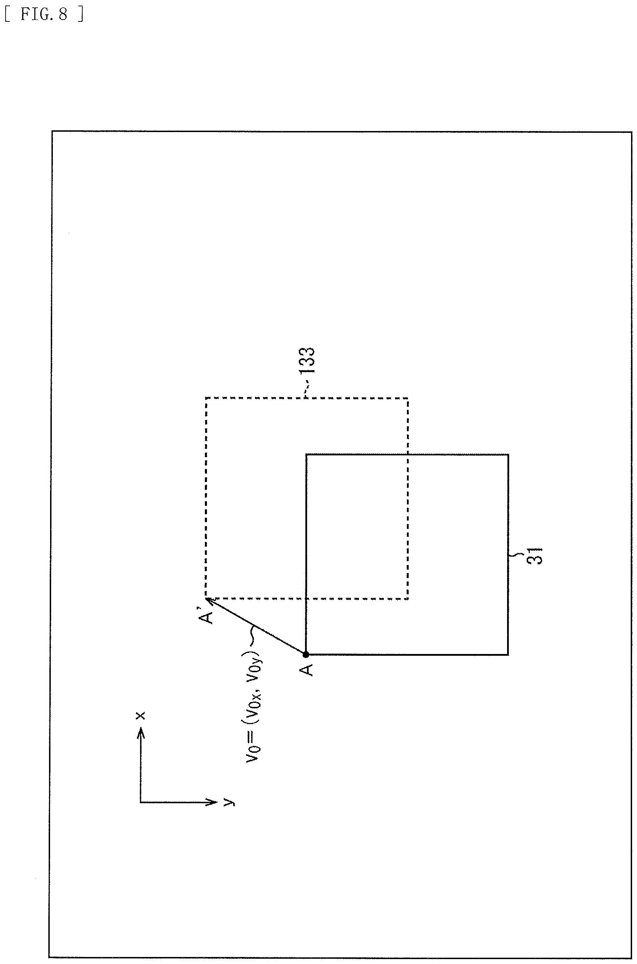

FIG. 8 describes an example of generation of a predicted image by the motion compensation in the translation mode.

As illustrated in FIG. 8, in a case where the motion compensation mode is the translation mode, the prediction section 119 translationally moves the reference block 133, which is a block of the same size as the PU 31, having a point A' distant from the PU 31 by the motion vector $v_0$ as an upper left apex, in the reference image, on the basis of the motion vector $v_0$ of an upper left apex A of the PU 31 to be processed. Then, the prediction section 119 sets the reference block 133 after the translational movement as a predicted image of the PU 31. In this case, the two parameters used for the motion compensation are $v_{0x}$ and $v_{0y}$.

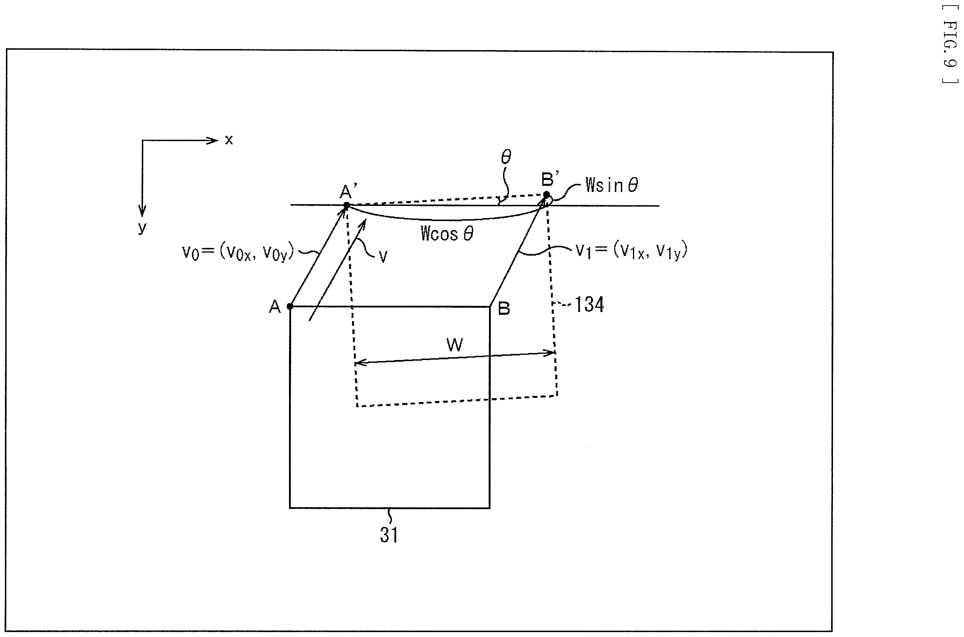

FIG. 9 describes an example of generation of a predicted image by the motion compensation in the translation rotation mode.

In a case where the motion compensation mode is the translation rotation mode, as illustrated in FIG. 9, the prediction section 119 translationally moves and rotates a reference block 134, which is a block of the same size as the PU 31 rotated by the rotation angle $\theta$, with the point A' distant from the PU 31 by the motion vector $v_0$ being set as the upper left apex in the reference image, on the basis of the motion vector $v_0$ of the apex A of the PU 31 to be processed and the rotation angle $\theta$ as angle information. Then, the prediction section 119 sets the reference block 134 after the translational movement and the rotation as the predicted image of the PU 31. In this case, three parameters used for the motion compensation are $v_{0x}$, $v_{0y}$ and $\theta$.

In the motion compensation in the translation rotation mode, the processing of generating the predicted image as described above is approximately performed as follows.

In other words, in the motion compensation in the translation rotation mode, the motion vector $v_0=(v_{0x}, v_{0y})$ and the rotation angle $\theta$ are used to determine, as the motion vector $v_1=(v_{1x}, v_{1y})$ of the apex B of the PU 31, a vector $(v_{0x}+W\cos\theta-W, v_{0y}+W\sin\theta)$ which is a vector having the (upper right) apex B of the PU 31 as the starting point and is translationally moved by the motion vector $v_0=(v_{0x}, v_{0y})$ to have the apex B of the PU 31 as an ending point after being rotated by the rotation angle $\theta$ around the apex A after the translational movement. It is to be noted that, in this case, when the rotation angle $\theta$ is small, it is possible to approximate the motion vector $v_1=(v_{1x}, v_{1y})$ of the apex B by $(v_{1x}, v_{1y})=(v_{0x}, v_{0y}+W\sin\theta)$.

Then, in the reference image, motion compensation is performed to translationally move and rotate the reference block 134, with a point moved by the motion vector $v_0$ from the apex A of the PU 31 being set as the upper left apex A'; a point moved by the motion vector $v_1$ from the apex B of the PU 31 being set as the upper right apex B'; and a square-shaped block with a line segment A'B' as a side is set as the reference block 134.

The translational movement and the rotation of the reference block 134 are performed by translational movement in a unit of reference unit block, which is a block of a reference image corresponding to a unit block obtained by dividing the PU 31 into unit blocks of, for example, $2\times2$ pixels or $4\times4$ pixels, horizontally and vertically, as predetermined sizes. That is, the translational movement and the rotation of the reference block 134 are performed by approximation of translational movement of the reference unit block corresponding to the unit blocks obtained by dividing the PU 31.

Specifically, the motion vector $v=(v_x, v_y)$ of each unit block is determined in accordance with the above expression (1) on the basis of the motion vector $v_0=(v_{0x}, v_{0y})$ of the apex A and the motion vector $v_1=(v_{1x}, v_{1y})$ of the apex B.

Then, the predicted image of the PU 31 is generated in a unit of unit block by translationally moving the reference unit block, which is a block of the same size as the unit block distant from each unit block by the motion vector v in the unit block, on the basis of the motion vector v.

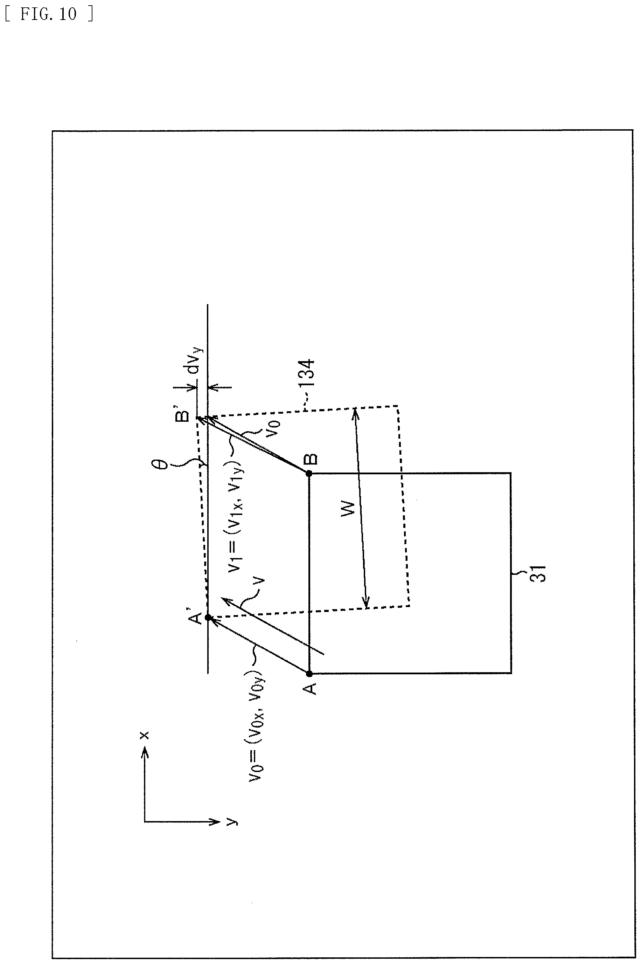

FIG. 10 describes another example of generation of a predicted image by the motion compensation in the translation rotation mode.

In the example of FIG. 9, the rotation angle $\theta$ is used as the angle information, but as the angle information, a difference $dv_y$ in the vertical direction between the motion vector $v_0$ of the apex A and the motion vector $v_1$ of the apex B is able to be used as illustrated in FIG. 10. That is, in a case where the rotation angle $\theta$ is small, $W\sin\theta$ is able to be approximated by the difference $dv_y$, and thus the difference $dv_y$ is able to be used as the angle information instead of the rotation angle $\theta$. In a case where the difference $dv_y$ is used as the angle information, motion vector $v_1=(v_{1x}, v_{1y})$ is determined in accordance with an expression $(v_{1x}, v_{1y})=(v_{0x}, v_{0y}+W\sin\theta)\approx(v_{0x}, v_{0y}+dv_y)$ in the motion compensation. Accordingly, it is unnecessary to calculate trigonometric function at the time of motion compensation, thus making it possible to reduce calculation amount at the time of motion compensation.

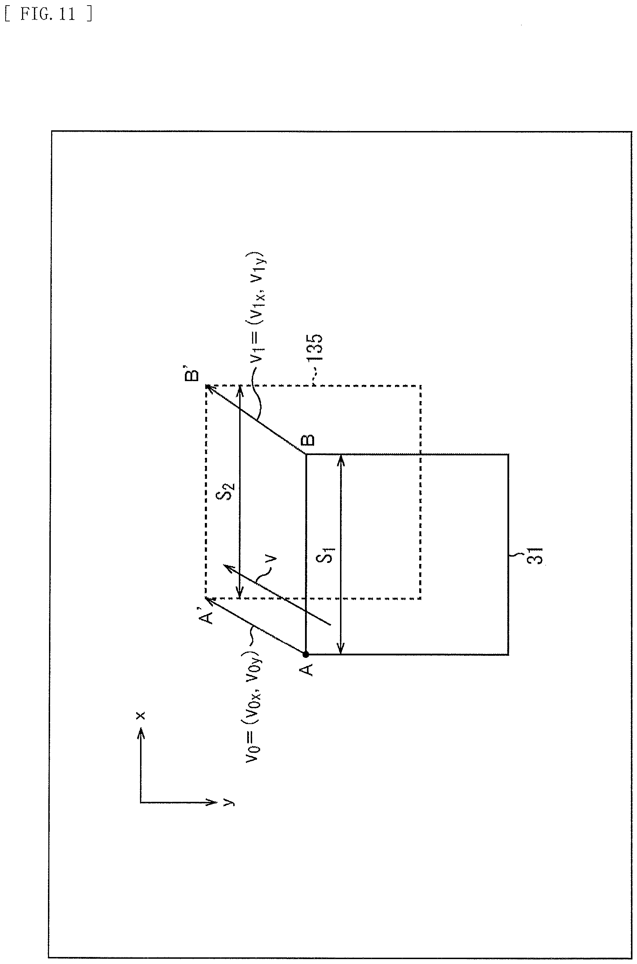

FIG. 11 describes generation of a predicted image by the motion compensation in the translation scaling mode.

As illustrated in FIG. 11, in a case where the motion compensation mode is the translation scaling mode, the prediction section 119 performs translational movement and 1/S time-scaling of a reference block 135, which is a block of S times the size of the PU 31 to be processed in the reference image with the point A' distant from the PU 31 by motion vector $v_0$ being set as the upper left apex, on the basis of the motion vector $v_0$ of the apex A of the PU 31 and a scaling rate S as the scaling information. Then, the prediction section 119 sets the reference block 135 after the translational movement and the scaling as the predicted image of the PU 31. In this case, three parameters used for the motion compensation are $v_{0x}$, $v_{0y}$ and S. In addition, the scaling rate S is represented by $S_2/S_1$, where $S_1$ is the size W of the PU 31 and $S_2$ is the size of the reference block 135 in the x-direction. The size $S_1$ is known, and thus the scaling rate S is able to be used to determine the size $S_2$ from the size $S_1$.

In the motion compensation in the translation scaling mode, the processing of generating the predicted image as described above is approximately performed as follows.

That is, in the motion compensation in the translation scaling mode, the motion vector $v_0=(v_{0x}, v_{0y})$ and the scaling rate S are used to determine, as the motion vector $v_1=(v_{1x}, v_{1y})$ of the apex B of the PU 31, a vector $(v_{0x}+S_1S-S_1, v_{0y})$ which is a vector with the apex B of the PU 31 as a starting point and is translationally moved by the motion vector $v_0=(v_{0x}, v_{0y})$ to have the apex B of the PU 31 as an ending point after scaling of the translationally moved PU 31 by scaling rate S.

Then, in the reference image, motion compensation is performed to translationally move and scale the reference block 135, with a point moved by the motion vector $v_0$ from the apex A of the PU 31 being set as the upper left apex A'; a point moved by the motion vector $v_1$ from the apex B of the PU 31 being set as the upper right apex B'; and a square-shaped block with a line segment A'B' as a side is set as the reference block 135.

The translational movement and the scaling of the reference block 135 are performed by translational movement in a unit of reference unit block, which is a block of a reference image corresponding to a unit block obtained by dividing the PU 31 into the unit blocks. That is, the translational movement and the scaling of the reference block 135 are performed by approximation of translational movement of the reference unit block corresponding to the unit blocks obtained by dividing the PU 31.

Specifically, the motion vector $v=(v_x, v_y)$ of each unit block is determined in accordance with the above expression (1) on the basis of the motion vector $v_0=(v_{0x}, v_{0y})$ of the apex A and the motion vector $v_1=(v_{1x}, v_{1y})$ of the apex B.

Then, the predicted image of the PU 31 is generated in a unit of unit block by translationally moving the reference unit block, which is a block of the same size as the unit block distant from each unit block by the motion vector $v$ in the unit block, on the basis of the motion vector $v$.

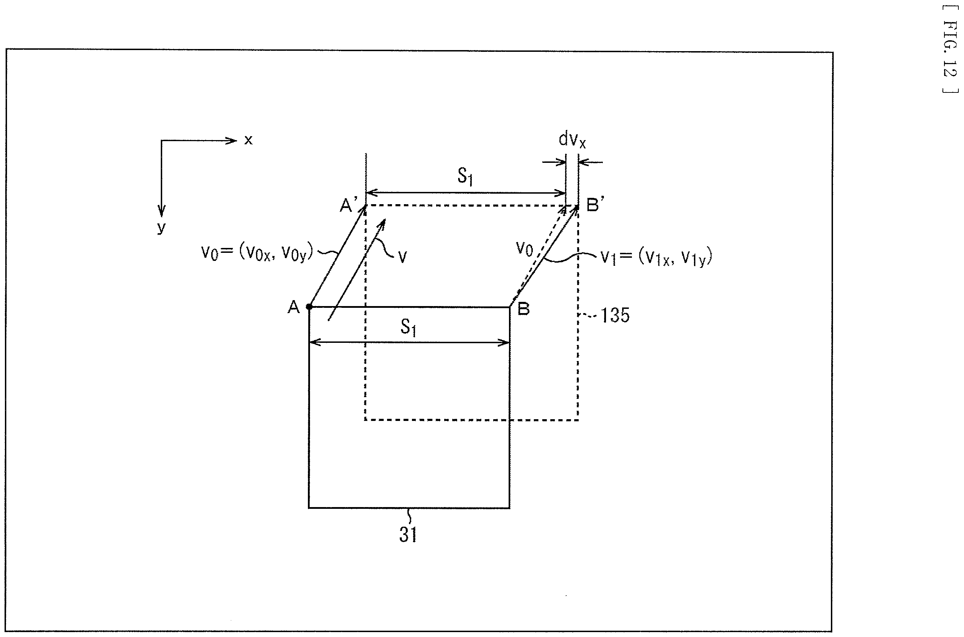

FIG. 12 describes another example of generation of a predicted image by the motion compensation in the translation scaling mode.

In the example of FIG. 11, the scaling rate S is used as the scaling information, but as the scaling information, a difference $dv_x$ in the horizontal direction between the motion vector $v_0$ of the apex A and the motion vector $v_1$ of the apex B is able to be used as illustrated in FIG. 12. In this case, a size $S_2$ in a lateral direction of the reference block 135 is able to be determined only by adding the sizes $S_1$ and the difference $dv_x$; i.e., the motion vector $v_1=(v_{1x}, v_{1y})$ of the apex B of the PU 31 is able to be determined only by addition in accordance with an expression $(v_{1x}, v_{1y})=(v_{0x}+dv_x, v_{0y})$, thus making it possible to reduce calculation amount at the time of motion compensation. It is to be noted that the scaling rate S is represented by $(S_1+dv_x)/S_1$.

As described above, in the motion compensation in the translation rotation mode and the translation scaling mode, three parameters (one motion vector $v_0=(v_{0x}, v_{0y})$ and the angle information or scaling information) are used, which is smaller than the four parameters used in (the 4-parameter affine MC prediction processing by) the motion compensation in the simple affine transformation mode in FIG. 3. However, the generation of the predicted image is performed in a unit of unit block by determining the motion vector $v$ of the unit block from the two motion vectors $v_0$ and $v_1$ and translationally moving the reference unit block on the basis of the motion vector $v$, similarly to the motion compensation in the simple affine transformation mode.

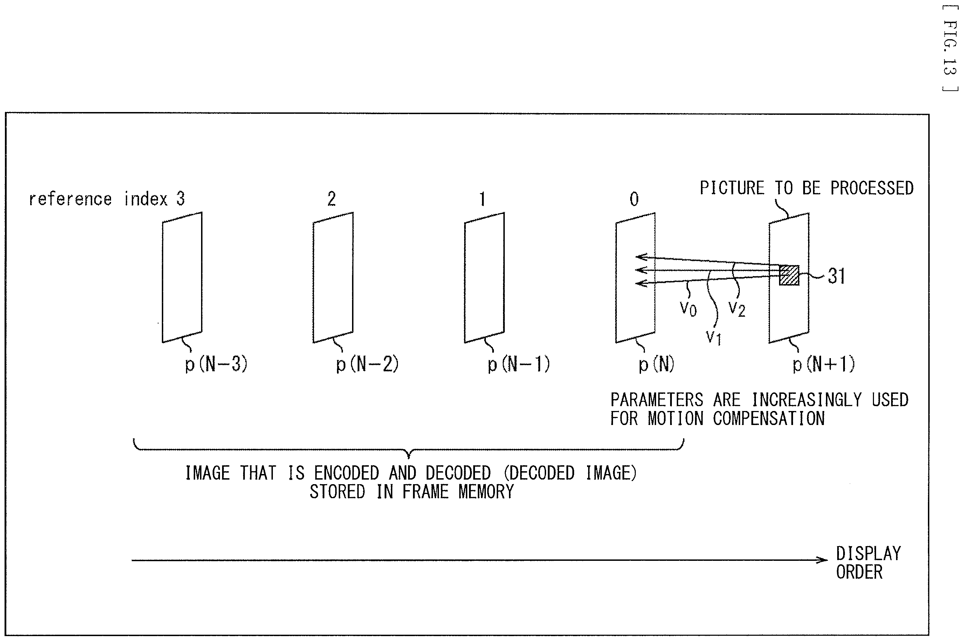

FIG. 13 illustrates a state in which motion compensation is performed.

In FIG. 13, pictures p(N-3), p(N-2), p(N-1), p(N), and p(N+1) are arranged in a display order, and the N+1-th picture p(N+1) is a picture to be processed. A picture p(n) is a picture having the n-th display order.

In FIG. 13, encoding and (local) decoding are finished for pictures p(N-3) to p(N), and the pictures p(N-3) to p(N) are stored (stored) as a decoded image in (a buffer of) the frame memory 118 in FIG. 7.

In the image encoder 100, a reference index is assigned to each of the pictures p(N-3) to p(N) stored in the frame memory 118. In FIG. 13, reference indexes 3, 2, 1, and 0 are assigned to pictures p(N-3) to p(N), respectively.

In FIG. 13, a certain PU 31 of the picture p(N+1) to be processed is a processing target, and a reference image to be used for motion compensation in the inter-prediction processing of the PU 31 to be processed is specified by a reference index. The reference index is information for specifying a reference image, and different reference indexes are assigned to pictures having different POC (Picture Order Count). The reference index corresponds to the reference image specifying information described with reference to FIG. 7.

In FIG. 13, with respect to the PU 31 to be processed, the picture p(N) having a reference index of 0 serves as a reference image, and therefore, motion compensation is performed using the picture p(N) as the reference image, and a predicted image of the PU 31 is generated.

In FIG. 13, motion compensation based on the three motion vectors $v_0=(v_{0x}, v_{0y})$, $v_1=(v_{1x}, v_{1y})$, and $v_2=(v_{2x}, v_{2y})$, i.e., motion compensation in the complete affine transformation mode is performed.

Six parameters used for the motion compensation in the complete affine transformation mode are $v_{0x}$, $v_{0y}$, $v_{1x}$, $v_{1y}$, $v_{2x}$ and $v_{2y}$. In the motion compensation in the complete affine transformation mode, the prediction accuracy is improved, as compared with the motion compensation in the translation mode requiring two parameters $v_{0x}$ and $v_{0y}$, the motion compensation in the translation rotational mode or the translation scaling mode requiring three parameters of one motion vector $v_c=(v_{cx}, v_{cy})$ and the angle information or scaling information, and the motion compensation in the simple affine transformation mode requiring four parameters of two motion vectors $v_0=(v_{0x}, v_{0y})$ and $v_1=(v_{1x}, v_{1y})$; however, the overhead is increased to lower the encoding efficiency.

Therefore, in the image encoder 100, motion compensation is performed in a motion compensation mode selected from a plurality of motion compensation modes in accordance with the POC distance, which is a distance between the POC representing the display order of (the picture including) PU 31 to be processed and the POC of the reference image used to generate the predicted image of the PU 31, to generate the predicted image, thereby reducing the overhead and improving the encoding efficiency.

It is to be noted that the POC distance between (the picture including) the POC of the PU 31 and the POC of the reference image is able to be determined as an absolute value of the difference between the POC of the PU 31 and the POC of the reference image. In a case where the reference image is, for example, a picture P(N) that is one picture ahead of the picture P(N+1) including the PU 31, the POC distance between the POC the PU 31 and the POC of the reference image is 1.

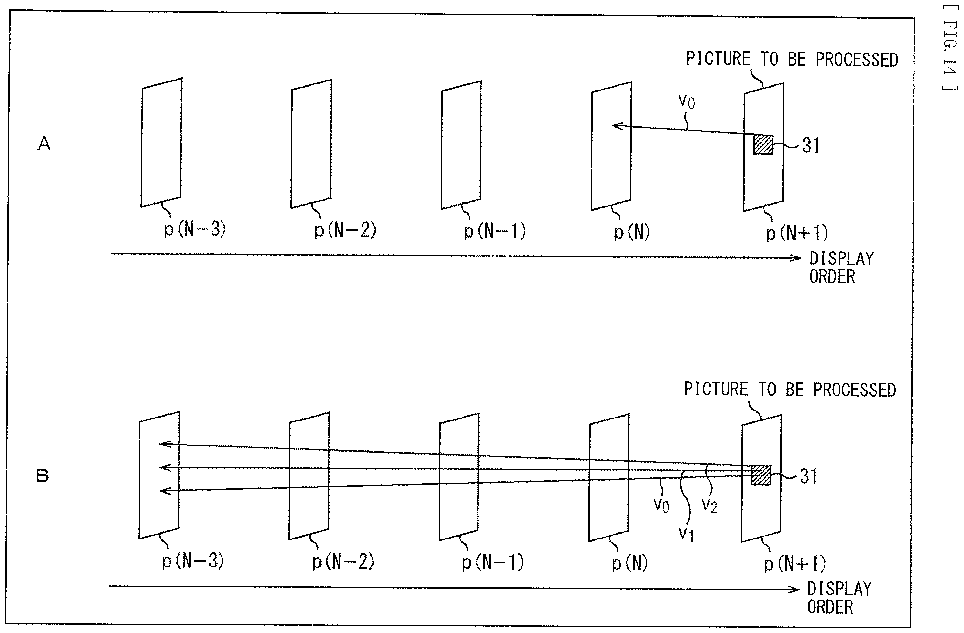

FIG. 14 describes an example of a mode selection method for selecting a motion compensation mode to be used for the motion compensation, from a plurality of motion compensation modes in accordance with the POC distance.

In FIG. 14, similarly to FIG. 13, pictures p(N-3) to p(N+1) are illustrated in the display order.

In A of FIG. 14, the reference image used for the motion compensation in the inter-prediction processing of the PU 31 to be processed is the picture P(N) having a POC distance of 1 with respect to the picture P(N+1) including the PU 31.

On the other hand, in FIG. 14B, the reference image used for the motion compensation in the inter-prediction processing of the PU 31 to be processed is the picture P(N-3) having a POC distance of 4 with respect to the picture P(N+1) including the PU 31.

Here, in a moving image, pictures having a short POC distance tend to have a small change due to the motion, while pictures having a long POC distance tends to have a large change due to the motion.

In a case where the change due to the motion is small, there is a high possibility that a predicted image with high prediction accuracy is able to be obtained not only in the motion compensation, e.g., in the complete affine transformation mode in which the parameter number, i.e., the number of parameters is large, but also in the motion compensation, e.g., in the translation mode, etc. in which the number of parameters is small and one motion vector $v_0$ is used.

On the other hand, in a case where the change due to the motion is large, there is a low possibility that a predicted image with high prediction accuracy is able to be obtained, e.g., in the translation mode, etc. There is a high possibility that, for example, complete affine transformation mode in which the three motion vectors $v_0$ to $v_2$ are used is able to obtain a predicted image with higher prediction accuracy.

Therefore, in accordance with the POC distance between (a picture including) the POC of the PU 31 and the POC of the reference image, the image encoder 100 selects, for the inter-prediction processing, a motion compensation mode having small number of parameters, as the POC distance is shorter.

That is, for example, as illustrated in A of FIG. 14, in a case where the POC distance between the POC of the PU 31 and the POC of the reference image is as small as 1, the image encoder 100 selects, for the inter-prediction processing, the motion compensation in the translation mode, or the like, for example, having a small number of parameters. In this case, it is possible to obtain a predicted image with high prediction accuracy by the motion compensation having a small number of parameters, and as a result, it is possible to reduce the overhead and improve the encoding efficiency.

Further, for example, as illustrated in B of FIG. 14, in a case where the POC distance between the POC of the PU 31 and the POC of the reference image is as large as 4, the image encoder 100 selects, for the inter-prediction processing, the motion compensation in the complete affine transformation mode, or the like, for example, having a large number of parameters. In this case, it is possible to obtain a predicted image with high prediction accuracy, although the number of parameters increases to increase the overhead, thus the prediction residual becomes small, and as a result it is possible to improve the encoding efficiency.

Here, in the following, the POC distance between the POC of the PU 31 and the POC of the reference image is also referred to simply as the POC distance of the PU 31 as appropriate.

In FIG. 14, the translation mode or the complete affine transformation mode is selected as the motion compensation mode in which the motion compensation of the PU 31 is performed, depending on whether the POC distance of the PU 31 is 1 or 4; however, the method for selecting the motion compensation mode in accordance with the POC distance is not limited thereto.

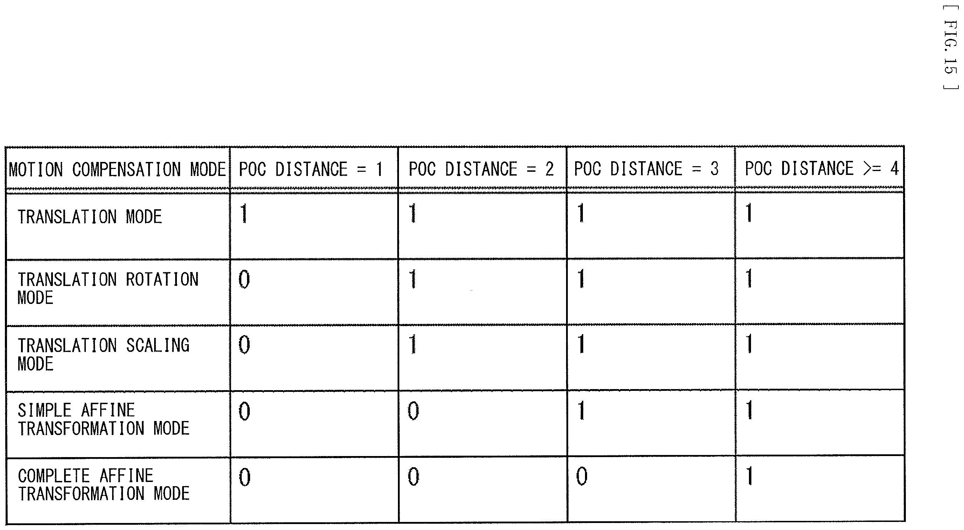

FIG. 15 illustrates examples of a relationship between the POC distance of the PU 31 to be processed and the motion compensation mode of the motion compensation that is able to be used for the inter-prediction processing of the PU 31.

In FIG. 15, as the POC distance of the PU 31 is shorter, the motion compensation mode having a smaller number of parameters may be selected for the inter-prediction processing (as the POC distance is longer, the motion compensation mode having a larger number of parameters may be selected for the inter-prediction processing).

That is, in FIG. 15, "1" indicates a motion compensation mode that may be selected for the inter-prediction processing, and "0" indicates a motion compensation mode that is not able to be selected for the inter-prediction processing.

In accordance with FIG. 15, in a case where the POC distance of the PU 31 is 1, it is possible to select (motion compensation of) the translation mode being a candidate mode, as the candidate mode being a candidate of the motion compensation mode in which only the translation mode with necessary number of parameter being two may be selected for the inter-prediction processing of the PU 31.

In a case where the POC distance of the PU 31 is 2, it is possible to adopt, as candidate modes, the translation mode in which the necessary number of parameters is two, and the translation rotation mode and the translation scaling mode in which the necessary number of parameters is three, and to select, as the inter-prediction processing of the PU 31, the translation mode, the translation rotation mode, or the translation scaling mode, which is the candidate mode.

In a case where the POC distance of the PU 31 is 3, it is possible to adopt, as candidate modes, the translation mode in which the necessary number of parameters is two, and the translation rotation mode and the translation scaling mode in which the necessary number of parameters is three, and the simple affine transformation mode in which the number of necessary parameters is four, and to select, as the inter-prediction processing of the PU 31, the translation mode, the translation rotation mode, the translation scaling mode, or the simple affine transformation mode, which is the candidate mode.

In a case where the POC distance of the PU 31 is 4 or more, it is possible to adopt, as candidate modes, the translation mode in which the necessary number of parameters is two, the translation rotation mode and the translation scaling mode in which the necessary number of parameters is three, the simple affine transformation mode in which the number of necessary parameters is four, and the complete affine transformation mode in which the number of necessary parameters is six, and to select, as the inter-prediction processing of the PU 31, the translation mode, the translation rotation mode, the translation scaling mode, the simple affine transformation mode, or the complete affine transformation mode, which is the candidate mode.

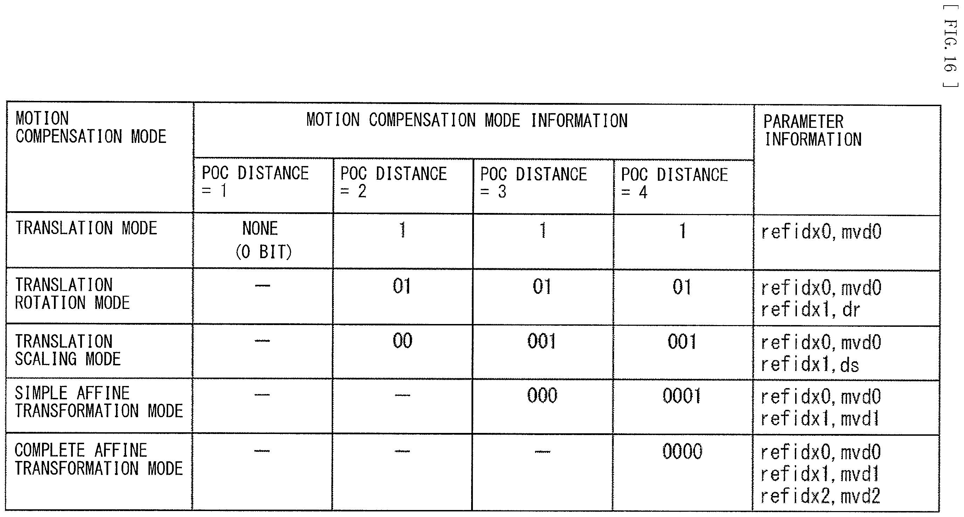

FIG. 16 describes motion compensation mode information and parameter information.

The motion compensation mode information is configured by, for example, a 0-, 1-, 2-, 3-, or 4-bit flag.

Here, in the present embodiment, in accordance with the POC distance of the PU 31, the motion compensation mode of the motion compensation for the inter-prediction processing of the PU 31 is selected from the translation mode, the translation rotation mode, the translation scaling mode, the simple affine transformation mode, and the complete affine transformation mode.

That is, candidate modes are selected from the translation mode, the translation rotation mode, the translation scaling mode, the simple affine transformation mode, and the complete affine transformation mode, in accordance with the POC distance of the PU 31, and the motion compensation mode of the motion compensation for the inter-prediction processing of the PU 31 is selected from the candidate modes.

Therefore, the motion compensation mode of the motion compensation used for the inter-prediction processing of the PU 31 is limited to the candidate modes in accordance with the POC distance of the PU 31, and is selected from the candidate modes. Accordingly, it is sufficient for the motion compensation mode information to represent the motion compensation mode which serves as the candidate mode that is limited in accordance with the POC distance, instead of all of the translation mode, the translation rotation mode, the translation scaling mode, the simple affine transformation mode, and the complete affine transformation mode.

That is, in a case where the POC distance is 1, only the translation mode is selected as the candidate mode. In this case, the motion compensation mode of the motion compensation that may be used for the inter-prediction processing is only the translation mode; no motion compensation mode information is required to represent that translation mode. Accordingly, in a case where the POC distance is 1, a 0-bit flag is adopted as the motion compensation mode information. That is, the motion compensation mode information is assumed to be none.

In this case, when the POC distance is 1, the motion compensation mode is able to be determined (recognized) as the translation mode in accordance with the POC distance.

In a case where the POC distance is 2, the translation mode, the translation rotation mode, and the translation scaling mode are selected as the candidate mode. In this case, the motion compensation mode of the motion compensation that may be used for the inter-prediction processing is the translation mode, the translation rotation mode, or the translation scaling mode, and a 1-bit or 2-bit flag is adopted as the motion compensation mode information to represent the translation mode, the translation rotation mode, or the translation scaling mode.

That is, in a case where the POC distance is 2, a 1-bit flag is adopted as the motion compensation mode information representing the translation mode, and a 2-bit flag is adopted as the motion compensation mode information representing each of the translation rotation mode and the translation scaling mode.

Specifically, a 1-bit flag having a value of 1 is adopted as the motion compensation mode information representing the translation mode, and a 2-bit flag having a value of 01 or 00 is adopted as the motion compensation mode information representing the translation rotation mode or the translation scaling mode, respectively.

In this case, when the POC distance is 2, it is possible to determine that the motion compensation mode is the translation mode in accordance with the motion compensation mode information that is a 1-bit or 2-bit flag, if the motion compensation mode information of the POC distance is a 1-bit flag. In addition, when the motion compensation mode information is a 2-bit flag of 01 or 00, the motion compensation mode is able to be determined to be the translation rotation mode or the translation scaling mode, respectively.

In a case where the POC distance is 3, the translation mode, the translation rotation mode, the translation scaling mode, and the simple affine transformation mode are selected as the candidate modes. In this case, the motion compensation mode of the motion compensation that may be used for the inter-prediction processing is the translation mode, the translation rotation mode, the translation scaling mode, or the simple affine transformation mode, and a 1-bit, 2-bit, or 3-bit flag is adopted as the motion compensation mode information to represent the translation mode, the translation rotation mode, the translation scaling mode, or the simple affine transformation mode.

That is, in a case where the POC distance is 3, a 1-bit flag is adopted as the motion compensation mode information representing the translation mode, and a 2-bit flag is adopted as the motion compensation mode information representing the translation rotation mode. In addition, a 3-bit flag is adopted as motion compensation mode information representing the translation scaling mode or the simple affine transformation mode.

Specifically, a 1-bit flag having a value of 1 is adopted as the motion compensation mode information representing the translation mode, and a 2-bit flag having a value of 01 is adopted as the motion compensation mode information representing the translation rotation mode. In addition, a 3-bit flag having a value of 001 or 000 is adopted as motion compensation mode information representing the translation scaling mode or the simple affine transformation mode, respectively.

In this case, when the POC distance is 3, in accordance with the motion compensation mode information that is a 1-bit, 2-bit, or 3-bit flag, it is possible to determine that the motion compensation mode is the translation mode if the motion compensation mode information is a 1-bit flag of 1, and it is possible to determine that the motion compensation mode is the translation rotation mode if the motion compensation mode information is a 2-bit flag of 01. In addition, when the motion compensation mode information is a 3-bit flag of 001 or 000, the motion compensation mode is able to be determined to be the translation scaling mode or the simple affine transformation mode, respectively.

In a case where the POC distance is 4 or more, the translation mode, the translation rotation mode, the translation scaling mode, the simple affine transformation mode, and the complete affine transformation mode are selected as the candidate modes. In this case, the motion compensation mode of the motion compensation that may be used for the inter-prediction processing is the translation mode, the translation rotation mode, the translation scaling mode, or the simple affine transformation mode, as the candidate modes, or the complete affine transformation mode. A 1-bit, 2-bit, 3-bit or 4-bit flag is adopted as the motion compensation mode information in order to represent the translation mode, the translation rotation mode, the translation scaling mode, or the simple affine transformation mode, as the candidate mode, or the complete affine transformation mode.

That is, in a case where the POC distance is 4 or more, a 1-bit flag is adopted as the motion compensation mode information representing the translation mode, and a 2-bit flag is adopted as the motion compensation mode information representing the translation rotation mode. In addition, a 3-bit flag is adopted as the motion compensation mode information representing the translation scaling mode, and a 4-bit flag is adopted as the motion compensation mode information representing the simple affine transformation mode or the complete affine transformation mode.

Specifically, a 1-bit flag having a value of 1 is adopted as the motion compensation mode information representing the translation mode, and a 2-bit flag having a value of 01 is adopted as the motion compensation mode information representing the translation rotation mode. In addition, a 3-bit flag having a value of 001 is adopted as the motion compensation mode information representing the translation scaling mode, and a 4-bit flag having a value of 0001 or 0000 is adopted as the motion compensation mode information representing the simple affine transformation mode or the complete affine transformation mode, respectively.

In this case, when the POC distance is 4 or more, in accordance with the motion compensation mode information which is a 1-bit flag, 2-bit flag, 3-bit flag, or 4-bit flag, it is possible to determine that the motion compensation mode is the translation mode if the motion compensation mode information is a 1-bit flag of 1, and it is possible to determine that the motion compensation mode is the translation rotation mode if the motion compensation mode information is a 2-bit flag of 01. In addition, it is possible to determine that the motion compensation mode is the translation scaling mode if the motion compensation mode information is a 3-bit flag of 001, and it is possible to determine that the motion compensation mode is the simple affine transformation mode or the complete affine transformation mode if the motion compensation mode information is a 4-bit flag of 0001 or 0000, respectively.

As described with reference to FIG. 15, the translation mode, the translation rotation mode, the translation scaling mode, the simple affine transformation mode, and the complete affine transformation mode are likely to be selected in this order as the candidate modes, and thus as the motion compensation mode of the motion compensation of the PU 31.

Therefore, as illustrated in FIG. 16, by adopting, as the motion compensation mode information, a flag in which the number of bits tends to increase in the order of the translation mode, the translation rotation mode and the translation scaling mode, the simple affine transformation mode, and the complete affine transformation mode, which are likely to be selected as the motion compensation mode of the motion compensation of the PU 31, it is possible to suppress the amount of data of the motion compensation mode information which constitutes the overhead and to improve the encoding efficiency.

It is to be noted that, in a case where the inter-prediction processing mode is the AMVP mode and the motion compensation mode is the translation mode, information for specifying one motion vector $v_0$ of the PU 31 to be processed, i.e., the prediction vector corresponding to the motion vector $v_0$ of the apex A of the PU 31 is set as refidx0 of the parameter information, and the difference between the one motion vector $v_0$ and the prediction vector is set as mvd0 of the parameter information.

When the motion compensation mode is the translation rotation mode, the refidx0 and the mvd0 of the parameter information are set similarly to the translation mode. In addition, information for specifying the prediction angle information corresponding to the angle information of the PU 31 to be processed is set as refidx1 of the parameter information, and a difference between the angle information and the prediction angle information is set as dr of the parameter information.

Therefore, in a case where the angle information represents the rotation angle $\theta$, the dr is a difference $d\theta$ between the rotation angle $\theta$ of the PU 31 to be processed and a rotation angle $\theta'$ as the prediction angle information. On the other hand, in a case where the angle information represents the difference $dv_y$, the dr is a difference mvd1.y between the difference $dv_y$ of the PU 31 to be processed and the difference $dv_y$ as the prediction angle information.

When the motion compensation mode is the translation scaling mode, the refidx0 and the mvd0 of the parameter information are set similarly to the case where the motion compensation mode is the translation mode. In addition, information for specifying the prediction scaling information corresponding to the scaling information of the PU 31 to be processed is set as the refidx1 of the parameter information, and the difference between the scaling information and predicted scaling information is set as ds of the parameter information.

Therefore, in a case where the scaling information represents the scaling rate S, the ds is a difference dS between the scaling rate S of the PU 31 to be processed and the scaling rate S as the prediction scaling information. On the other hand, in a case where the scaling information represents the difference $dv_x$, the ds is a difference mvd1.x between the difference $dv_x$ of the PU 31 to be processed and the difference $dv_x$ as the prediction scaling information.

When the motion compensation mode is the simple affine transformation mode, the refidx0 and the mvd0 of the parameter information are set similarly to the translation mode. In addition, information for specifying another motion vector $v_1$ of the PU 31 to be processed, i.e., the prediction vector corresponding to the motion vector $v_1$ of the apex B of the PU 31 is set as the refidx1 of the parameter information, and the difference between the motion vector $v_1$ and the prediction vector is set as the mvd1 of the parameter information.

When the motion compensation mode is the complete affine transformation mode, the refidx0 and the mvd0 as well as the refidx1 and mvd1 of the parameter information are set similarly to the simple affine transformation mode. Further, information for specifying yet another motion vector $v_2$ of the PU 31 to be processed, i.e., the prediction vector corresponding to the motion vector $v_2$ of the apex C of the PU 31 is set as refidx2 of the parameter information, and a difference between the motion vector $v_2$ and the prediction vector is set as mvd2 of the parameter information.

It is to be noted that, in a case where the inter-prediction processing mode is the merge mode, then mvd0, the mvd1, the mvd2, the ds, the dr, the refidx0, the refidxl, and the refidx2 are not set.

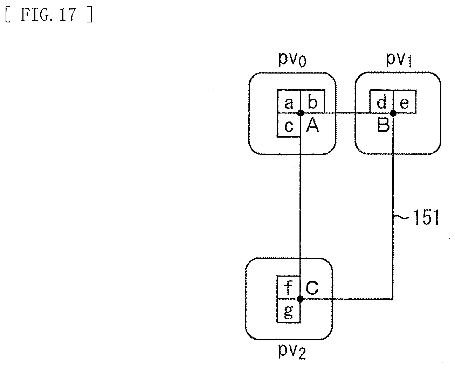

FIG. 17 describes a motion vector included in adjacent parameters (hereinafter, referred to as an "adjacent vector") serving as candidates of the prediction vector.

The prediction section 119 generates an adjacent vector that serves as the candidate of a prediction vector $pv_0$ of the motion vector $v_0$ of the upper left apex A of a PU151 to be predicted in FIG. 17, on the basis of the motion vector of a block a that is the upper left encoded PU of the PU151 with the apex A being set as an apex, a block b that is the upper encoded PU, or a block c that is the left encoded PU.

In addition, the prediction section 119 also generates an adjacent vector that serves as the candidate of a prediction vector $pv_1$ of the motion vector $v_1$ of the upper right apex B of the PU151, on the basis of the motion vector of a block d that is the upper encoded PU of the PU151 with apex B being set as an apex or a block e that is the upper right encoded PU.

Further, the prediction section 119 generates a neighborhood vector that serves as the candidate of a prediction vector $pv_2$ of the motion vector $v_2$ of the lower left apex C of the PU151, on the basis of the motion vector of a block f or g that is the left encoded PU of the PU151 with the apex C being set as an apex. It is to be noted that each of the motion vectors of the blocks a to g is one motion vector for each block held in the prediction section 119.

In FIG. 17, there are 12 ($=3\times2\times2$) combinations for candidates of combinations of motion vectors used to generate adjacent vectors serving as candidates of the prediction vectors $pv_0$, $pv_1$, and $pv_2$. The prediction section 119 selects, for example, a combination in which the DV determined by the following expression (3) is the smallest among the twelve combinations of the candidates, as a motion vector combination used for generating adjacent vectors that serve as candidates of the prediction vectors $pv_0$, $pv_1$, and $pv_2$.

$$DV=|(v_{1x}'-v_{0x}')H-(v_{2y}'-v_{0y}')W|+|(v_{1y}'-v_{0y}')H-(v_{2x}'-v_{0x}')W| \ldots (3)$$

It is to be noted that the $v_{0x}'$ and the $v_{0y}'$ are respective motion vectors in the x-direction and the y-direction of any of the blocks a to c used for generating the prediction vector $pv_0$. $v_{1x}'$ and $v_{1y}'$ are motion vectors in the x-direction and the y-direction of any of the blocks d and e used to generate the prediction vector $pv_1$. $v_{2x}'$ and $v_{2y}'$ are respective motion vectors in the x-direction and the y-direction of any of the blocks f and g used to generate the prediction vector $pv_2$.

<Image Encoding Processing of Image Encoder 100>

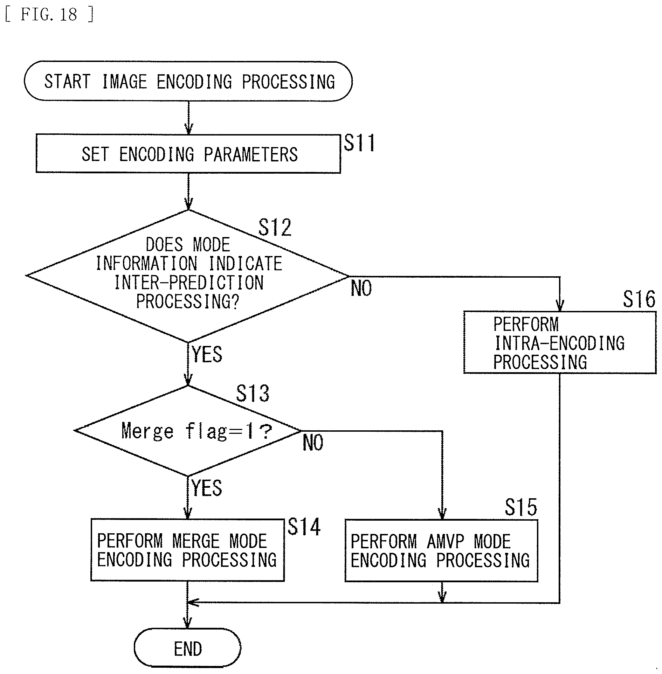

FIG. 18 is a flowchart that describes image encoding processing of the image encoder 100 in FIG. 7.

In FIG. 18, in step S11, the control section 101 sets encoding parameters (the header information Hinfo, the prediction information Pinfo, the transformation information Tinfo, etc.) on the basis of inputs from the outside, RDO, and the like. The control section 101 supplies the set encoding parameter to each block, and the processing proceeds from step S11 to step S12.

In step S12, the prediction section 119 determines whether or not the mode information pred_mode_flag of the prediction information Pinfo indicates the inter-prediction processing. In a case where it is determined in step S12 that the mode information pred _mode_flag indicates the inter-prediction processing, the processing proceeds to step S13, where the prediction section 119 determines whether or not the Merge flag of the prediction information Pinfo is 1.

In a case where it is determined in step S13 that the Merge flag is 1, the processing proceeds to step S14, where the prediction section 119 performs merge mode encoding processing that encodes an image to be encoded using the predicted image P generated by merge mode inter-prediction processing, and the image encoding processing is finished.

On the other hand, in a case where it is determined in step S13 that the Merge flag is not 1, the processing proceeds to step S15, where the prediction section 119 performs AMVP mode encoding processing that encodes an image to be encoded using the predicted image P generated by the inter-prediction processing of the AMVP mode, and the image encoding processing is finished.

In addition, in a case where it is determined in step S12 that the mode information pred_mode_flag does not indicate the inter-prediction processing, i.e., in a case where the mode information pred _mode_flag indicates the intra-prediction processing, the processing proceeds to step S16.

In step S16, the prediction section 119 performs intra-encoding processing that encodes the image I to be encoded using the predicted image P generated by the intra-prediction processing. Then, the image encoding processing is finished.

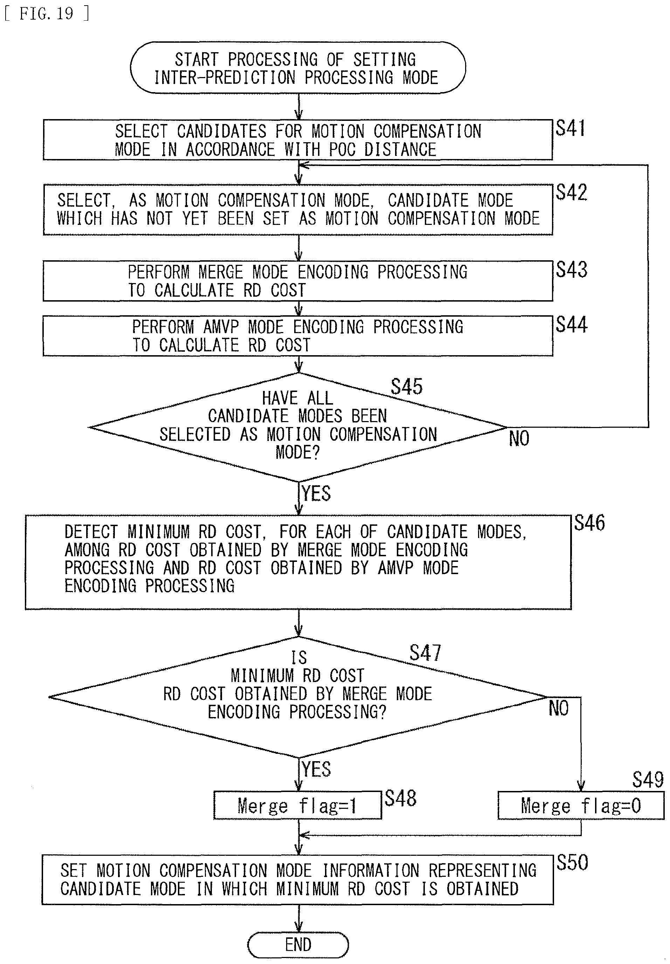

FIG. 19 is a flowchart that describes processing of setting the inter-prediction processing mode for setting the Merge flag and the motion compensation mode information among the processing of step S11 in FIG. 18. The processing of setting the inter-prediction processing mode is performed, for example, in a unit of PU (CU).

In FIG. 19, in step S41, the control section 101 selects candidate modes which are the candidates of the motion compensation mode, in accordance with the POC distance of the PU 31 to be processed, and the processing proceeds to step S42.

That is, for example, as described with reference to FIG. 15, in a case where the POC distance is 1, only the translation mode is selected as the candidate mode, and in a case where the POC distance is 2, the translation mode, the translation rotation mode, and the translation scaling mode are selected as the candidate modes. In addition, in a case where the POC distance is 3, the translation mode, the translation rotation mode, the translation scaling mode, and the simple affine transformation mode are selected as the candidate modes, and in a case where the POC distance is 4 or more, the translation mode, the translation rotation mode, the translation scaling mode, the simple affine transformation mode, and the complete affine transformation mode are selected as the candidate modes.

In step S42, the control section 101 selects, among the candidate modes, a candidate mode which has not yet been set as the motion compensation mode in step S42 as the motion compensation mode and sets motion compensation mode information representing the motion compensation mode, and the processing proceeds to step S43.

For example, when the translation scaling mode is selected as the motion compensation mode among the translation mode, the translation rotation mode, and the translation scaling mode, which are the candidate modes in a case where the POC distance is 2, as described with reference to FIG. 16, a 2-bit flag of 00 representing the translation scaling mode is set as the motion compensation mode information in a case where the POC distance is 2.

In addition, for example, in a case where the translation scaling mode is selected as the motion compensation mode among the translation mode, the translation rotation mode, the translation scaling mode, and the simple affine transformation mode, which are the candidate modes in a case where the POC distance is 3, as described with reference to FIG. 16, the 3-bit flag of 001 representing the translation scaling mode is set as the motion compensation mode information in a case where the POC distance is 3.

In step S43, the control section 101 controls each block to perform the merge mode encoding processing on the PU 31 to be processed for each prediction information Pinfo other than the Merge flag and the motion compensation mode information, which serve as the candidates, to calculate an RD cost, and the processing proceeds to step S44. It is to be noted that the calculation of the RD costs is performed on the basis of the amount of generated bits (amount of codes) obtained as a result of encoding, the SSE (Error Sum of Squares) of decoded images, and the like.

In step S44, the control section 101 controls each block to perform the AMVP mode encoding processing on the PU 31 to be processed for each prediction information Pinfo other than the Merge flag and the motion compensation mode information, which serve as the candidates, to calculate an RD cost, and the processing proceeds to step S45.

In step S45, the control section 101 determines whether or not all the candidate modes have been selected as the motion compensation mode.

In a case where it is determined in step S45 that all the candidate modes have not yet been selected as the motion compensation mode, the processing returns to step S42. In step S42, as described above, a candidate mode which has not yet been set as the motion compensation mode is selected as the motion compensation mode in the candidate mode, and similar processing is repeated hereinafter.

In addition, in a case where it is determined in step S45 that all the candidate modes have been selected as the motion compensation mode, the processing proceeds to step S46.

In step S46, the control section 101 detects, for each of the candidate modes, the minimum RD cost, which is the smallest RD cost, from the RD costs obtained by the merge mode encoding processing in step S43 and the RD cost obtained by the AMVP mode encoding processing in step S44, and the processing proceeds to step S47.

In step S47, the control section 101 determines whether or not the minimum RD cost is the RD cost obtained by the merge mode encoding processing.

In a case where it is determined in step S47 that the minimum RD cost is the RD cost obtained by the merge-mode encoding processing, the processing proceeds to step S48 and the control section 101 sets the Merge flag of the PU 31 to be processed to 1, and the processing proceeds to step S50.

On the other hand, in a case where it is determined in step S47 that the minimum RD cost is not the RD cost obtained by the merge-mode encoding processing, the processing proceeds to step S49 and the control section 101 sets the Merge flag of the PU 31 to be processed to 0, and the processing proceeds to step S50.

In step S50, the control section 101 sets the motion compensation mode information representing the candidate mode in which the minimum RD cost is obtained to the motion compensation mode information of the PU 31 in accordance with the POC distance of the PU 31, and the processing of setting the inter-prediction processing mode is finished.

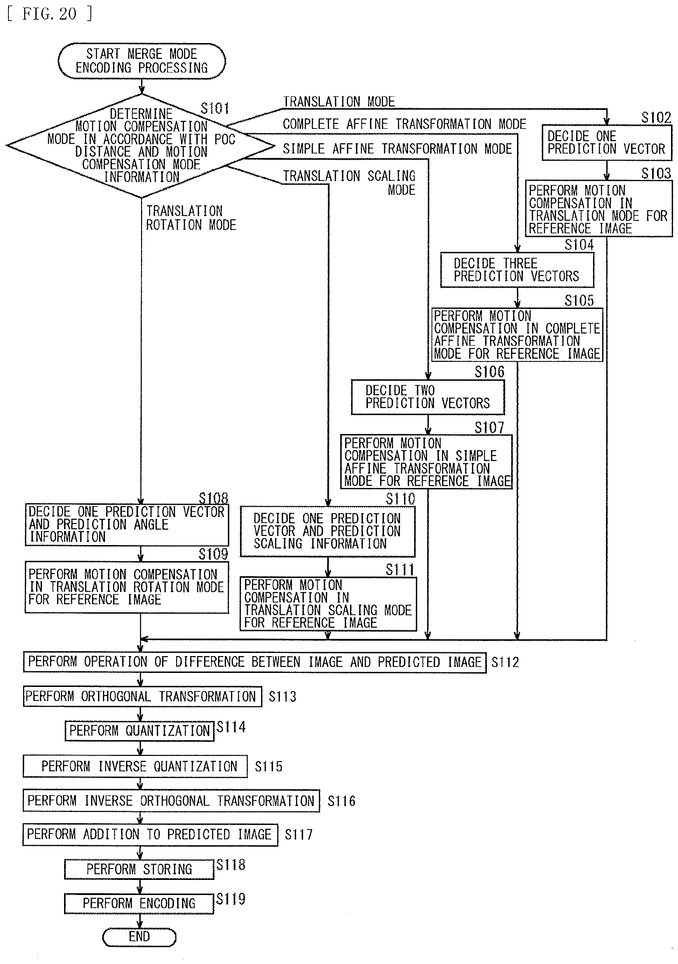

FIG. 20 is a flowchart that describes the merge mode encoding processing. The merge-mode encoding processing is performed, for example, in a unit of CU (PU).

In the merge-mode encoding processing, in step S101, the prediction section 119 determines a motion compensation mode (for performing motion compensation) of the PU 31, in accordance with the POC distance and the motion compensation mode information of the PU 31 to be processed.

As described with reference to FIG. 16, in a case where the POC distance is 1, it is determined that the motion compensation mode is the translation mode in accordance with the POC distance.

In a case where the POC distance is 2, the motion compensation mode is determined to be the translation mode when the motion compensation mode information is a 1-bit flag with a value of 1, and the motion compensation mode is determined to be the translation rotation mode or the translation scaling mode when the motion compensation mode information is a 2-bit flag with a value of 01 or 00, respectively.

In a case where the POC distance is 3, the motion compensation mode is determined to be the translation mode when the motion compensation mode information is a 1-bit flag with a value of 1, and the motion compensation mode is determined to be the translation rotation mode when the motion compensation mode information is a 2-bit flag with a value of 01. In addition, the motion compensation mode is determined to be the translation scaling mode or the simple affine transformation mode when the motion compensation mode information is a 3-bit flag with a value 001 or 000, respectively.

In a case where the POC distance is 4 or more, the motion compensation mode is determined to be the translation mode when the motion compensation mode information is a 1-bit flag with a value of 1, and the motion compensation mode is determined to be the translation rotation mode when the motion compensation mode information is a 2-bit flag with a value of 01. In addition, the motion compensation mode is determined to be the translation scaling mode when the motion compensation mode information is a 3-bit flag with a value of 001, and the motion compensation mode is determined to be the simple affine transformation mode or the complete affine transformation mode when the motion compensation mode information is a 4-bit flag with a value of 0001 or 0000, respectively.

In a case where it is determined in step S101 that the motion compensation mode is the translation mode, the processing proceeds to step S_102.

In step S_102, the prediction section 119 decides the prediction vector $pv_0$ on the basis of the parameter information, and the processing proceeds to step S103. Specifically, in a case where the parameter information is information for specifying an adjacent vector as a prediction vector, the prediction section 119 determines, as the prediction vector $pv_0$, an adjacent vector generated from any motion vector of the blocks a to c having the smallest DV in the expression (3), on the basis of the motion vector of the blocks a to g that are held.

In step S_103, the prediction section 119 uses the prediction vector $pv_0$ decided in step S102 as the motion vector $v_0$ of the PU 31 to be processed, and performs motion compensation in the translation mode on a reference image specified by the reference image specifying information (reference index) stored in the frame memory 118, thereby generating the predicted image P of the PU 31. The prediction section 119 supplies the predicted image P of the PU 31 generated by the motion compensation to the operation sections 111 and 117, and the processing proceeds from step S103 to step S112.

In a case where it is determined in step S101 that the motion compensation mode is the complete affine transformation mode, the processing proceeds to step S104.

In step S104, the prediction section 119 decides the three prediction vectors $pv_0$, $pv_1$, and $pv_2$ on the basis of the parameter information, and the processing proceeds to step S105.

Specifically, in a case where the parameter information is information for specifying an adjacent vector as a prediction vector, the prediction section 119 selects, on the basis of motion vectors of the blocks a to g that are held, a combination of any motion vector of the blocks a to c in which the DV of the expression (3) is the smallest, any motion vector of the blocks d and e, and any motion vector of the blocks f and g. Then, the prediction section 119 decides, as the prediction vector $pv_0$, an adjacent vector generated using any motion vector of the selected blocks a to c. In addition, the prediction section 119 decides, as the prediction vector $pv_1$, an adjacent vector generated using a motion vector of the selected block d or e, and decides, as the prediction vector $pv_2$, an adjacent vector generated using a motion vector of the selected block f or g.

In step S105, the prediction section 119 performs motion compensation in the complete affine transformation mode on a reference image specified by the reference image specifying information using the prediction vectors $pv_0$, $pv_1$, and $pv_2$ decided in step S104, respectively, as the motion vectors $v_0$, $v_1$, and $v_2$ of the PU 31 to be processed.

That is, the prediction section 119 determines the motion vector v of each unit block obtained by dividing the PU 31, in accordance with the expression (2) using the motion vectors $v_0$, $v_1$, and $v_2$. Further, the prediction section 119 translationally moves the reference unit block of the reference image corresponding to the unit block on the basis of the motion vector v for each unit block, thereby generating the predicted image P of the PU 31. The prediction section 119 supplies the predicted image P of the PU 31 generated by the motion compensation to the operation sections 111 and 117, and the processing proceeds from step S105 to step S112.

In a case where it is determined in step S101 that the motion compensation mode is the simple affine transformation mode, the processing proceeds to step S106.

In step S106, similarly to the case of step S104, the prediction section 119 decides two prediction vectors $pv_0$ and $pv_1$ on the basis of the parameter information, and the processing proceeds to step S107.

In step S107, the prediction section 119 performs motion compensation in the simple affine transformation mode on a reference image specified by the reference image specifying information using the prediction vectors $pv_0$ and $pv_1$ decided in step S106, respectively, as the motion vectors $v_0$ and $v_1$ of the PU 31 to be processed.

That is, the prediction section 119 determines the motion vector v of each unit block obtained by dividing the PU 31, in accordance with the expression (1) using the motion vectors $v_0$ and $v_1$. Further, the prediction section 119 translationally moves the reference unit block of the reference image corresponding to the unit block on the basis of the motion vector v for each unit block, thereby generating the predicted image P of the PU 31. The prediction section 119 supplies the predicted image P of the PU 31 generated by the motion compensation to the operation sections 111 and 117, and the processing proceeds from step S107 to step S112.

In a case where it is determined in step S101 that the motion compensation mode is the translation rotation mode, the processing proceeds to step S108.

In step S108, the prediction section 119 decides one prediction vector $pv_0$ and prediction angle information similarly to the processing of step S102 on the basis of the parameter information, and the processing proceeds to step S109.

In step S109, the prediction section 119 performs motion compensation in the translation rotation mode on a reference image using the prediction vector and the prediction angle information decided in step S108 as the motion vector $v_0$ and the angle information of the PU 31 to be processed.

That is, the prediction section 119 determines the motion vector $v_1$ from the motion vector $v_0$ and the angle information of the PU 31, as described with reference to FIG. 9 or 10. Then, the prediction section 119 determines the motion vector v of each unit block obtained by dividing the PU 31 in accordance with the expression (1) using the motion vectors $v_0$ and $v_1$. Further, the prediction section 119 translationally moves the reference unit block of the reference image corresponding to the unit block on the basis of the motion vector v for each unit block, thereby generating the predicted image P of the PU 31. The prediction section 119 supplies the predicted image P of the PU 31 generated by the motion compensation to the operation sections 111 and 117, and the processing proceeds from step S109 to step S112.

In a case where it is determined in step S101 that the motion compensation mode is the translation scaling mode, the processing proceeds to step S110.

In step S110, the prediction section 119 decides one prediction vector $pv_0$ and prediction scaling information on the basis of the parameter information similarly to the processing of step S102, and the processing proceeds to step S111.

In step Sill, the prediction section 119 performs motion compensation in the translation scaling mode on a reference image using the prediction vector and the prediction scaling information decided in step S110, as the motion vector $v_0$ and the scaling information of the PU 31 to be processed.

That is, the prediction section 119 determines the motion vector $v_1$ from the motion vector $v_0$ and the scaling information of the PU 31 as described with reference to FIG. 11 or FIG. 12. Then, the prediction section 119 determines the motion vector v of each unit block obtained by dividing the PU 31, in accordance with the expression (1) using the motion vectors $v_0$ and $v_1$. Further, the prediction section 119 translationally moves the reference unit block of the reference image corresponding to the unit block on the basis of the motion vector v for each unit block, thereby generating the predicted image P of the PU 31. The prediction section 119 supplies the predicted image P of the PU 31 generated by the motion compensation to the operation sections 111 and 117, and the processing proceeds from step S111 to step S112.

In step S112, the operation section 111 performs an operation of a difference between the image I and the predicted image P as the prediction residual D, and supplies the difference to the transformation section 112. The prediction residual D obtained in this manner has reduced amount of data as compared with the original image I. Accordingly, it is possible to compress the amount of data as compared with the case where the image I is encoded as it is.

In step S113, the transformation section 112 performs orthogonal transformation, or the like on the prediction residual D supplied from the operation section 111 on the basis of the transformation information Tinfo supplied from the control section 101 to calculate the transformation coefficient Coeff. The transformation section 112 supplies the transformation coefficient coeff to the quantization section 113.

In step S114, the quantization section 113 scales (quantizes) the transformation coefficient Coeff supplied from the transformation section 112 on the basis of the transformation information Tinfo supplied from the control section 101 to calculate the quantization transformation coefficient level level. The quantization section 113 supplies the quantization transformation coefficient level level to the encoding section 114 and the inverse quantization section 115.

In step S115, the inverse quantization section 115 inversely quantizes the quantization transformation coefficient level level supplied from the quantization section 113, with characteristics corresponding to quantization characteristic of step S114 on the basis of the transformation information Tinfo supplied from the control section 101. The inverse quantization section 115 supplies the resulting transformation coefficient Coeff_IQ to the inverse transformation section 116.

In step S116, on the basis of the transformation information Tinfo supplied from the control section 101, the inverse transformation section 116 performs inverse orthogonal transformation, or the like on the transformation coefficient Coeff_IQ supplied from the inverse quantization section 115 in a manner corresponding to the orthogonal transformation, or the like of step S113 to calculate the prediction residual D'.

In step S117, the operation section 117 adds the prediction residual D' calculated by the processing of step S116 to the predicted image P supplied from the prediction section 119, thereby generating a local decoded image Rec.

In step S118, the frame memory 118 reconstructs a decoded image in a unit of picture using the local decoded image Rec obtained by the processing of step S117, and stores the reconstructed decoded image in a buffer in the frame memory 118.

In step S119, the encoding section 114 encodes the encoding parameter set by the processing of step S11 in FIG. 18 and the quantization transformation coefficient level level obtained by the processing of step S114 in a predetermined manner. The encoding section 114 multiplexes the resulting encoded data, and outputs the multiplexed data as an encoded stream to the outside of the image encoder 100. The encoded stream is transmitted to decoding side via, for example, a transmission path or a recording medium.

When the processing of step S119 is finished, the merge mode encoding processing is finished.

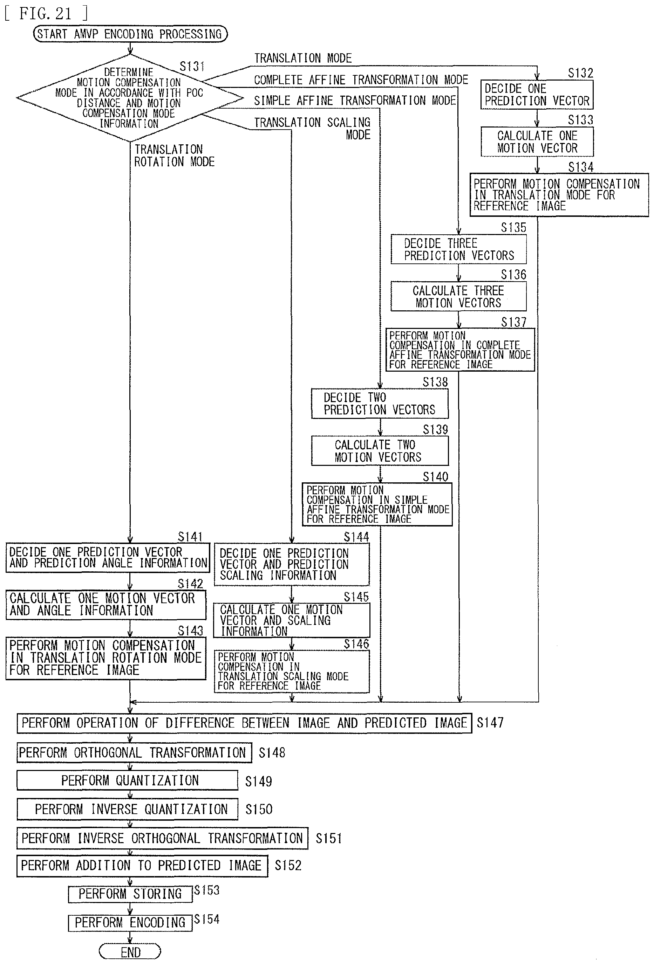

FIG. 21 is a flowchart that describes the AMVP mode encoding processing. The AMVP mode encoding processing is performed, for example, in a unit of CU (PU).

In step S131, similarly to step S101 in FIG. 20, the motion compensation mode of the PU 31 is determined in accordance with the POC distance and the motion compensation mode information of the PU 31 to be processed.

In a case where it is determined in step S131 that the motion compensation mode is the translation mode, the complete affine transformation mode, the simple affine transformation mode, the translation rotation mode, or the translation scaling mode, the processing proceeds to step S132, S135, S138, S141 or S144, respectively.

In step S132, S135, S138, S141 or S144, processing similar to those in step S102, S104, S106, S108 or S110 in FIG. 20 are performed, and therefore, descriptions thereof are omitted.

After step S132, S135, S138, S141 or S144, the processing proceeds to step S133, S136, S139, S142 or S145, respectively.

In step S133, the prediction section 119 determines the motion vector $v_0$ of the PU 31 to be processed by adding one prediction vector $pv_0$ decided in step S132 and a difference $dv_0$ between the prediction vector $pv_0$ of the parameter information and the motion vector $v_0$ of the PU 31 to be processed, and the processing proceeds to step S134.

In step S134, the prediction section 119 performs the motion compensation in the translation mode and generates the predicted image P of the PU 31, similarly to S103 in FIG. 20, using the motion vector $v_0$ determined in step S133. The prediction section 119 supplies the predicted image P to the operation sections 111 and 117, and the processing proceeds from step S134 to step S147.

In step S136, the prediction section 119 adds each of the three prediction vectors $pv_0$, $pv_1$, and $pv_2$ decided in step S135 and the difference of the parameter information corresponding to the prediction vectors $pv_0$, $pv_1$, and $pv_2$ to

determine the three motion vectors $v_0$, $v_1$, and $v_2$ of the PU 31 to be processed.

Specifically, the prediction section 119 adds a prediction vector $pv_i$ (here, i=0, 1, 2) and a difference $dv_i$ between the prediction vector $pv_i$ of the parameter information and a motion vector $v_i$ of the PU 31 to be processed to determine the three motion vectors $v_0$, $v_1$, and $v_2$ of the PU 31 to be processed.

Then, the processing proceeds from step S136 to step S137, and the prediction section 119 uses the motion vectors $v_0$, $v_1$, and $v_2$ determined in step S136 to perform motion compensation in the complete affine transformation mode similarly to step S105 in FIG. 20, and generates the predicted image P of the PU 31. The prediction section 119 supplies the predicted image P to the operation sections 111 and 117, and the processing proceeds from step S137 to step S147.

In step S139, the prediction section 119 adds each of the two prediction vectors $pv_0$ and $pv_1$ decided in step S138 and the difference of the parameter information corresponding to the prediction vectors $pv_0$ and $pv_1$ to determine the two motion vectors $v_0$ and $v_1$ of the PU 31 to be processed.

Specifically, the prediction section 119 adds the prediction vector $pv_i$ (here, i=0, 1) and the difference $dv_i$ between the prediction vector $pv_i$ of the parameter information and the motion vector $v_i$ of the PU 31 to be processed to determine the two motion vectors $v_0$ and $v_1$ of the PU 31 to be processed.

Then, the processing proceeds from step S139 to step S140, and the prediction section 119 uses the motion vectors $v_0$ and $v_1$ determined in step S139 to perform motion compensation in the simple affine transformation mode similarly to step S107 in FIG. 20, and generates the predicted image P of the PU 31. The prediction section 119 supplies the predicted image P to the operation sections 111 and 117, and the processing proceeds from step S140 to step S147.

In step S142, the prediction section 119 determines one motion vector $v_0$ similarly to the processing of step S133. Further, the prediction section 119 determines the angle information of the PU 31 to be processed by adding the prediction angle information decided in step S141 and the difference between the prediction angle information of the parameter information and the angle information of the PU 31 to be processed, and the processing proceeds from step S142 to step S143.

In step S143, the prediction section 119 performs the motion compensation in the translation rotation mode on a reference image, similarly to step S109 in FIG. 20, using one motion vector $v_0$ and the angle information determined in step S142, and generates the predicted image P of the PU 31. The prediction section 119 supplies the predicted image P to the operation sections 111 and 117, and the processing proceeds from step S143 to step S147.

In step S145, the prediction section 119 determines one motion vector $v_0$ similarly to the processing of step S133. Further, the prediction section 119 determines the scaling information of the PU 31 to be processed by adding predicted scaling information decided in step S144 and the difference between the predicted scaling information of the parameter information and the scaling information of the PU 31 to be processed, and the processing proceeds from step S145 to step S146.

In step S146, the prediction section 119 performs motion compensation in the translation scaling mode on a reference image similarly to step S111 in FIG. 20 using the motion vector $v_0$ and the scaling information determined in step S145, and generates the predicted image P of the PU 31. The prediction section 119 supplies the predicted image P to the operation sections 111 and 117, and the processing proceeds from step S146 to step S147.

The processing of steps S147 to S154 is similar to the processing of steps S112 to S119 in FIG. 20, and therefore the descriptions thereof are omitted.

As described above, the image encoder 100 performs motion compensation in a motion compensation mode selected from the plurality of motion compensation modes, in accordance with the POC distance of the PU 31 to be processed, thereby generating the predicted image.

That is, for example, in a case where the POC distance between the PU 31 and the reference image is short and there is a high possibility that the change due to the motion between the PU 31 and the reference image is not so much, motion compensation in the translation mode, or the like is performed, in which the number of parameters is small, and in a case where the POC distance is long and there is a high possibility that the change due to the motion between the PU 31 and the reference image is large or complicated, motion compensation in the complete affine transformation mode, or the like is performed, in which the number of parameters is large.

Therefore, in a case where the POC distance between the PU 31 and the reference image is short, motion compensation with a small number of parameters is performed, thereby reducing the overhead at the time of the inter-prediction processing (in the AMVP mode) and improving the encoding efficiency. In addition, in a case where the POC distance between the PU 31 and the reference image is long, motion compensation with a large number of parameters may be performed; however, a predicted image with high prediction accuracy is generated, thus reducing the prediction residual, and as a result, it is possible to improve the encoding efficiency.

<Embodiment of Image Decoder to which the Technology is Applied>

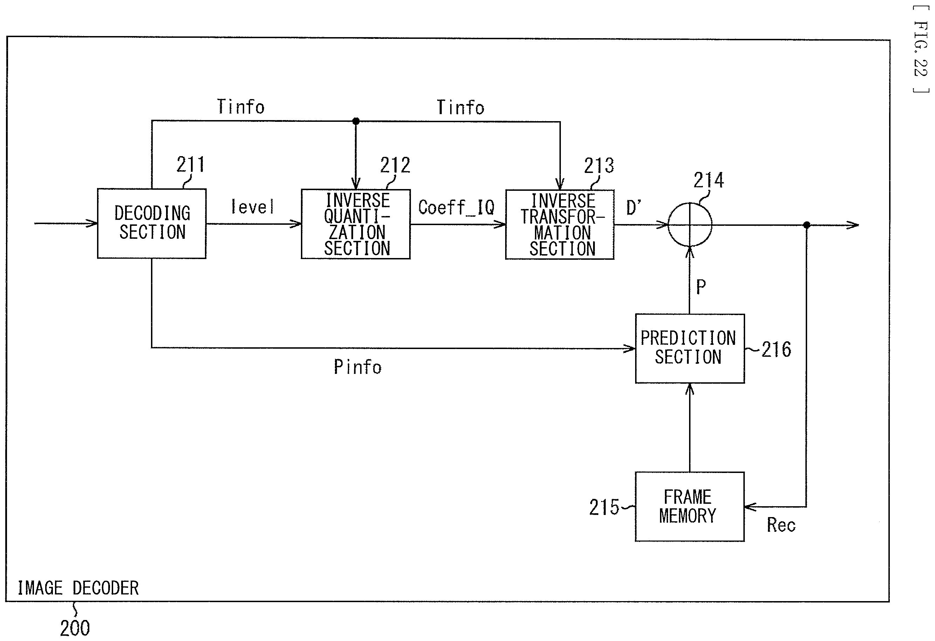

FIG. 22 is a block diagram illustrating a configuration example of an embodiment of an image decoder as an image processor to which the present technology is applied.

An image decoder 200 in FIG. 22 decodes an encoded stream generated by the image encoder 100 by a decoding method corresponding to the encoding method in the image encoder 100. For example, the image decoder 200 may implement a technique proposed in the HEVC or a technique proposed in the JVET.

It is to be noted that FIG. 22 illustrates main elements such as the processing section and data flow, and not all elements are illustrated in FIG. 22. That is, in the image decoder 200, there may be a processing section not illustrated as a block in FIG. 22, or there may be processing or a flow of data not indicated by an arrow, etc. in FIG. 22.

The image decoder 200 in FIG. 22 includes a decoding section 211, an inverse quantization section 212, an inverse transformation section 213, an operation section 214, a frame memory 215, and a prediction section 216. The image decoder 200 decodes the encoded stream generated by the image encoder 100 for each CU.

Specifically, the decoding section 211 of the image decoder 200 decodes the encoded stream generated by the image encoder 100 by a predetermined decoding method corresponding to the encoding method in the encoding section 114. For example, the decoding section 211 decodes the encoding parameters (the header information Hinfo, the prediction information Pinfo, the transformation information Tinfo, etc.) and the quantization transformation coefficient level level from a bit string of the encoded stream in accordance with the definition of the syntax table. The decoding section 211 divides the LCU on the basis of the split flag included in the encoding parameter, and sets, in order, CUs corresponding to the respective quantization transformation coefficient level levels as CU (PU and TU) to be decoded.

The decoding section 211 supplies the encoding parameter to each of the blocks. For example, the decoding section 211 supplies the prediction information Pinfo to the prediction section 216, supplies the transformation information Tinfo to the inverse quantization section 212 and the inverse transformation section 213, and supplies the header information Hinfo to each of the blocks. In addition, the decoding section 211 supplies the quantization transformation coefficient level level to the inverse quantization section 212.

The inverse quantization section 212 scales (inverse-quantizes) the quantization transformation coefficient level level supplied from the decoding section 211 on the basis of the transformation information Tinfo supplied from the decoding section 211 to calculate the transformation coefficient Coeff_IQ. The inverse quantization is inverse processing of the quantization performed by the quantization section 113 (FIG. 7) of the image encoder 100. It is to be noted that the inverse quantization section 115 (FIG. 7) performs inverse quantization similar to that of the inverse quantization section 212. The inverse quantization section 212 supplies the resulting transformation coefficient Coeff_IQ to the inverse transformation section 213.

The inverse transformation section 213 performs inverse orthogonal transformation, or the like on the transformation coefficient Coeff_IQ supplied from the inverse quantization section 212 on the basis of the transformation information Tinfo, or the like supplied from the decoding section 211 to calculate the prediction residual D'. This inverse orthogonal transformation is inverse processing of the orthogonal transformation performed by the transformation section 112 (FIG. 7) of the image encoder 100. It is to be noted that the inverse transformation section 116 performs inverse orthogonal transformation similar to that of the inverse transformation section 213. The inverse transformation section 213 supplies the resulting prediction residual D' to the operation section 214.

The operation section 214 adds the prediction residual D' supplied from the inverse transformation section 213 and the predicted image P corresponding to the prediction residual D' to calculate the local decoded image Rec. The operation section 214 reconstructs the decoded image for each picture unit using the resulting local decoded image Rec, and outputs the resulting decoded image to the outside of the image decoder 200. In addition, the operation section 214 also supplies the local decoded image Rec to the frame memory 215.

The frame memory 215 reconstructs the decoded image for each picture unit using the local decoded image Rec supplied from the operation section 214, and stores the reconstructed decoded image in the buffer (DPB) in the frame memory 215. The frame memory 215 reads the decoded image specified by the prediction section 216 as a reference image from the buffer, and supplies the read decoded image to the prediction section 216. Further, the frame memory 215 may store, in buffer in the frame memory 215, the header information Hinfo, the prediction information Pinfo, the transformation information Tinfo, and the like related to the generation of the decoded image.

In a case where the mode information pred_mode_flag of the prediction information Pinfo indicates the intra-prediction processing, the prediction section 216 acquires, as a reference image, a decoded image at the same time as the CU to be decoded stored in the frame memory 215. Then, the prediction section 216 uses the reference image to perform the intra-prediction processing of the intra prediction mode indicated by the intra prediction mode information, for the PU to be decoded.

In addition, in a case where the mode information pred_mode_flag indicates the inter-prediction processing, the prediction section 216 acquires, as a reference image, a decoded image at time different from that of the CU to be decoded stored in the frame memory 215, on the basis of the reference image specifying information. Similarly to the prediction section 119 in FIG. 7, the prediction section 216 performs the inter-prediction processing of the PU to be decoded using the reference image on the basis of the Merge flag, the motion compensation mode information, and the parameter information. The prediction section 216 supplies the predicted image P generated as a result of the intra-prediction processing or the inter-prediction processing to the operation section 214.

<Processing of Image Decoder 200>

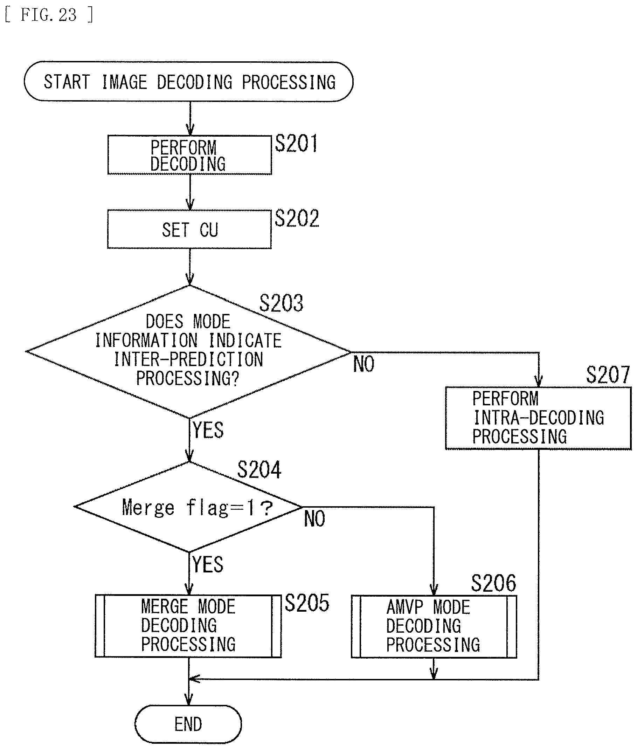

FIG. 23 is a flowchart that describes the image decoding processing of the image decoder 200 in FIG. 22.
In step S201, the decoding section 211 decodes the encoded stream supplied to the image decoder 200 to obtain the encoding parameter and the quantization transformation coefficient level level. The decoding section 211 supplies the encoding parameter to each of the blocks. In addition, the decoding section 211 supplies the quantization transformation coefficient level level to the inverse quantization section 212.
Thereafter, the processing proceeds from step S201 to step S202, where the decoding section 211 divides the LCU on the basis of the split flag included in the encoding parameter, sets the CUs corresponding to the respective quantization transformation coefficient level levels as the CU (PU and TU) to be decoded, and the processing proceeds to step S203. Hereinafter, the processing of steps S203 to S207 is performed for each CU (PU and TU) to be decoded.
The processing of steps S203 and S204 is similar to the processing of steps S12 and S13 in FIG. 18 except that the processing is performed by the prediction section 216 instead of the prediction section 119, and therefore the descriptions thereof are omitted.
In a case where it is determined in step S204 that the Merge flag is 1, the processing proceeds to step S205.
In step S205, the prediction section 216 performs merge mode decoding processing that decodes an image to be decoded using the predicted image P generated by the inter-prediction processing of the merge mode, and the image decoding processing is finished.
In a case where it is determined in step S204 that the Merge flag is not 1, the processing proceeds to step S206.
In step S206, the prediction section 216 performs AMVP mode decoding processing that decodes an image to be decoded using the predicted image P generated by the inter-prediction processing of the AMVP mode, and the image decoding processing is finished.
In a case where it is determined in step S203 that the mode information pred_mode_flag does not indicate the inter-prediction processing, i.e., in a case where the mode information pred_mode_flag indicates the intra-prediction processing, the processing proceeds to step S207.
In step S207, the prediction section 216 performs intra-decoding processing that decodes an image to be decoded using the predicted image P generated by the intra-prediction processing, and the image decoding processing is finished.

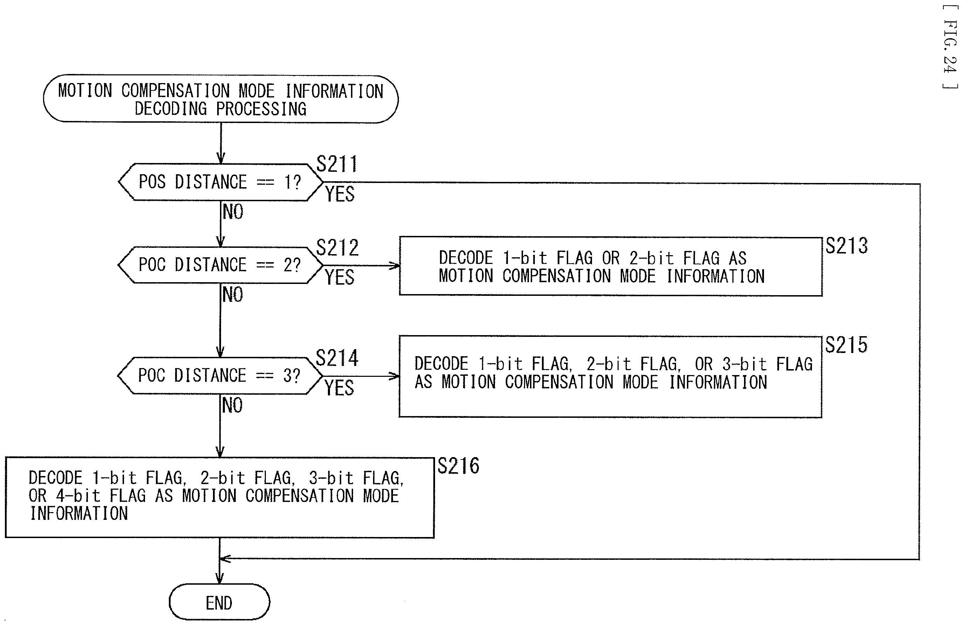

FIG. 24 is a flowchart that describes motion compensation mode information decoding processing that decodes the motion compensation mode information of step S201 of FIG. 23.
In step S211 of FIG. 24, the decoding section 211 determines whether or not the POC distance of the PU 31 to be processed is 1.
In a case where it is determined in step S211 that the POC distance is 1, the motion compensation mode information is a 0-bit flag, i.e., the motion compensation mode information is not present in the prediction information Pinfo, and thus the motion compensation mode information decoding processing is finished.
In addition, in a case where it is determined in step S211 that the POC distance is not 1, the processing proceeds to step S212, where the decoding section 211 determines whether or not the POC distance is 2.
In a case where it is determined in step S212 that the POC distance is 2, the processing proceeds to step S213, where the decoding section 211 decodes a 1-bit flag or a 2-bit flag as the motion compensation mode information (FIG. 16) included in the prediction information Pinfo, and the motion compensation mode information decoding processing is finished.
In addition, in a case where it is determined in step S212 that the POC distance is not 2, the processing proceeds to step S214, where the decoding section 211 determines whether or not the POC distance is 3.
In a case where it is determined in step S214 that the POC distance is 3, the processing proceeds to step S215, where the decoding section 211 decodes a 1-bit flag, a 2-bit flag, or a 3-bit flag as the motion compensation mode information (FIG. 16) included in the prediction information Pinfo, and the motion compensation mode information decoding processing is finished.
In addition, in a case where it is determined in step S214 that the POC distance is not 3, i.e., in a case where the POC distance is 4 or more, the processing proceeds to step S216, where the decoding section 211 decodes a 1-bit flag, a 2-bit flag, a 3-bit flag, or a 4-bit flag as the motion compensation mode information (FIG. 16) included in the prediction information Pinfo, and the motion compensation mode information decoding processing is finished.

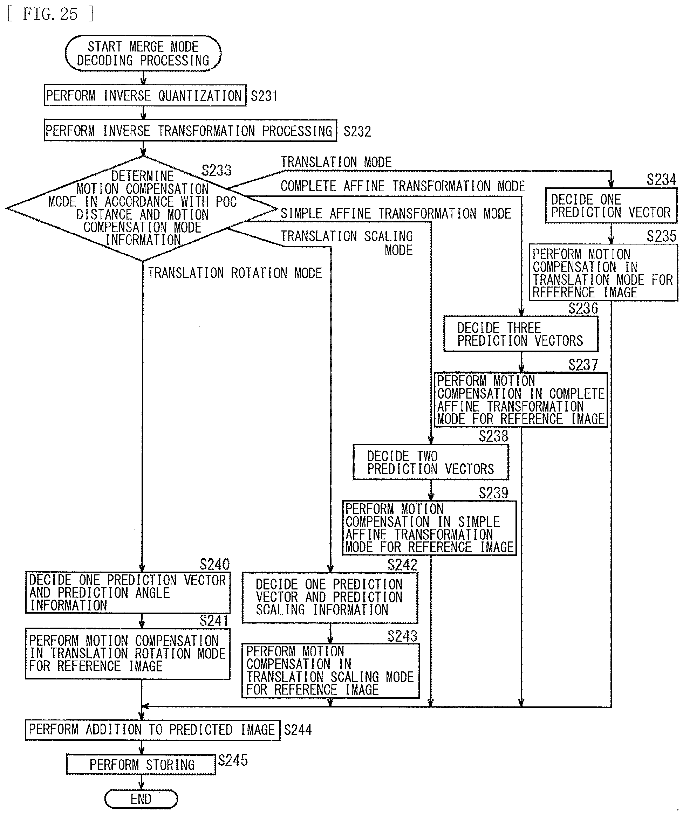

FIG. 25 is a flowchart that describes the merge mode decoding processing of step S205 in FIG. 23.
In step S231, the inverse quantization section 212 inverse-quantizes the quantization transformation coefficient level level obtained by the processing of step S201 in FIG. 23 to calculate the transformation coefficient Coeff_IQ. This inverse quantization is inverse processing of the quantization performed in step S114 (FIG. 20) of the image encoding processing, and is processing similar to the inverse quantization performed in step S115 (FIG. 20) of the image encoding processing.

In step S232, the inverse transformation section 213 performs inverse orthogonal transformation, or the like on the transformation coefficient Coeff-IQ obtained by the processing of step S231 to calculate the prediction residual D'. This inverse orthogonal transformation is inverse processing of the orthogonal transformation performed in step S113 (FIG. 20) of the image encoding processing, and is processing similar to the inverse orthogonal transformation performed in step S116 (FIG. 20) of the image encoding processing.

In steps S233 to S244, processing similar to the processing of steps S101 to S111 in FIG. 20 is performed except that the processing is performed by the prediction section 216 instead of the prediction section 119, and therefore the descriptions thereof are omitted.

In step S244, the operation section 214 adds the prediction residual D' calculated in step S232 to the predicted image P supplied from the prediction section 216 to calculate the local decoded image Rec. The operation section 214 reconstructs the decoded image for each picture unit using the resulting local decoded image Rec, and outputs the resulting decoded image to the outside of the image decoder 200. In addition, the operation section 214 supplies the local decoded image Rec to the frame memory 215, and the processing proceeds from step S244 to step S245.

In step S245, the frame memory 215 reconstructs the decoded image for each picture unit using the local decoded image Rec supplied from the operation section 214 and stores the reconstructed decoded image in a buffer in the frame memory 215, and the merge mode decoding processing is finished.

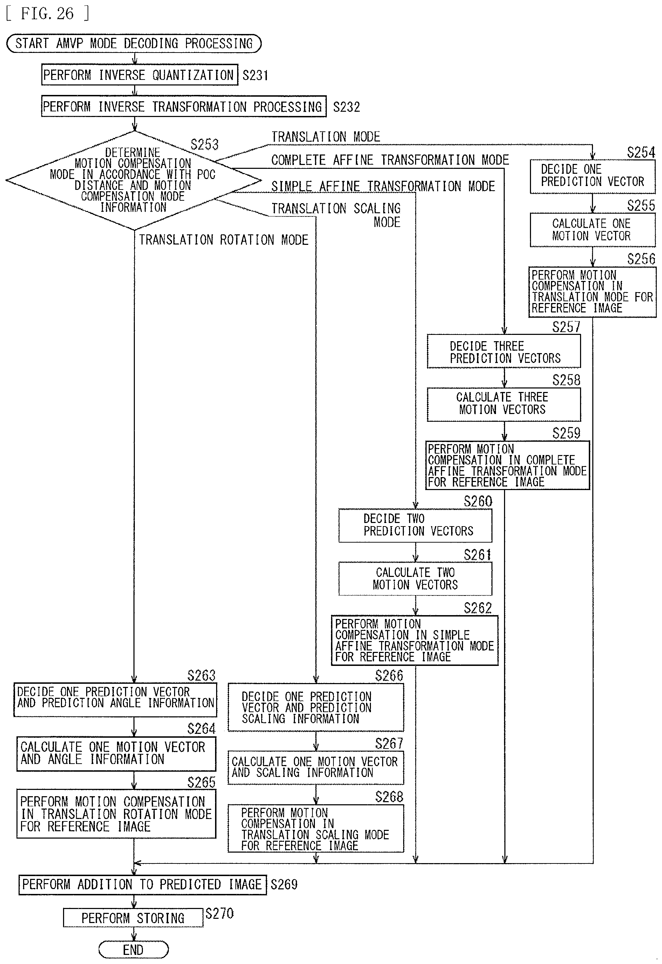

FIG. 26 is a flowchart that describes the AMVP mode decoding processing of step S206 in FIG. 23.

The processing of steps S251 and S252 in FIG. 26 is similar to the processing of steps S231 and S232 in FIG. 25, and therefore the descriptions thereof are omitted.

In steps S253 to S268, processing similar to the processing of steps S131 to S146 in FIG. 21 is performed except that the processing is performed by the prediction section 216 instead of the prediction section 119, and therefore the descriptions thereof are omitted.

The processing of steps S269 and S270 is similar to the processing of steps S244 and S245 in FIG. 25, and therefore the descriptions thereof are omitted.

In the image decoder 200, similarly to the image encoder 100 (FIG. 7), a predicted image is generated by performing motion compensation in a motion compensation mode selected from a plurality of motion compensation modes, in accordance with the POC distance of the PU 31 to be processed, thus making it possible to improve image quality of the predicted image.

<Motion Compensation>

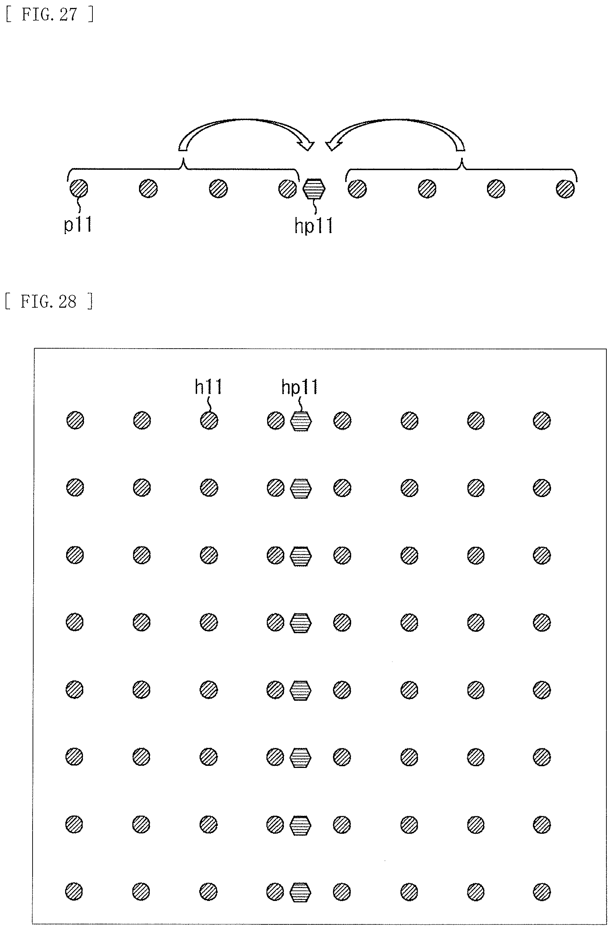

FIG. 27 describes the motion compensation performed by the prediction section 119 (FIG. 7) and the prediction section 216 (FIG. 22).

The motion compensation is performed by translationally moving the reference unit block of the reference image, which is distant from the unit block obtained by dividing the PU 31 to be processed, by the motion vector v of the unit block.

Here, each of positions of pixels configuring (a picture including) the PU 31 and the reference image is referred to as an integer position represented by an integer. In this case, a position between adjacent integer positions is represented by a fraction (or a decimal), and is therefore referred to as a fractional position.

It is to be noted that, for the sake of convenience, the fractional position includes the integer position. In addition, a position relative to the fractional position as viewed from the nearest integer position from a certain fractional position in a predetermined direction (e.g., a leftward or upward direction) is also referred to as a relative position of the fractional position.

As the motion vector v of the unit block, for example, a vector of fractional accuracy which is accuracy in fractional positions such as 1/4 or 1/8 is able to be used.

The pixel of the reference image is only present in the integer position; accordingly, in a case where a position distant from the unit block by the motion vector v of fractional accuracy is a fractional position other than the integer position, there is no pixel of the reference image at that fractional position.

Therefore, in the motion compensation, an interpolation filter (Interpolation filter) is applied to the reference image in order to generate a pixel configuring the reference unit block at each fractional position of the reference image distant from each pixel configuring the unit block by the motion vector v of fractional accuracy, and (a pixel value of) the pixel at the fractional position is generated by interpolation.

Hereinafter, the interpolation by the interpolation filter is described by exemplifying the HEVC. In the HEVC, an 8-tap (one-dimensional) FIR (Finite Impulse Response) filter is used as the interpolation filter.

FIG. 27 illustrates a first example of interpolation of a pixel at a fractional position by the interpolation filter.

In FIG. 27, a pixel hp11 at a fractional position (of a relative position of 1/4) distant from the integer position by 1/4 is generated by interpolation in the horizontal direction by applying the interpolation filter to eight pixels p11 at integer positions which are aligned consecutively on a horizontal line of a certain reference image.

The characteristics of the interpolation filter, i.e., the tapping coefficient of the interpolation filter is prepared each time the relative position of the fractional position of the pixel generated by the interpolation differs, and is changed for each unit block in accordance with the relative position of the fractional position on a reference image pointed to by the motion vector v of the unit block.

The interpolation filter is an 8-tap filter, and thus eight pixels aligned in the vertical direction are required for interpolation in the vertical direction. Accordingly, in the interpolation in the vertical direction, the interpolation in the horizontal direction in FIG. 27 is performed for each of the eight consecutive horizontal lines, and the pixels hp11 at the eight fractional positions are generated, which are aligned in the vertical direction.

FIG. 28 illustrates a second example of interpolation of pixels at the fractional positions by the interpolation filter.

In FIG. 28, the interpolation in the horizontal direction in FIG. 27 are performed for each of the eight consecutive horizontal lines to generate the pixels hp11 at the eight fractional positions aligned vertically.

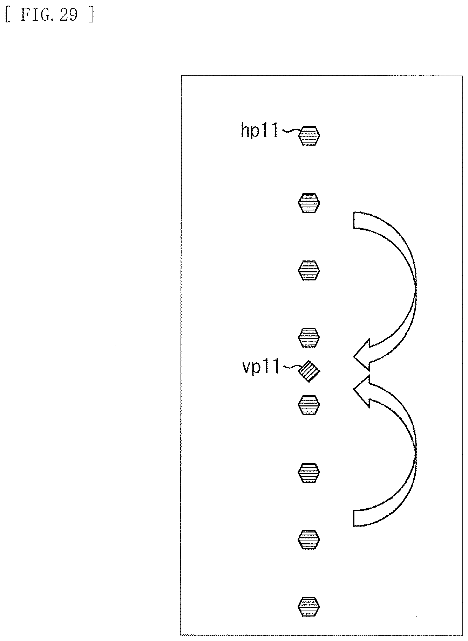

FIG. 29 illustrates a third example of interpolation of pixels at the fractional positions by the interpolation filter.

In FIG. 29, the pixels hp11 at the eight fractional positions obtained by the interpolation in the horizontal direction in FIG. 28 are subjected to the interpolation in the vertical direction by the interpolation filter, and a pixel vp11 at a fractional position is generated.

Now, in a case where the motion vector v of the unit block points to the fractional position of the pixel vp11, the motion compensation performs the interpolations described with reference to FIGs. 27 to 29 to generate the pixel vp11 at the fractional position.

In a case where the unit block is configured by $1 \times 1$ pixel, the pixel at the fractional position pointed to by the motion vector v of the unit block needs to be generated by performing the interpolations described with reference to FIGs. 27 to 29 for each pixel configuring the unit block.

That is, as illustrated in FIG. 28, the interpolation filter of the characteristic corresponding to the relative position (in the horizontal direction) at the fractional position of the pixel hp11 needs to be applied to the eight horizontal lines to perform the interpolation in the horizontal direction, thereby generating the pixels hp11 at the eight fractional positions aligned in the vertical direction. As illustrated in FIG. 29, the interpolation filter of the characteristic corresponding to the relative position (in the vertical direction) at the fractional position of the pixel vp1 1 needs to be applied to the pixels hp11 at the eight fractional positions to perform the interpolation in the vertical direction, thereby generating one pixel vp11 at the fractional position pointed to by the motion vector v of the unit block for each pixel.

Therefore, the characteristics of the interpolation filter may be changed for each pixel when performing the interpolation in the horizontal direction and when performing the interpolation in the vertical direction.

Changing the characteristics of the interpolation filter is time-consuming. Accordingly, from the viewpoint of performing interpolation using the interpolation filter, and thus of performing the motion compensation processing at high speed, it is desirable that the frequency of changing the characteristics of the interpolation filter be small.

As a method of reducing the frequency of changing the characteristics of the interpolation filter, there is a method of increasing the size of the unit block, i.e., the number of pixels configuring the unit block.

That is, for example, in a case where the unit block is configured by a $1 \times 1$ pixel, the characteristics of the interpolation filter may be changed for each pixel configuring the unit block when performing interpolation in the horizontal direction and when performing interpolation in the vertical direction.

Meanwhile, in a case where the unit block is configured to be larger than the $1 \times 1$ pixel, e.g., by $2 \times 2$ pixels, the characteristics of the interpolation filter may be changed for each of four pixels configuring the unit block when performing the interpolation in the horizontal direction and when performing the interpolation in the vertical direction.

That is, in order to simplify the description, it is assumed that the characteristics of the interpolation filter are not changed between the time when performing the interpolation in the horizontal direction and the time when performing the interpolation in the vertical direction. In this case, when the unit block is configured by the $1 \times 1$ pixel, the characteristics of the interpolation filter need to be changed for each pixel configuring the unit block, whereas in a case where the unit block is configured by the $2 \times 2$ pixels, it is sufficient for the characteristics of the interpolation filter to be changed for each of four pixels configuring the unit block. That is, in a case where the unit block is configured by the $2 \times 2$ pixels, the characteristics of the interpolation filter need not be changed for the four pixels configuring the unit block.

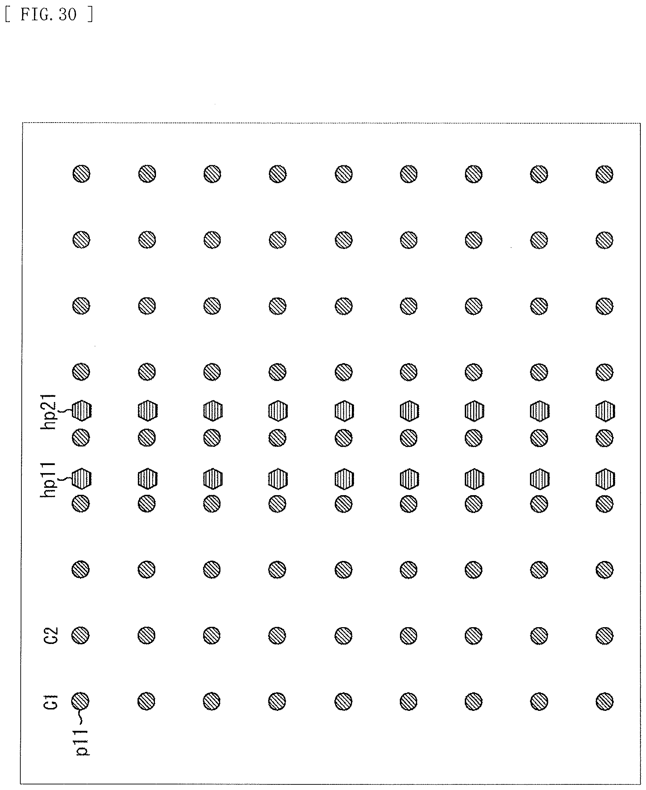

FIG. 30 illustrates an example of interpolation in the horizontal direction for generating a pixel at the fractional position pointed to by the motion vector v of the unit block in a case where the unit block is configured by the $2 \times 2$ pixels.

In FIG. 30, similarly to the case of FIG. 28, the pixels hp11 at nine fractional positions aligned in the vertical direction are generated by performing interpolation in the horizontal direction by applying the 8-tap interpolation filter having characteristics corresponding to the relative positions at the fractional positions of the pixels hp11 to the pixels of eight columns having the column of a certain integer position C1 as the head of each of the nine horizontal lines.

Further, in FIG. 30, similarly to the case of FIG. 28, the pixels hp21 at nine fractional positions aligned in the vertical direction are generated by performing interpolation in the horizontal direction by applying the 8-tap interpolation filter having characteristics corresponding to the relative positions at the fractional positions of the pixels hp21 to the pixels of eight columns having the column of the integer position C2 adjacent to the right of the integer position C1 as the head of each of the nine horizontal lines.

The relative positions at the fractional positions of the pixels hp11 and hp21 are the same, and therefore the interpolation for generating the pixels hp11 and hp21 is able to be performed using an interpolation filter of the same characteristics, and thus the interpolation filter need not be changed.

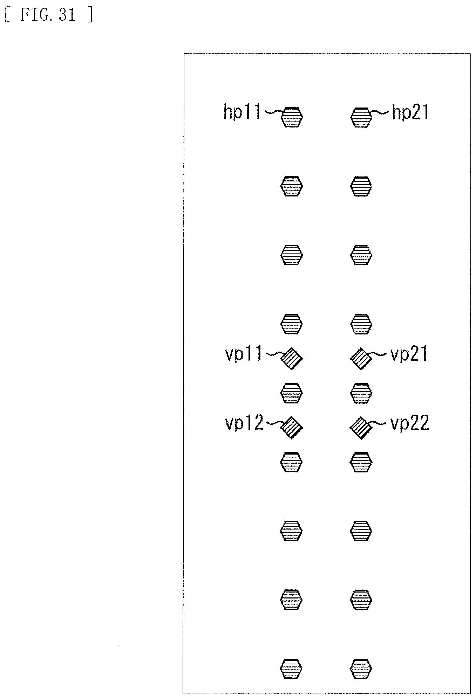

FIG. 31 illustrates an example of interpolation in the vertical direction for generating a pixel at the fractional position pointed to by the motion vector v of a unit block in a case where the unit block is configured by 2×2 pixels.

In FIG. 31, similarly to the case of FIG. 29, the interpolation in the vertical direction by the 8-tap interpolation filter is performed on eight pixels hp11 at the first to eighth (rows) from the top out of nine pixels hp11 at fractional positions obtained by the interpolation in the horizontal direction, and the pixel vp1 1 at the fractional position is generated.

Further, in FIG. 31, similarly to the case of FIG. 29, the interpolation in the vertical direction by the 8-tap interpolation filter is performed on the eight pixels hp11 at the second to the ninth from the top out of nine pixels hp1 1 at fractional positions obtained by the interpolation in the horizontal direction, and a pixel vp12 at the fractional position is generated.

In addition, in FIG. 31, similarly to the case of FIG. 29, the interpolation in the vertical direction by the 8-tap interpolation filter is performed on the eight pixels hp21 at the first to the eighth from the top out of the nine pixels hp21 at fractional positions obtained by the interpolation in the horizontal direction, and a pixel vp21 at the fractional position is generated.

Further, in FIG. 31, similarly to the case of FIG. 29, the interpolation in the vertical direction by the 8-tap interpolation filter is performed on the eight pixels hp21 at the second to the ninth from the top out of the nine pixels hp21 at fractional positions obtained by the interpolation in the horizontal direction, and a pixel vp22 at the fractional position is generated.

The relative positions at the fractional positions of the pixels vp11, vp21, vp12, and vp22 are the same, and therefore the interpolation filter having the same characteristics is used for the interpolation for generating the pixels vp11, vp21, vp12, and vp22, thus making it unnecessary to change the interpolation filter.

In a case where the motion vector v of the unit block of 2×2 (horizontal×vertical) pixels points to the pixels vp11, vp21, vp12, and vp22 out of the 2×2 pixels of the unit block, the motion compensation is able to generate the pixels vp11, vp21, vp12, and vp22 at the fractional position by performing the interpolations as described with reference to FIGs. 30 and 31.

As described above, in order to simplify the description, assuming that no consideration is given for the change of the characteristics of the interpolation filter between the time when performing the interpolation in the horizontal direction and the time when performing the interpolation in the vertical direction, in a case where the unit block is configured by a 1×1 pixel, the characteristics of the interpolation filter need to be changed for each pixel configuring the unit block in order to perform the interpolation for generating the pixel vp11 at the fractional position pointed to by the motion vector v of the unit block with one pixel configuring the unit block being set as a starting point. Meanwhile, in a case where the unit block is configured by 2×2 pixels, it is unnecessary to change the characteristics of the interpolation filter in order to perform interpolation for generating the pixels vp11, vp21, vp12, and vp22 at the fractional position pointed to by the motion vector v of the unit block with each of the 2×2 pixels configuring the unit block being set as a starting point.

Therefore, increasing the size of the unit block enables the frequency of changing the characteristics of the interpolation filter to be reduced, this making it possible to perform the motion compensation processing at high speed.

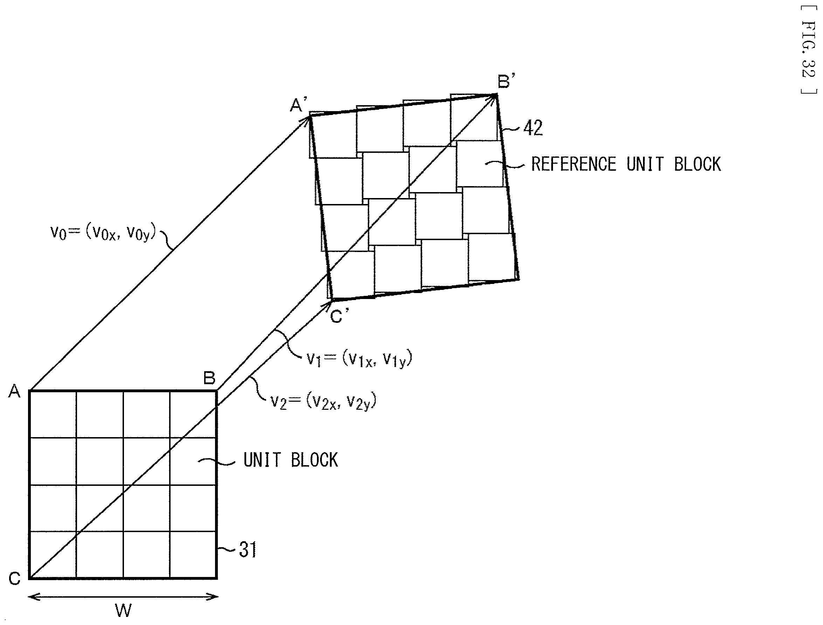

FIG. 32 describes a first example of motion compensation in the complete affine transformation mode.

As described with reference to FIG. 4, in the motion compensation in the complete affine transformation mode, a block 42 having the point A', as an upper left apex, distant from the apex A by the motion vector $v_0$, having the point B', as an upper right apex, distant from the apex B by the motion vector $v_1$, and having the point C', as a lower left apex, distant from the apex C by the motion vector $v_2$ in a reference image is used as a reference block; the reference block 42 is affine-transformed on the basis of the motion vector $v_0$ to the motion vector $v_2$ to thereby perform motion compensation, thus generating the predicted image of the PU 31.

That is, the PU 31 to be processed is divided into unit blocks, and the motion vector $v=(v_x, v_y)$ of each unit block is determined in accordance with the above expression (2) on the basis of the motion vectors $v_0=(v_{0x}, v_{0y})$, $v_1=(v_{1x}, v_{1y})$ and $v_2=(v_{2x}, v_{2y})$.

Then, the predicted image of the PU 31 is generated in a unit of unit block by translationally moving the reference unit block of the same size as the unit block which is distant from each unit block by the motion vector v in the reference image, on the basis of the motion vector v.

In FIG. 32, the PU 31 is divided into 4×4 pieces of 16 unit blocks. Then, the motion vector v of each unit block is determined in accordance with the expression (2) by proportionally distributing motion vectors $v_0$, $v_1$ and $v_2$ to positions of the unit blocks.

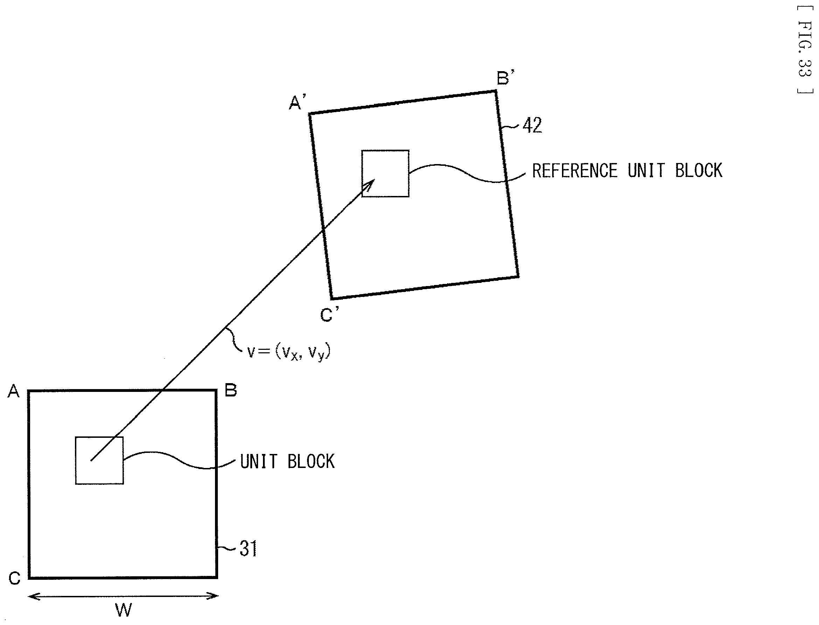

FIG. 33 illustrates a state in which the motion vector v of an i-th unit block is determined in a case where the PU 31 is divided into 4×4 pieces of 16 unit blocks.

For each pixel of the i-th unit block, a pixel at the fractional position configuring the reference unit block distant from the pixel by the motion vector v of the i-th unit block is determined by interpolation by the interpolation filter described above, and the pixel at the fractional position is translationally moved on the basis of the motion vector v, thereby generating the predicted image of the i-th unit block.

In a case where the PU 31 is divided into 4×4 pieces of 16 unit blocks, for each of the 16 unit blocks, the characteristics of the interpolation filter are changed to characteristics corresponding to the fractional position pointed to by the motion vector of the unit block, and a predicted image is generated.

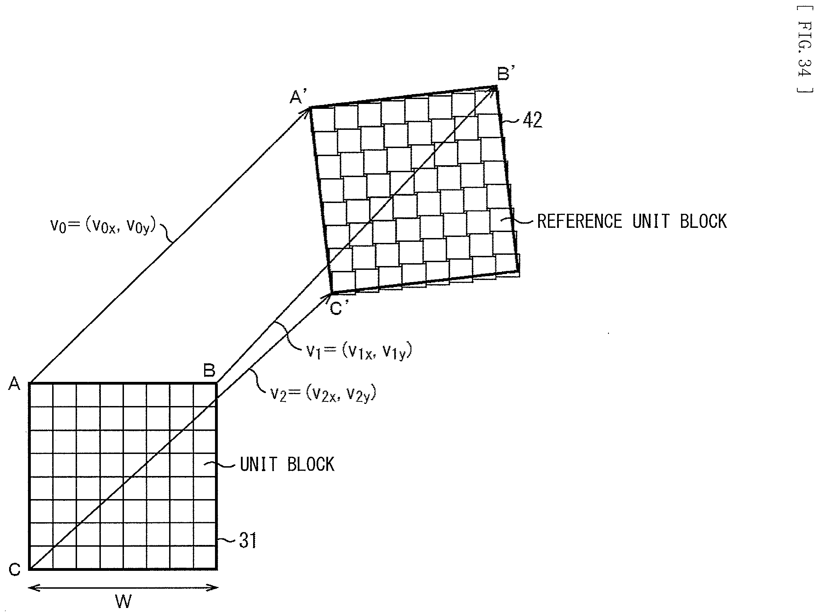

FIG. 34 describes a second example of motion compensation in the complete affine transformation mode.

In FIG. 34, the PU 31 is divided into 8×8 pieces of 64 unit blocks. Then, the motion vector v of each unit block is determined in accordance with the expression (2) by proportionally distributing motion vectors $v_0$, $v_1$ and $v_2$ to positions of the unit blocks.

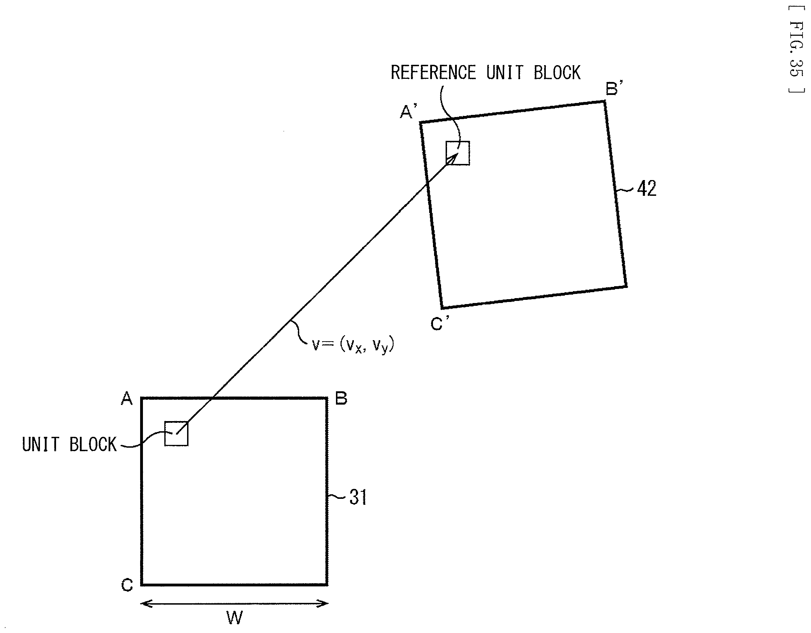

FIG. 35 illustrates a state in which the motion vector v of the i-th unit block is determined in a case where the PU 31 is divided into 8×8 pieces of 64 unit blocks.

For each pixel of the i-th unit block, a pixel at the fractional position configuring the reference unit block distant from the pixel by the motion vector v of the i-th unit block is determined by interpolation by the interpolation filter described above, and the pixel at the fractional position is translationally moved on the basis of the motion vector v, thereby generating the predicted image of the i-th unit block.

In a case where the PU 31 is divided into 8×8 pieces of 64 unit blocks, for each of the 64 unit blocks, the characteristics of the interpolation filter are changed to characteristics corresponding to the fractional position pointed to by the motion vector of the unit block, and a predicted image is generated.

As described above, in the motion compensation in the complete affine transformation mode, (a motion by) the affine transformation is approximated by the translational movement in a unit of unit block. Accordingly, as a tendency, the smaller the size of the unit block is (as the PU 31 is divided into unit blocks of a smaller size), the higher the predicted image with higher prediction accuracy is able to be obtained. The same applies to the motion compensation in the simple affine transformation mode, the translation rotation mode, and the translation scaling mode.

From those described the above, as illustrated in FIGs. 32 and 33, it is possible to obtain a predicted image with higher prediction accuracy in a case where the PU 31 is divided into smaller unit block of 64 (=8×8) pieces, etc. as illustrated in FIGs. 34 and 35, than a case where the PU 31 is divided into larger unit blocks of 16 (=4×4) pieces, etc.

However, in a case where the PU 31 is divided into 64 unit blocks, the frequency of changing the characteristics of the interpolation filter increases because the number of unit block is larger than that in a case where the PU 31 is divided into 16 unit blocks, which prevents the motion compensation processing from being speeded up.

That is, in a case where the PU 31 is divided into unit blocks of a smaller size, the accuracy in predicting the predicted image is able to be improved, and thus the encoding efficiency is able to be improved, but the frequency of changing the characteristics of the interpolation filter is increased, which prevents the motion compensation processing from being speeded up. On the other hand, in a case where the PU 31 is divided into unit blocks of a larger size, the frequency of changing the characteristics of the interpolation filter becomes lower, and thus the motion compensation processing is able to be performed at high speed, but the encoding efficiency may be lowered due to a decrease in the prediction accuracy in the predicted image.

Therefore, according to the present technology, motion compensation is performed by dividing the PU 31 into unit blocks in accordance with the POC distance of the PU 31, thereby improving the speed and the encoding efficiency of the motion compensation processing.

In accordance with the POC distance of the PU 31, the division of the PU 31 into unit blocks is able to be performed by the motion compensation in the complete affine transformation mode, the simple affine transformation mode, the translation rotation mode, and the translation scaling mode. Hereinafter, description is given of the division of the PU 31 into unit blocks in accordance with the POC distance of the PU 31 by exemplifying the motion compensation in the complete affine transformation mode.

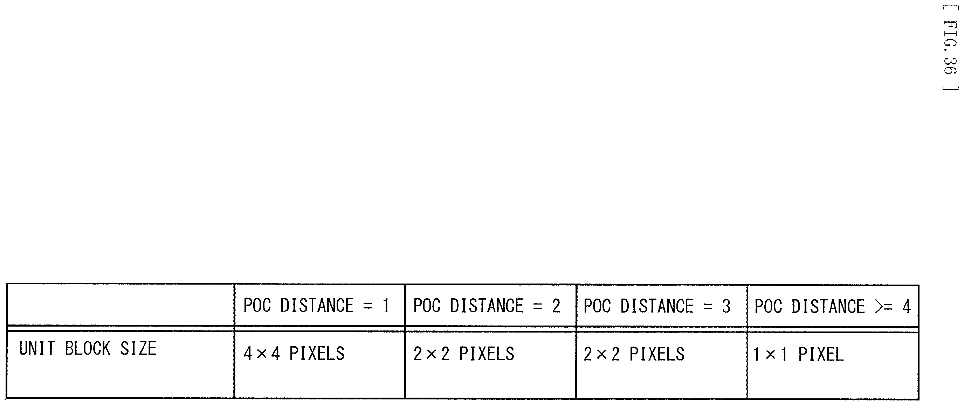

FIG. 36 illustrates examples of a relationship between the POC distance of the PU 31 and unit block size.

In FIG. 36, the size of the unit block is not fixed to a constant value such as the 4×4 pixels, but are variably set in accordance with the POC distance.

That is, in FIG. 36, in a case where the POC distance of the PU 31 is 1, the PU 31 is divided into unit blocks of a larger size, such as the 4×4 pixels, for example. In addition, when the POC distance of the PU 31 is 2 or 3, the PU 31 is divided into unit blocks of medium size, such as the 2×2 pixels, for example. Further, when the POC distance of the PU 31 is 4 or more, the PU 31 is divided into unit blocks of a smaller size, such as the 1×1 pixel, for example.

Here, as described with reference to FIG. 14, in a moving image, pictures having a short POC distance tend to have a small change due to the motion, while pictures having a long POC distance tends to have a large change due to the motion.

In a case where the change due to the motion is small, even when the PU 31 is divided into a unit block of a larger size, there is a high possibility that a predicted image with high prediction accuracy is able to be obtained.

On the other hand, in a case where the change due to the motion is large, when the PU 31 is divided into a unit block having a large size, the possibility of obtaining a predicted image with high prediction accuracy becomes lower; division of the PU 31 into unit blocks of a smaller size allows the possibility of obtaining a predicted image with high prediction accuracy to be higher.

Therefore, in the motion compensation, as illustrated in FIG. 36, in accordance with the POC distance of the PU 31, as the POC distance is shorter, the PU 31 is able to be divided into unit blocks of a larger size.

In the motion compensation, for example, as illustrated in FIG. 36, in a case where the POC distance of the PU 31 is as small as 1, when the PU 31 is divided into unit blocks of a larger size of $4 \times 4$ pixels, the POC distance is small, and therefore affine transformation with sufficient accuracy (affine transformation with accuracy close to ideal affine transformation) is performed as affine transformation approximated by the translational movement in a unit of unit block, and a predicted image with high prediction accuracy is able to be obtained to improve the encoding efficiency and the image quality of the decoded image. Further, the PU 31 is divided into unit blocks of a larger size, thereby lowering the frequency of the characteristics of the interpolation filter used for interpolation to be performed in the motion compensation, thus making it possible to perform the motion compensation processing at high speed.

In addition, in the motion compensation, for example, as illustrated in FIG. 36, in a case where the POC distance of the PU 31 is as large as 4 or more, when the PU 31 is divided into unit blocks of small size of $1 \times 1$ pixel, the size of the unit block is small, affine transformation with sufficient accuracy is performed as the affine transformation approximated by the translational movement in a unit of unit block, and a predicted image with high prediction accuracy is able to be obtained to improve the encoding efficiency and the image quality of the decoded image.

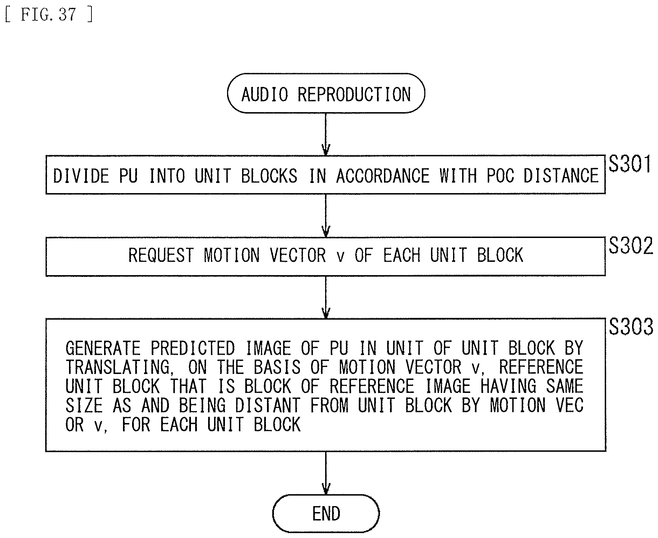

FIG. 37 is a flowchart that describes an example of processing in the motion compensation that divides the PU into unit blocks in accordance with the POC distance as described above.

The processing of the motion compensation in FIG. 37 is able to be performed by the motion compensation of the merge mode encoding processing in step S43 in FIG. 19, the motion compensation of the AMVP mode encoding processing in step S44 in FIG. 19, the motion compensation performed in steps S105, S107, S109, and S111 in FIG. 20, the motion compensation performed in steps S137, S140, S143, and S146 in FIG. 21, the motion compensation performed in steps S237, S239, S241, and S243 in FIG. 25, and the motion compensation performed in steps S259, S262, S265, and S268 in FIG. 26.

It is to be noted that, description is given here of processing of the motion compensation in FIG. 37 as the processing performed by the prediction section 119 of the image encoder 100.

In the motion compensation in FIG. 37, in step S301, the prediction section 119 divides the PU 31 into unit blocks sized in accordance with the POC distance of the PU 31 to be processed, as illustrated in FIG. 36, and the processing proceeds to step S302.

In step S302, the prediction section 119 determines the motion vector v of each unit block obtained by dividing the PU 31, and the processing proceeds to step S303.

Here, in a case where the motion compensation mode is the complete affine transformation mode, the motion vector v of the unit block is determined in accordance with the expression (2) using the three motion vectors $v_0$, $v_1$, and $v_2$ of the PU 31. In addition, in a case where the motion compensation mode is the simple affine transformation mode, the translation rotation mode, or the translation scaling mode, the motion vector v of the unit block is determined in accordance with the expression (1) using the two motion vectors $v_0$ and $v_1$ of the PU 31.

In step S303, the prediction section 119 translationally moves a reference unit block of the same size as a unit block distant from each unit block by the motion vector v in the reference image, on the basis of the motion vector v, thereby generating a predicted image of the PU 31 in a unit of unit block, and the motion compensation processing is finished.

Here, in step S303, each pixel at the fractional position of the reference unit block distant from each pixel of the unit block by the motion vector v of the unit block is generated by interpolation by the interpolation filter.

It is to be noted that it is possible to perform one or both of the selection of the motion compensation mode in accordance with the POC distance and the division of the PU 31 into unit blocks sized in accordance with the POC distance.

<Relationship between Accuracy in Motion Vector v of Unit Block and Frequency of Changing Characteristics of Interpolation Filter>

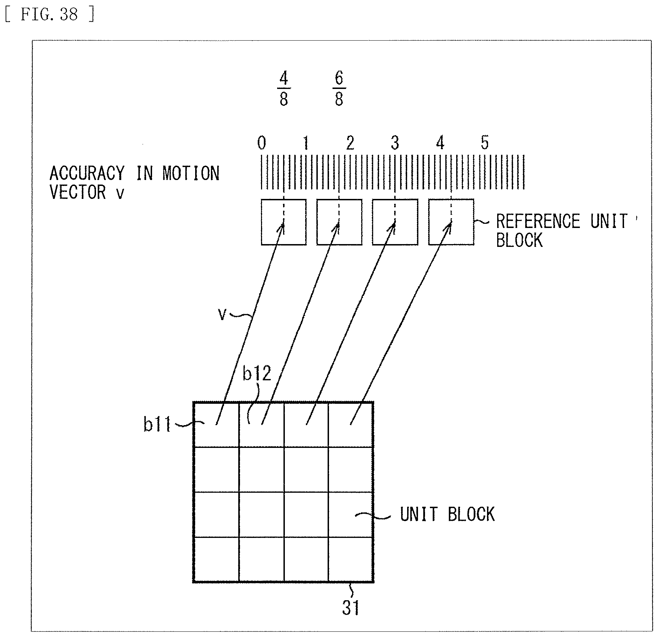

FIG. 38 illustrates a first example of accuracy in the motion vector v of the unit block.

As described with reference to FIGs. 27 to 31, the frequency of changing the characteristics of the interpolation filter varies depending on the size of the unit block, but also varies depending on the accuracy in the motion vector v of the unit block.

FIG. 38 illustrates an overview of motion compensation in a case where the motion vector v of the unit block is a vector of fractional accuracy that is able to point to a fractional position of 1/8.

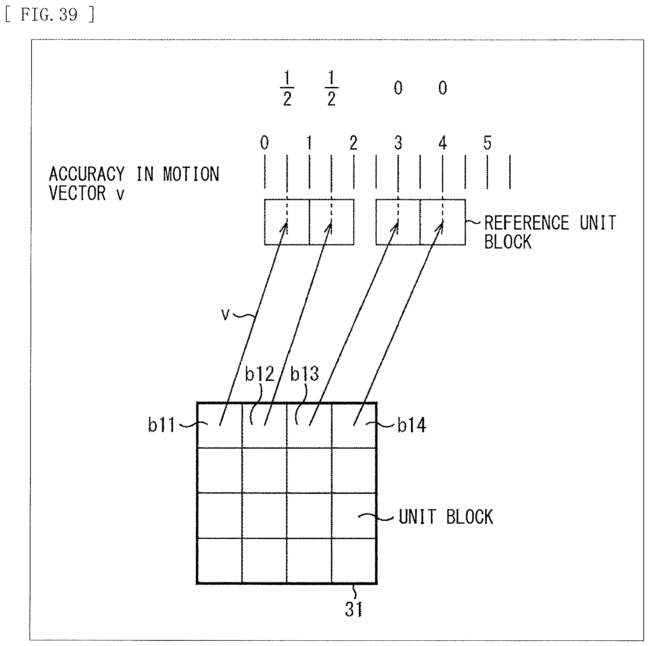

In FIG. 38, the PU 31 to be processed is divided into 4×4 unit blocks. In FIG. 38, description is given, focusing on a unit block in the first row (from the top) of the 4×4 unit blocks obtained by dividing the PU 31. The same also applies to FIG. 39 described later.

For the unit block, the motion vector v is determined in accordance with the expression (1) or the expression (2); however, in FIG. 38, the motion vector v determined in accordance with the expression (1) or the expression (2) is rounded off to a vector of fractional accuracy that is able to point to the fractional position of 1/8.

As a result, in FIG. 38, the motion vector v of an upper left unit block b11 of the 4×4 unit blocks points to a fractional position that is 4/8 distant to the right from an integer position 0, and the motion vector v of the unit block b12 next to the right of the unit block b11 points to a fractional position that is 6/8 distant to the right from an integer position 1.

Assuming now that a relative position at the fractional position as viewed from the nearest integer position leftward from the fractional position is adopted as the relative position, the relative position at the fractional position pointed to by the motion vector v of the unit block b11 is 4/8, and the relative position at the fractional position pointed to by the motion vector v of the unit block b12 is 6/8.

Therefore, the relative position at the fractional position pointed to by the motion vector v of the unit block b11 and the relative position at the fractional position pointed to by the motion vector v of the unit block b12 differ from each other. Accordingly, the characteristics of the interpolation filter are changed between the interpolation for generating the predicted image of the unit block b11 (pixel configuring the reference unit block corresponding to the unit block b11) and the interpolation for generating the predicted image of the unit block b12.

It is to be noted that, in FIG. 38, the reference unit block corresponding to each of the four unit blocks in the first row is in a horizontally expanded state, and thus the reference block on a reference image becomes a block larger than the PU 31; in the motion compensation, transformation is performed to reduce the size of the reference block larger than the PU 31 to the size of the PU 31.

FIG. 39 illustrates a second example of accuracy in the motion vector v of the unit block.

That is, FIG. 39 illustrates an overview of the motion compensation in a case where the motion vector v of the unit block is a vector of fractional accuracy that is able to point to a fractional position of 1/2. Accordingly, the accuracy in the motion vector v of the unit block in FIG. 39 is coarser than the case of FIG. 38.

In FIG. 39, similarly to the case of FIG. 38, the PU 31 to be processed is divided into 4×4 unit blocks.

As for the unit block, the motion vector v is determined in accordance with the expression (1) or the expression (2); however, in FIG. 39, the motion vector v determined in accordance with the expression (1) or the expression (2) is rounded off to a vector of fractional accuracy that is able to point to a fractional position of 1/2.

As a result, in FIG. 39, the motion vector v of the upper left unit block b11 of the 4×4 unit blocks points to a fractional position that is 1/2 distant to the right from the integer position 0, and the motion vector v of the unit block b12 next to the right of the unit block b11 points to a fractional position that is 1/2 distant to the right from the integer position 1. Further, the motion vector v of a unit block b13 next to the right of the unit block b12 points to a fractional position (integer position 3) that is distant by 0 from the integer position 3, and the motion vector v of a unit block b14 next to the right of the unit block b13 points to a fractional position (integer position 4) that is distant by 0 from the integer position 4.

Therefore, the relative position at the fractional position pointed to by the motion vector v of each of the unit blocks b11 and b12 is 1/2, and the relative position at the fractional position pointed to by the motion vector v of each of the unit block b13 and b14 is 0.

Therefore, the relative positions at the fractional positions pointed to by the motion vector v of each of the unit blocks b11 and b12 are the same, and thus the characteristics of the interpolation filter are not changed between interpolation for generating the predicted image of the unit block b11 and interpolation for generating the predicted image of the unit block b12.

Similarly, the relative positions at the fractional positions pointed to by the respective motion vectors v of the unit block b13 and b14 are the same, and thus the characteristics of the interpolation filter are not changed between interpolation for generating the predicted image of the unit block b13 and interpolation for generating the predicted image of the unit block b14.

As described above, in a case where the accuracy in the motion vector v of the unit block is as fine as 1/8, the characteristics of the interpolation filter are changed between the interpolation for generating the predicted image of the unit block b11 and the interpolation for generating the predicted image of the unit block b12; however, in a case where the accuracy in the motion vector v of the unit block is as coarse as 1/2, the characteristics of the interpolation filter are not changed between the interpolation for generating the predicted image of the unit block b11 and the interpolation for generating the predicted image of the unit block b12.

Therefore, by more coarsely adjusting the accuracy in the motion vector v of the unit block as the POC distance becomes smaller in accordance with the POC distance of the PU 31, it is possible to reduce the frequency of changing the characteristics of the interpolation filter and to perform the motion compensation processing at high speed, similarly to the case of dividing the PU 31 into unit blocks sized in accordance with the POC distance while keeping the size of the unit block fixed.

<Description of Computer to which the Technology is Applied>

A series of processing described above is able to be executed by hardware or software. In a case where the series of processing is executed by software, programs constituting the software are installed in the computer. Here, examples of the computer include a computer incorporated in dedicated hardware and a general-purpose personal computer which is able to execute various functions by installing various programs.

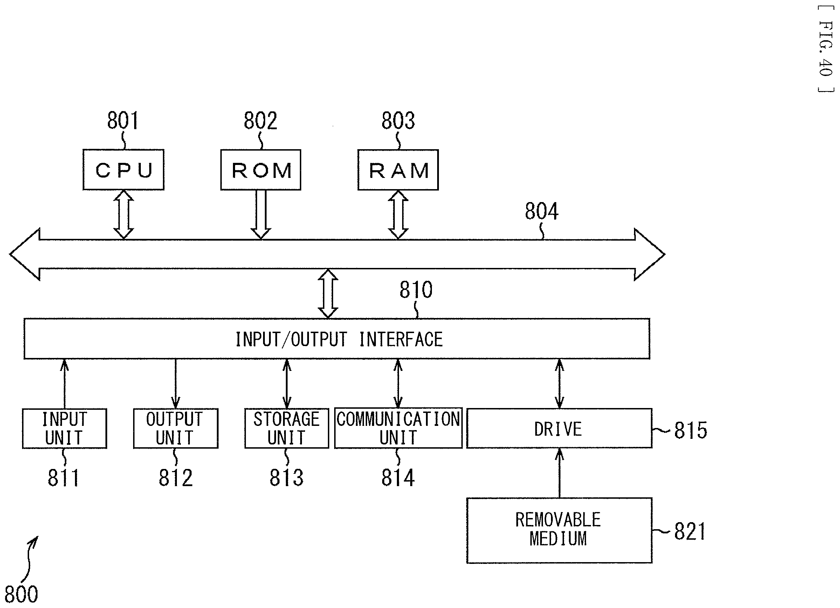

FIG. 40 is a block diagram illustrating a configuration example of hardware in a computer that executes the series of processing described above by programs.

In a computer 800, a CPU (Central Processing Unit) 801, a ROM (Read Only Memory) 802, and a RAM (Random Access Memory) 803 are coupled to one another by a bus 804.

An input/output interface 810 is further coupled to the bus 804. An input unit 811, an output unit 812, a storage unit 813, a communication unit 814, and a drive 815 are coupled to the input/output interface 810.

The input unit 811 includes a keyboard, a mouse, a microphone, and the like. The output unit 812 includes a display, a speaker, and the like. The storage unit 813 includes a hard disk, a nonvolatile memory, and the like. The communication unit 814 includes a network interface, and the like. The drive 815 drives a removable medium 821 such as a magnetic disk, an optical disk, a magneto-optical disk, or a semiconductor memory.

In the computer 800 configured as described above, the CPU 801 loads a program stored in, for example, the storage unit 813 into the RAM 803 via the input/output interface 810 and the bus 804, and executes the program, thereby performing the series of processing described above.

The programs executed by the computer 800 (CPU 801) is able to be provided by being recorded in the removable medium 821 as a package medium, or the like, for example. The program is also able to be provided via a wired or wireless transmission medium, such as a local area network, the Internet, or digital satellite broadcasting.

In the computer 800, the program is able to be installed in the storage unit 813 via the input/output interface 810 by mounting the removable medium 821 on the drive 815. Further, the program is able to be received by the communication unit 814 via the wired or wireless transmission medium and installed in the storage unit 813. In addition, the program is able to be installed in advance in the ROM 802 or the storage unit 813.

It is to be noted that the program executed by the computer 800 may be a program in which processing is performed in time series in accordance with the order described in the present specification, or may be a program in which processing is performed in parallel or at a necessary timing such as when a call is made.

<Television Apparatus>

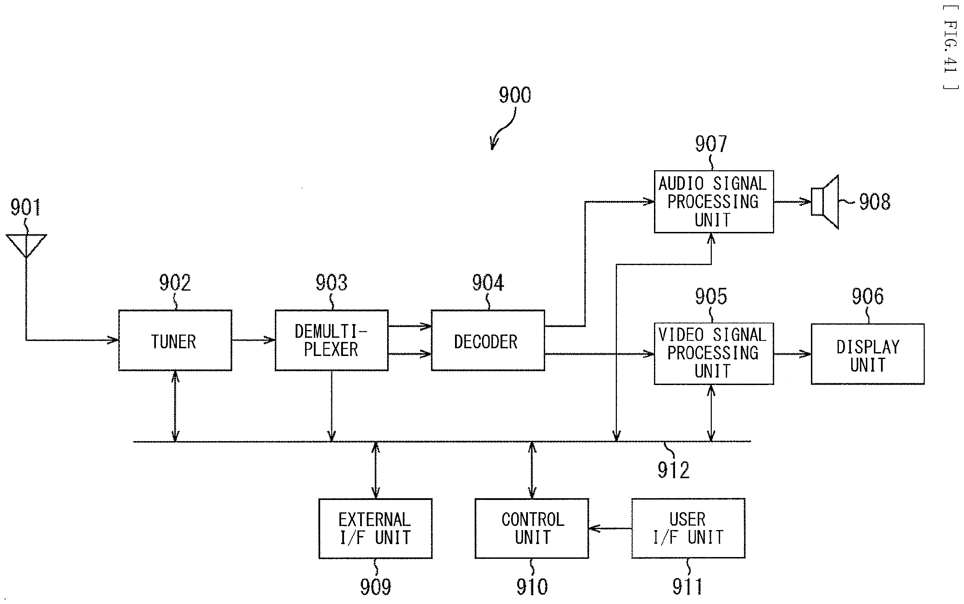

FIG. 41 illustrates an example of schematic configuration of a television apparatus to which the foregoing embodiment is applied. A television apparatus 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts a signal of a desired channel from a broadcasting signal received via the antenna 901, and demodulates the extracted signal. Then, the tuner 902 outputs an encoded bitstream obtained by the demodulation to the demultiplexer 903. That is, the tuner 902 serves as a transmission unit in the television apparatus 900, for receiving an encoded stream in which images are encoded.

The demultiplexer 903 separates the encoded bitstream into a video stream and an audio stream of a program to be viewed, and outputs each of the separated streams to the decoder 904. Further, the demultiplexer 903 extracts auxiliary data such as EPG (Electronic Program Guide) from the encoded bitstream, and supplies the extracted data to the control unit 910. It is to be noted that the demultiplexer 903 may descramble the encoded bitstream which is scrambled.

The decoder 904 decodes the video stream and the audio stream inputted from the demultiplexer 903. Then, the decoder 904 outputs the video data generated by the decoding processing to the video signal processing unit 905. In addition, the decoder 904 outputs the audio data generated by the decoding processing to the audio signal processing unit 907.

The video signal processing unit 905 reproduces the video data inputted from the decoder 904, and displays the video on the display unit 906. In addition, the video signal processing unit 905 may display an application screen supplied via a network on the display unit 906. In addition, the video signal processing unit 905 may perform additional processing such as noise reduction, for example, on the video data, depending on settings. Further, the video signal processing unit 905 may generate an image of a GUI (Graphical User Interface), such as a menu, a button, or a cursor, and may superimpose the generated image on an outputted image.

The display unit 906 is driven by drive signals supplied from the video signal processing unit 905, and displays a video or an image on a video surface of a display device (e.g., a liquid crystal display, a plasma display, or an OELD (Organic ElectroLuminescence Display) (organic electroluminescence display).

The audio signal processing unit 907 performs reproduction processing such as D/A conversion and amplification on the audio data inputted from the decoder 904, and outputs the audio data from the speaker 908. In addition, the audio signal processing unit 907 may perform additional processing such as noise reduction on the audio data.

The external interface unit 909 is an interface for coupling the television apparatus 900 and external apparatuses or networks to each other. For example, a video stream or an audio stream received via the external interface unit 909 may be decoded by the decoder 904. That is, the external interface unit 909 also serves as a transmission unit in the television apparatus 900, for receiving encoded stream in which images are encoded.

The control unit 910 includes a processor such as CPU, and a memory such as the RAM and the ROM. The memory stores a program to be executed by the CPU, program data, EPG data, data acquired via a network, and the like. The programs stored in the memory are read and executed by the CPU when the television apparatus 900 is activated, for example. The CPU executes programs to thereby control an operation of the television apparatus 900 in accordance with operation signals inputted from the user interface unit 911, for example.

The user interface unit 911 is coupled to the control unit 910. The user interface unit 911 includes, for example, a button and a switch for the user to operate the television apparatus 900, a receiving unit for remote control signals, and the like. The user interface unit 911 detects the operation by the user via these components, generates an operation signal, and outputs the generated operation signal to the control unit 910.

The bus 912 couples the tuner 902, the demultiplexer 903, the decoder 904, the video signal processing unit 905, the audio signal processing unit 907, the external interface unit 909, and the control unit 910 to one another.

In the television apparatus 900 configured as described above, the decoder 904 may have the functions of the image decoder 200 described above. That is, the decoder 904 may decode the encoded data by the methods described in the foregoing embodiments. Such a configuration enables the television apparatus 900 to achieve effects similar to those of the foregoing embodiments.

In addition, in the television apparatus 900 configured as described above, for example, the video signal processing unit 905 may encode the image data supplied from the decoder 904, and may output the resulting encoded data to the outside of the television apparatus 900 via the external interface unit 909. In addition, the video signal processing unit 905 may have functions of the image encoder 100 described above. That is, the video signal processing unit 905 may encode the image data supplied from the decoder 904 by the methods described in the foregoing embodiments. Such a configuration enables the television apparatus 900 to achieve effects similar to those of the foregoing embodiments.

<Mobile Phone>

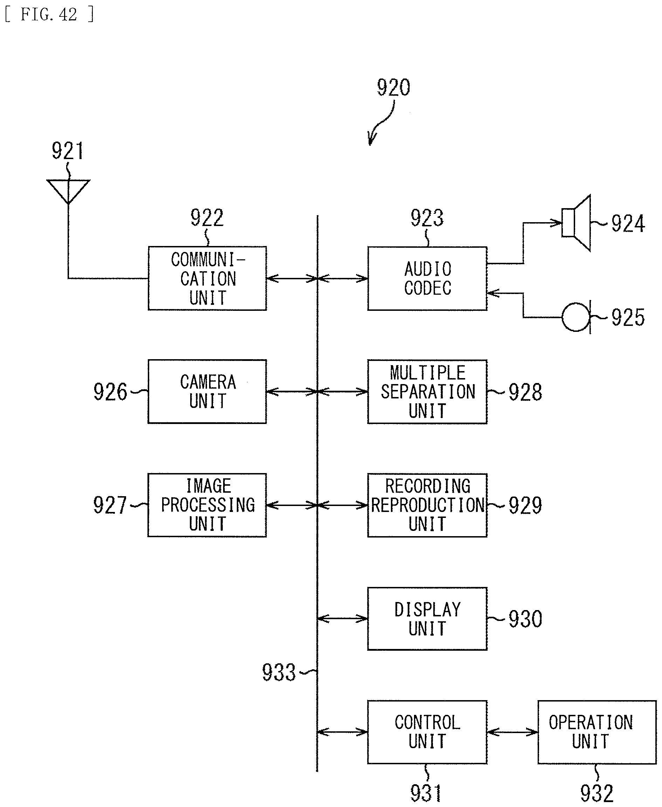

FIG. 42 illustrates an example of a schematic configuration of a mobile phone to which the foregoing embodiment is applied. A mobile phone 920 includes an antenna 921, a communication unit 922, an audio codec 923, a speaker 924, a microphone 925, a camera unit 926, an image processing unit 927, a multiple separation unit 928, a recording reproduction unit 929, a display unit 930, a control unit 931, an operation unit 932, and a bus 933.

The antenna 921 is coupled to the communication unit 922. The speaker 924 and the microphone 925 are coupled to the audio codec 923. The operation unit 932 is coupled to the control unit 931. The bus 933 couples the communication unit 922, the audio codec 923, the camera unit 926, the image processing unit 927, the multiple separation unit 928, the recording reproduction unit 929, the display unit 930, and the control unit 931 to one another.

The mobile phone 920 performs operations such as transmission and reception of audio signals, transmission and reception of e-mails or image data, image capturing, and recording of data in various operation modes including a voice call mode, a data communication mode, a shooting mode, and a videophone mode.

In the voice call mode, analog audio signals generated by the microphone 925 are supplied to the audio codec 923. The audio codec 923 converts an analog audio signal to audio data, and performs A/D conversion of the converted audio data for compression. Then, the audio codec 923 outputs the compressed audio data to the communication unit 922. The communication unit 922 encodes and modulates the audio data to generate transmission signals. Then, the communication unit 922 transmits the generated transmission signal to a base station (not illustrated) via the antenna 921. In addition, the communication unit 922 amplifies a radio signal received via the antenna 921, performs frequency conversion of the radio signal, and acquires a reception signal. Then, the communication unit 922 demodulates and decodes the reception signals to generate audio data, and outputs the generated audio data to the audio codec 923. The audio codec 923 decompresses the audio data and performs D/A conversion of the audio data to generate an analog audio signal. Then, the audio codec 923 supplies the generated audio signal to the speaker 924 to output the audio signal.

In addition, in the data communication mode, for example, the control unit 931 generates character data constituting an e-mail in response to a user's operation via the operation unit 932. In addition, the control unit 931 displays characters on the display unit 930. In addition, the control unit 931 generates e-mail data in response to a transmission instruction from the user via the operation unit 932, and outputs the generated e-mail data to the communication unit 922. The communication unit 922 encodes and modulates the e-mail data to generate a transmission signal. Then, the communication unit 922 transmits the generated transmission signal to the base station (not illustrated) via the antenna 921. In addition, the communication unit 922 amplifies a radio signal received via the antenna 921, performs frequency conversion of the radio signal, and acquires a reception signal. Then, the communication unit 922 demodulates and decodes the reception signal to restore the e-mail data, and outputs the restored e-mail data to the control unit 931. The control unit 931 causes the display unit 930 to display the content of the e-mail, and also supplies the e-mail data to the recording reproduction unit 929 for writing the e-mail data in its storage medium.

The recording reproduction unit 929 includes any readable and writable storage medium. For example, the storage medium may be a built-in storage medium such as a RAM or a flash memory, or may be an externally mounted storage medium such as a hard disk, a magnetic disk, a magneto-optical disk, an optical disk, a USB (Universal Serial Bus) memory, or a memory card.

In addition, in the shooting mode, for example, the camera unit 926 captures an image of a subject to generate image data, and outputs the generated image data to the image processing unit 927. The image processing unit 927 encodes the image data inputted from the camera unit 926 and supplies the encoded stream to the recording reproduction unit 929 to write the encoded stream into the storage medium.

Further, in the image display mode, the recording reproduction unit 929 reads out the encoded stream recorded in the storage medium, and outputs the encoded stream to the image processing unit 927. The image processing unit 927 decodes the encoded stream inputted from the recording reproduction unit 929 and supplies the image data to the display unit 930 to display the image data.

In the videophone mode, for example, the multiple separation unit 928 multiplexes the video stream encoded by the image processing unit 927 and the audio stream inputted from the audio codec 923, and outputs the multiplexed stream to the communication unit 922. The communication unit 922 encodes and modulates the stream and generates a transmission signal. Then, the communication unit 922 transmits the generated transmission signal to the base station (not illustrated) via the antenna 921. In addition, the communication unit 922 amplifies a radio signal received via the antenna 921, performs frequency conversion of the radio signal, and acquires a reception signal. The transmission signal and the reception signal may include an encoded bit stream. Then, the communication unit 922 demodulates and decodes the reception signals to restore the stream, and outputs the restored stream to the multiple separation unit 928. The multiple separation unit 928 separates the inputted stream into the video stream and the audio stream, and outputs the video stream to the image processing unit 927 and the audio stream to the audio codec 923. The image processing unit 927 decodes the video stream to generate video data. The video data is supplied to the display unit 930, and the display unit 930 displays a series of images. The audio codec 923 decompresses the audio stream and performs D/A conversion of the audio stream to generate an analog audio signal. Then, the audio codec 923 supplies the generated audio signal to the speaker 924 to output the audio.

In the mobile phone 920 configured as described above, for example, the image processing unit 927 may have functions of the image encoder 100 described above. That is, the image processing unit 927 may encode the image data by the methods described in the foregoing embodiments. Such a configuration enables the mobile phone 920 to achieve effects similar to those of the foregoing embodiments.

In addition, in the mobile phone 920 configured as described above, for example, the image processing unit 927 may have functions of the image decoder 200 described above. That is, the image processing unit 927 may decode the encoded data by the methods described in the foregoing embodiments. Such a configuration enables the mobile phone 920 to achieve effects similar to those of the foregoing embodiments.

<Recording/Reproduction Apparatus>

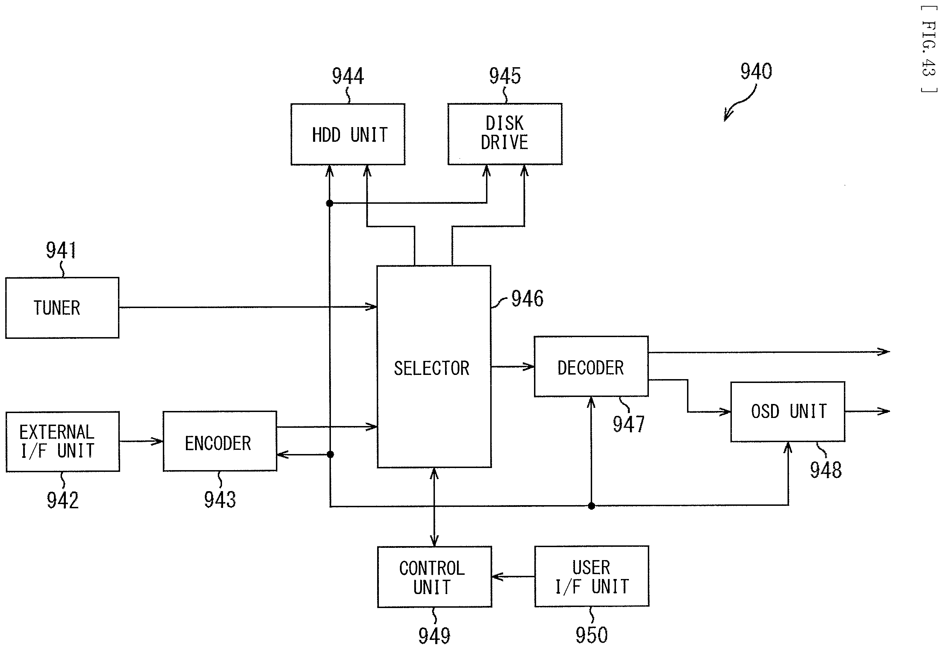

FIG. 43 illustrates an example of schematic configuration of a recording reproduction apparatus to which the foregoing embodiment is applied. For example, the recording reproduction apparatus 940 encodes audio data and video data of a received broadcasting program, and records the encoded data in a recording medium. In addition, the recording reproduction apparatus 940 may encode audio data and video data acquired from another apparatus, for example, and record the encoded data in a recording medium. Further, the recording reproduction apparatus 940 reproduces data recorded in the recording medium on the monitor and the speaker in response to, for example, an instruction from the user. At this time, the recording reproduction apparatus 940 decodes the audio data and the video data.

The recording reproduction apparatus 940 includes a tuner 941, an external interface (I/F) unit 942, an encoder 943, an HDD (Hard Disk Drive) unit 944, a disk drive 945, a selector 946, a decoder 947, an OSD (On-Screen Display) unit 948, a control unit 949, and a user interface (I/F) unit 950.

The tuner 941 extracts a signal of a desired channel from a broadcasting signal received via an antenna (not illustrated), and demodulates the extracted signal. Then, the tuner 941 outputs the encoded bitstream obtained by the demodulation to the selector 946. That is, the tuner 941 functions as a transmission unit in the recording reproduction apparatus 940.

The external interface unit 942 is an interface for coupling the recording reproduction apparatus 940 and external apparatuses or networks to each other. The external interface unit 942 may be, for example, an IEEE (Institute of Electrical and Electronic Engineers) 1394 interface, a network interface, a USB interface, a flash memory interface, or the like. For example, video data and audio data received via the external interface unit 942 are inputted to the encoder 943. That is, the external interface unit 942 functions as a transmission unit in the recording reproduction apparatus 940.

In a case where the video data and the audio data inputted from the external interface unit 942 are not encoded, the encoder 943 encodes the video data and the audio data. Then, the encoder 943 outputs the encoded bitstream to the selector 946.

The HDD unit 944 records an encoded bitstream in which contents data such as video and audio are compressed, various programs, and other data in an internal hard disk. In addition, the HDD unit 944 reads out these data from the hard disk when the video and the audio are reproduced.

The disk drive 945 records and reads data in and from a mounted recording medium. The recording medium mounted on the disk drive 945 may be, for example, a DVD (Digital Versatile Disc) disk (DVD-Video, DVD-RAM (DVD-Random Access Memory), a DVD-R (DVD-Recordable, a DVD-RW (DVD-Rewritable, a DVD+R (DVD+Recordable), a DVD+RW (DVD+Rewritable), etc.), or a Blu-ray (registered trademark) disk.

When video and audio are recorded, the selector 946 selects an encoded bit stream inputted from the tuner 941 or the encoder 943, and outputs the selected encoded bit stream to the HDD unit 944 or the disk drive 945. In addition, the selector 946 outputs an encoded bitstream inputted from the HDD unit 944 or the disk drive 945 to the decoder 947 when reproducing the video and the audio.

The decoder 947 decodes the encoded bitstream and generates video data and audio data. Then, the decoder 947 outputs the generated video data to the OSD unit 948. In addition, the decoder 947 outputs the generated audio data to an external speaker.

The OSD unit 948 reproduces the video data inputted from the decoder 947 and displays the video. In addition, the OSD unit 948 may superimpose an image of the GUI such as a menu, a button, or a cursor on the video to be displayed.

The control unit 949 includes a processor such as a CPU, and a memory such as a RAM and a ROM. The memory stores a program to be executed by the CPU, program data, and the like. The programs stored in the memory are read and executed by the CPU when the recording reproduction apparatus 940 is activated, for example. The CPU execute programs to control the operation of the recording reproduction apparatus 940 in accordance with operation signals inputted from, for example, the user interface unit 950.

The user interface unit 950 is coupled to the control unit 949. The user interface unit 950 includes, for example, a button and a switch for the user to operate the recording reproduction apparatus 940, and a receiving unit for remote control signals. The user interface unit 950 detects an operation by the user via these components, generates an operation signal, and outputs the generated operation signal to the control unit 949.

In the recording reproduction apparatus 940 configured as described above, for example, the encoder 943 may have functions of the image encoder 100 described above. That is, the encoder 943 may encode the image data by the methods described in the foregoing embodiments. Such a configuration enables the recording reproduction apparatus 940 to achieve effects similar to those of the foregoing embodiments.

In addition, in the recording reproduction apparatus 940 configured as described above, for example, the decoder 947 may have functions of the image decoder 200 described above. That is, the decoder 947 may decode the encoded data by the methods described in the foregoing embodiments. Such a configuration enables the recording reproduction apparatus 940 to achieve effects similar to those of the foregoing embodiments.

<Imaging Apparatus>

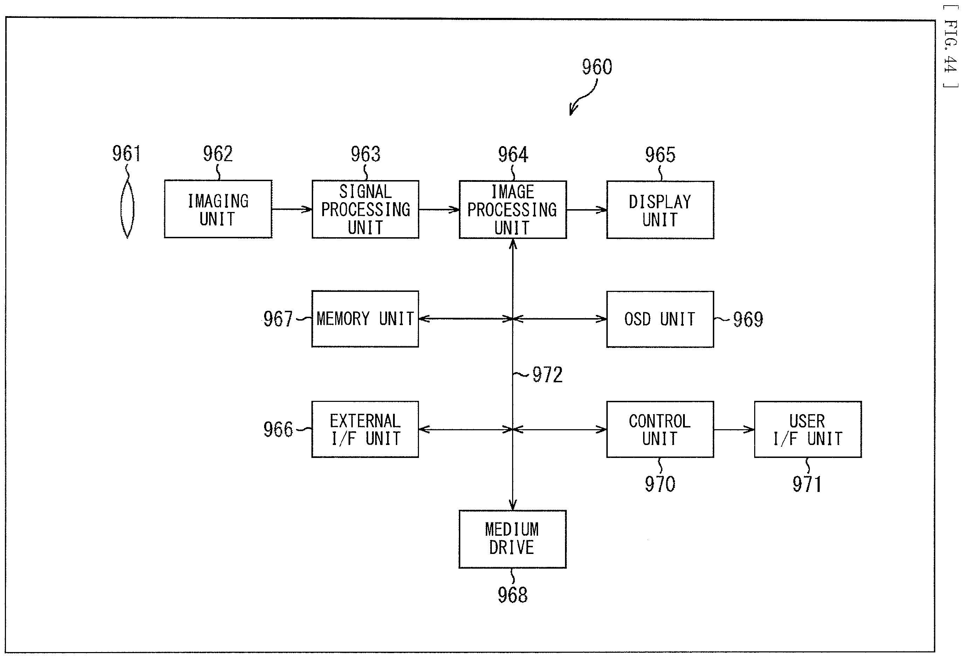

FIG. 44 illustrates an example of schematic configuration of an imaging apparatus to which the foregoing embodiment is applied. An imaging apparatus 960 captures an image of a subject to generate an image, encodes the image data, and records the encoded image data in a recording medium.

The imaging apparatus 960 includes an optical block 961, an imaging unit 962, a signal processing unit 963, an image processing unit 964, a display unit 965, an external interface (I/F) unit 966, a memory unit 967, a medium drive 968, an OSD unit 969, a control unit 970, a user interface (I/F) unit 971, and a bus 972.

The optical block 961 is coupled to the imaging unit 962. The imaging unit 962 is coupled to the signal processing unit 963. The display unit 965 is coupled to the image processing unit 964. The user interface unit 971 is coupled to the control unit 970. The bus 972 couples the image processing unit 964, the external interface unit 966, the memory unit 967, the medium drive 968, the OSD unit 969, and the control unit 970 to one another.

The optical block 961 includes a focusing lens, a diaphragm mechanism, and the like. The optical block 961 forms an optical image of a subject on an imaging surface of the imaging unit 962. The imaging unit 962 has an image sensor such as a CCD (Charge Coupled Device) or a CMOS (Complementary Metal Oxide Semiconductor), and performs conversion of the optical image formed on the imaging surface to an image signal as an electric signal by photoelectric conversion. Then, the imaging unit 962 outputs the image signal to the signal processing unit 963.

The signal processing unit 963 performs various camera signal processing such as knee correction, gamma correction, and color correction on the image signal inputted from the imaging unit 962. The signal processing unit 963 outputs the image data after the camera signal processing to the image processing unit 964.

The image processing unit 964 encodes the image data inputted from the signal processing unit 963 to generate encoded data. Then, the image processing unit 964 outputs the generated encoded data to the external interface unit 966 or the medium drive 968. In addition, the image processing unit 964 decodes encoded data inputted from the external interface unit 966 or the medium drive 968 to generate image data. Then, the image processing unit 964 outputs the generated image data to the display unit 965. In addition, the image processing unit 964 may output image data inputted from the signal processing unit 963 to the display unit 965 to display an image. In addition, the image processing unit 964 may superimpose the display data acquired from the OSD unit 969 on the image to be outputted to the display unit 965.

The OSD unit 969 generates an image of a GUI such as a menu, a button, or a cursor, and outputs the generated image to the image processing unit 964.

The external interface unit 966 is configured as a USB input/output terminal, for example. The external interface unit 966 couples the imaging apparatus 960 and a printer to each other when, for example, images are printed. A drive is coupled to the external interface unit 966 as necessary. For example, a removable medium such as a magnetic disk or an optical disk is mounted on the drive, and programs to be read out from the removable medium may be installed in the imaging apparatus 960. Further, the external interface unit 966 may be configured as a network interface to be coupled to a network such as LAN or the Internet. That is, the external interface unit 966 serves as a transmission unit in the imaging apparatus 960.

The recording medium mounted on the medium drive 968 may be any readable/writable removable medium such as a magnetic disk, a magneto-optical disk, an optical disk, or a semiconductor memory, for example. In addition, the recording medium may be fixedly mounted on the medium drive 968, and a non-portable storage unit such as a built-in hard disk drive or a SSD (Solid State Drive) may be configured, for example.

The control unit 970 includes a processor such as a CPU, and a memory such as a RAM and a ROM. The memory stores a program to be executed by the CPU, program data, and the like. The programs stored in the memory are read and executed by the CPU when the imaging apparatus 960 is activated, for example. By executing the programs, the CPU controls the operation of the imaging apparatus 960 in accordance with, for example, operation signals inputted from the user interface unit 971.

The user interface unit 971 is coupled to the control unit 970. The user interface unit 971 includes, for example, a button, a switch, and the like for the user to operate the imaging apparatus 960. The user interface unit 971 detects an operation by the user via these components, generates an operation signal, and outputs the generated operation signal to the control unit 970.

In the imaging apparatus 960 configured as described above, for example, the image processing unit 964 may have functions of the image encoder 100 described above. That is, the image processing unit 964 may encode the image data by the methods described in the foregoing embodiments. Such a configuration enables the imaging apparatus 960 to achieve effects similar to those of the foregoing embodiments.

In addition, in the imaging apparatus 960 configured as described above, for example, the image processing unit 964 may have functions of the image decoder 200 described above. That is, the image processing unit 964 may decode the encoded data by the methods described in the foregoing embodiments. Such a configuration enables the imaging apparatus 960 to achieve effects similar to those of the foregoing embodiments.

<Video Set>

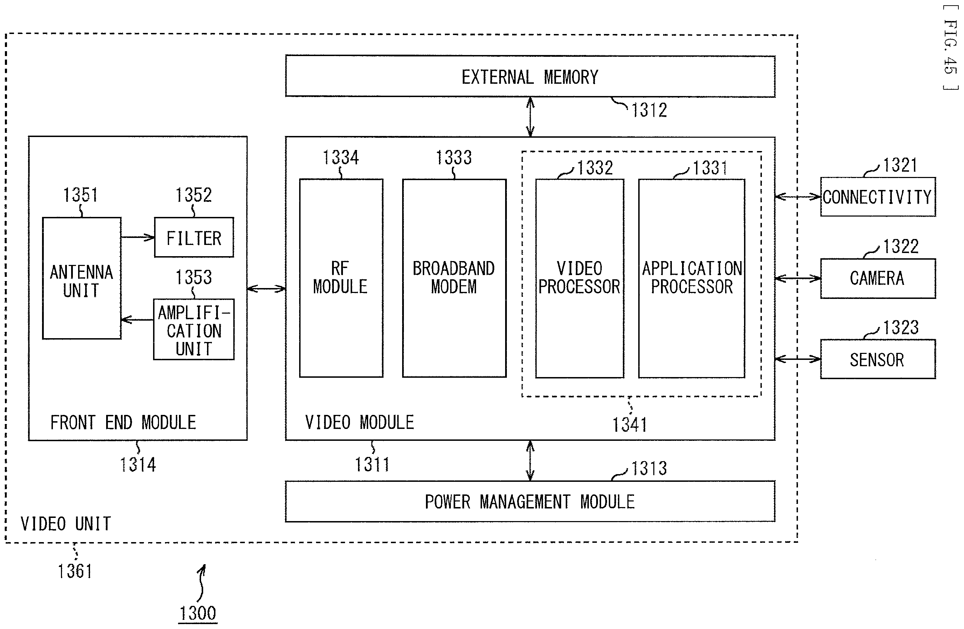

In addition, the present technology may be implemented as any configuration mounted on any apparatus or apparatuses constituting the system, for example, a processor as a system LSI (Large Scale Integration), or the like, a module using a plurality of processors, or the like, a unit using a plurality of modules, or the like, or a set in which another function is added to the unit (i.e., a configuration of a portion of the apparatus). FIG. 45 illustrates an example of a schematic configuration of a video set to which the present technology is applied.

In recent years, multifunctional electronic devices have been progressing; in an occasion where a portion of the configuration is implemented as sales, provision, or the like in the development and manufacture thereof, not only a case where the implementation is performed as a configuration having one function, but also a case where a plurality of configurations having related functions are combined to perform the implementation as a set having a plurality of functions has been often perceived.

A video set 1300 illustrated in FIG. 45 has such a multi-functional configuration, in which a device having a function related to encoding and decoding (one or both of them) of images is combined with a device having another function related to the function.

As illustrated in FIG. 45, the video set 1300 includes modules such as a video module 1311, an external memory 1312, a power management module 1313, and a front end module 1314, and devices having related functions such as a connectivity 1321, a camera 1322, and a sensor 1323.

A module is a component having several component-like functions related to one another and having a unitary function. Although a specific physical configuration is optional, for example, a configuration is conceivable in which a plurality of processors each having a function, electronic circuit elements such as resistors and capacitors, and other devices may be arranged and integrated on a wiring board, or the like. In addition, it is also conceivable to combine a module with another module, a processor, or the like to form a new module.

In the case of the example of FIG. 45, the video module 1311 is a combination of configurations having functions related to image processing, and includes an application processor, a video processor, a broadband modem 1333 and an RF module 1334.

The processor includes configurations having predetermined functions which are integrated into a semiconductor chip by SoC (System On a Chip), and may be sometimes referred to as a system LSI (Large Scale Integration), or the like, for example. The configuration having the predetermined function may be a logic circuit (hardware configuration), a CPU, a ROM, a RAM, or the like, a program (software configuration) to be executed using the CPU, the ROM, the RAM, or the like, or a combination thereof. For example, the processor may include a logic circuit, a CPU, a ROM, a RAM, and the like, and some of the functions may be achieved by a logic circuit (hardware configuration), and other functions may be achieved by a program (software configuration) to be executed by the CPU.

The application processor 1331 in FIG. 45 is a processor that executes an application related to the imaging processing. The application to be executed in the application processor 1331 is not only able to perform operation processing in order to achieve predetermined functions, but also able to control internal and external configurations of the video module 1311, such as a video processor 1332, as necessary, for example.

The video processor 1332 is a processor having functions related to (one or both of) encoding and decoding of images.

The broadband modem 1333 performs digital modulation, etc. of data (digital signal) to be transmitted by wired or wireless (or both of wired and wireless) broadband communication performed via a broadband line such as the Internet or a public telephone line network to convert the data (digital signal) into an analog signal, or demodulates an analog signal received by the broadband communication to convert the analog signal to data (digital signal). The broadband modem 1333 processes arbitrary information such as image data to be processed by the video processor 1332, a stream in which the image data is encoded, application programs, setting data, and the like.

The RF module 1334 is a module that performs frequency conversion, modulation/demodulation, amplification, filtering processing, and the like on RF (Radio Frequency) signals transmitted and received via the antenna. For example, the RF module 1334 performs frequency conversion, or the like on the base band signal generated by the broadband modem 1333 to generate an RF signal. In addition, for example, the RF module 1334 performs frequency conversion, or the like on the RF signal received via the front end module 1314 to generate a base band signal.

It is to be noted that, as illustrated in a dotted line 1341 in FIG. 45, the application processor 1331 and the video processor 1332 may be integrated and configured as a single processor.

The external memory 1312 is a module that is provided outside the video module 1311 and includes a storage device to be utilized by the video module 1311. The storage device of the external memory 1312 may be achieved by any physical configuration; however, the storage device of the external memory 1312 is typically used for storing a large amount of data such as frame-by-frame image data in many cases. Therefore, it is desirable to achieve the storage device by a relatively inexpensive semiconductor memory having a large capacity, such as, for example, DRAM (Dynamic Random Access Memory).

The power management module 1313 manages and controls supply of power to the video module 1311 (each configuration in the video module 1311).

The front end module 1314 is a module that provides a front-end function (circuits of transmission and reception ends on antenna side) to the RF module 1334. As illustrated in FIG. 45, the front end module 1314 includes, for example, an antenna unit 1351, a filter 1352, and an amplification unit 1353.

The antenna unit 1351 has an antenna that transmits and receives radio signals and a configuration of its periphery. The antenna unit 1351 transmits a signal supplied from the amplification unit 1353 as a radio signal, and supplies the received radio signal to the filter 1352 as an electric signal (RF signal). The filter 1352 performs filtering processing, or the like on the RF signal received via the antenna unit 1351, and supplies the processed RF signal to the RF module 1334. The amplification unit 1353 amplifies the RF signal supplied from the RF module 1334 and supply the amplified RF signal to the antenna unit 1351.

The connectivity 1321 is a module having a function related to coupling to the outside. The physical configuration of the connectivity 1321 is optional. For example, the connectivity 1321 includes a configuration having a communication function other than a communication standard corresponding to the broadband modem 1333, an external input/output terminal, and the like.

For example, the connectivity 1321 may include a module having a communication function conforming to a wireless communication standard such as Bluetooth (registered trademark), IEEE 802.11 (e.g., Wi-Fi (Wireless Fidelity, registered trademark), NFC (Near Field Communication), and IrDA (InfraRed Data Association), an antenna that transmits and receives signals conforming to the standard, and the like. In addition, for example, the connectivity 1321 may include a module having a communication function conforming to a wired communication standard such as USB (Universal Serial Bus) and HDMI (registered trademark) (High-Definition Multimedia Interface), and a terminal conforming to the standard. Further, for example, the connectivity 1321 may have another data (signal) transmission function, etc. such as an analog input/output terminal.

It is to be noted that the connectivity 1321 may include a device to which data (signal) is to be transmitted. For example, the connectivity 1321 may include a drive (including not only a drive of a removable medium, but also a hard disk, SSD (Solid State Drive), NAS (Network Attached Storage), or the like) that reads out data from or writes data into a recording medium such as a magnetic disk, an optical disk, a magneto-optical disk, or a semiconductor memory. In addition, the connectivity 1321 may include a device for outputting images and sounds (such as a monitor or a speaker).

The camera 1322 is a module having a function of capturing an image of a subject and obtaining image data of the subject. The image data captured by the imaging of the camera 1322 is supplied to, for example, the video processor 1332 and encoded.

The sensor 1323 is, for example, a module having an optional sensor function such as an audio sensor, an ultrasonic sensor, an optical sensor, an illuminance sensor, an infrared sensor, an image sensor, a rotational sensor, an angular sensor, an angular velocity sensor, a velocity sensor, an acceleration sensor, a tilt sensor, a magnetic identification sensor, an impact sensor, and a temperature sensor. Data detected by the sensor 1323 is, for example, supplied to the application processor 1331 and utilized by an application, or the like.

The configuration described above as a module may be achieved as a processor, or conversely, the configuration described as a processor may be achieved as a module.

In the video set 1300 configured as described above, the present technology is applicable to the video processor 1332 as described later. Accordingly, the video set 1300 may be implemented as a set to which the present technology is applied.

(Configuration Example of Video Processor)

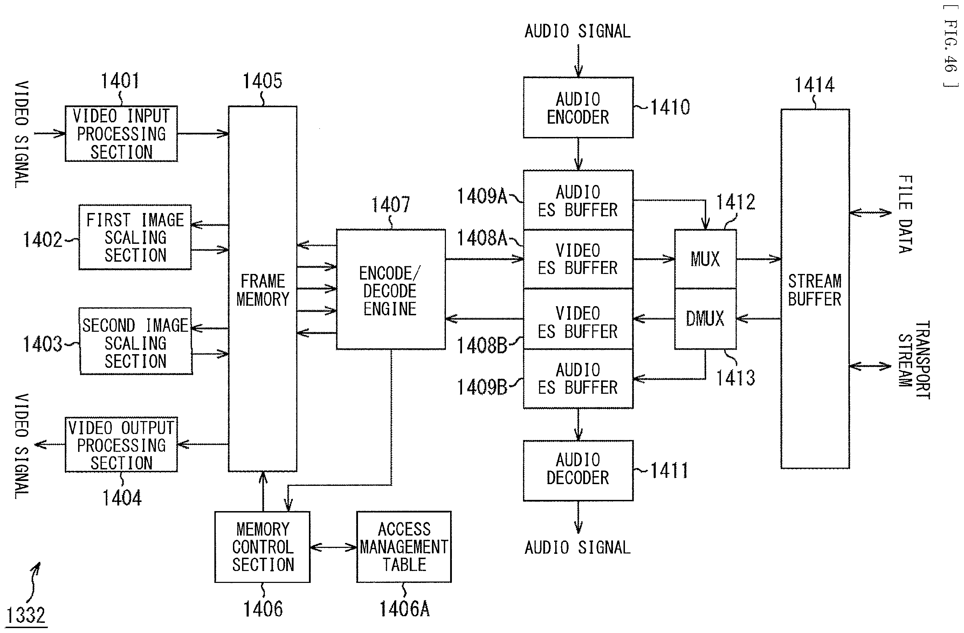

FIG. 46 illustrates an example of a schematic configuration of the video processor 1332 (FIG. 45) to which the present technology is applied.

In the case of the example of FIG. 46, the video processor 1332 has a function of receiving inputs of video signals and audio signals and encoding the video signals and audio signals in a predetermined manner, and a function of decoding the encoded video data and audio data and reproducing and outputting the video signals and the audio signals.

As illustrated in FIG. 46, the video processor 1332 includes a video input processing section 1401, a first image scaling section 1402, a second image scaling section 1403, a video output processing section 1404, a frame memory 1405, and a memory control section 1406. In addition, the video processor 1332 includes an encode/decode engine 1407, a video ES (Elementary Stream) buffers 1408A and 1408B, and audio ES buffers1409A and 1409B. Further, the video processor 1332 includes an audio encoder 1410, an audio decoder 1411, a multiplexing section (MUX (Multiplexer)) 1412, a demultiplexing section (DMUX (Demultiplexer)) 1413, and a stream buffer 1414.

The video input processing section 1401 acquires video signals inputted from, for example, the connectivity 1321 (FIG. 45), etc., and converts the video signals to digital image data. The first image scaling section 1402 performs format conversion, an image enlargement/reduction processing, and the like of the image data. The second image scaling section 1403 performs image enlargement/reduction processing of the image data in accordance with a format in an output destination via the video output processing section 1404, and performs format conversion and image enlargement/reduction processing, etc. similar to those of the first image scaling section 1402. The video output processing section 1404 performs format conversion, conversion to an analog signal, or the like on the image data, and outputs the image data as reproduced video signals to, for example, the connectivity 1321.

The frame memory 1405 is a memory for image data shared by the video input processing section 1401, the first image scaling section 1402, the second image scaling section 1403, the video output processing section 1404, and the encode/decode engine 1407. The frame memory 1405 is achieved, for example, as a semiconductor memory such as a DRAM

The memory control section 1406 receives synchronization signals from the encode/decode engine 1407, and controls writing/reading access to the frame memory 1405 in accordance with an access schedule to the frame memory 1405 written in an access management table 1406A. The access management table 1406 A is updated by the memory control section 1406 in accordance with processing executed by the encode/decode engine 1407, the first image scaling section 1402, the second image scaling section 1403, and the like.

The encode/decode engine 1407 performs encoding processing of image data and decoding processing of a video stream which is data obtained by encoding image data. For example, the encode/decode engine 1407 encodes the image data read out from the frame memory 1405 and sequentially writes the encoded image data to the video ES buffer 1408A as a video stream. In addition, for example, the video stream is sequentially read out from the video ES buffer 1408B, decoded, and sequentially written into the frame memory 1405 as image data. The encode/decode engine 1407 uses the frame memory 1405 as a working area in these encoding and decoding. Further, the encode/decode engine 1407 outputs synchronization signals to the memory control section 1406, for example, at a timing at which processing for each macroblock is started.

The video ES buffer 1408 A buffers a video stream generated by the encode/decode engine 1407 and supplies the video stream to the multiplexing section (MUX) 1412. The video ES buffer 1408B buffers a video stream supplied from the demultiplexing section (DMUX) 1413 and supplies the video stream to the encode/decode engine 1407.

The audio ES buffer 1409 A buffers an audio stream generated by the audio encoder 1410 and supplies the audio stream to the multiplexing section (MUX) 1412. The audio ES buffer 1409B buffers an audio stream supplied from the demultiplexing section (DMUX) 1413 and supplies the audio stream to the audio decoder 1411.

The audio encoder 1410 performs, for example, digital conversion of an audio signal inputted from the connectivity 1321, or the like, and encodes the audio signal by a predetermined method such as, for example, a MPEG audio method or an AC3 (AudioCode number 3) method. The audio encoder 1410 sequentially writes an audio stream, which is data obtained by encoding audio signals, into the audio ES buffer 1409A. The audio decoder 1411 decodes an audio stream supplied from the audio ES buffer 1409B, performs, for example, conversion, etc. to an analog signal, and supplies the decoded audio stream as a reproduced audio signal to, for example, the connectivity 1321, etc.

The multiplexing section (MUX) 1412 multiplexes a video stream and an audio stream. The method of the multiplexing (i.e., format of a bitstream generated by multiplexing) is optional. In addition, in this multiplexing, the multiplexing section (MUX) 1412 is also able to add predetermined header information, or the like to the bitstream. That is, the multiplexing section (MUX) 1412 is able to convert the format of the stream by multiplexing. For example, the multiplexing section (MUX) 1412 multiplexes the video stream and the audio stream to thereby convert the video stream and the audio stream to a transport stream which is a bitstream in a format for transmission. In addition, for example, the multiplexing section (MUX) 1412 multiplexes the video stream and the audio stream to convert data (file data) in a file format for recording.

The demultiplexing section (DMUX) 1413 demultiplexes the bitstream in which the video stream and the audio stream are multiplexed in a method corresponding to the multiplexing by the multiplexing section (MUX) 1412. That is, the demultiplexing section (DMUX) 1413 extracts a video stream and an audio stream from the bitstream read out from the stream buffer 1414 (separates the video stream and the audio stream from each other). That is, the demultiplexing section (DMUX) 1413 is able to perform conversion of the format of the stream (inverse conversion of conversion by the multiplexing section (MUX) 1412) by demultiplexing. For example, the demultiplexing section (DMUX) 1413 is able to acquire, via a stream buffer 1414, and demultiplex the transport stream supplied, for example, from the connectivity 1321, the broadband modem 1333, or the like to thereby convert the demultiplexed transport stream to the video stream and the audio stream. For example, the demultiplexing section (DMUX) 1413 is able to acquire, via the stream buffer 1414, and demultiplex file data read out from various recording media by, for example, the connectivity 1321 to thereby convert the demultiplexed file data to the video stream and the audio stream.

The stream buffer 1414 buffers the bitstream. For example, the stream buffer 1414 buffers the transport stream supplied from the multiplexing section (MUX) 1412, and supplies the transport stream to, for example, the connectivity 1321, the broadband modem 1333, or the like at a predetermined timing or on the basis of a request, etc. from the outside.

In addition, for example, the stream buffer 1414 buffers the file data supplied from the multiplexing section (MUX) 1412, supplies the buffered file data to, for example, the connectivity 1321, or the like at a predetermined timing or on the basis of a request, etc. from the outside, and records the buffered file data in various recording media.

Further, the stream buffer 1414 buffers the transport stream acquired via, for example, the connectivity 1321, the broadband modem 1333, or the like, and supplies the transport stream to the demultiplexing section (DMUX) 1413 at a predetermined time or on the basis of a request from the outside, or the like.

In addition, the stream buffer 1414 buffers file data read out from various recording media in the connectivity 1321, etc., for example, and supplies the buffered file data to the demultiplexing section (DMUX) 1413 at a predetermined timing or on the basis of a request, etc. from the outside.

Next, description is given of an example of an operation of the video processor 1332 having such a configuration. For example, a video signal inputted from the connectivity 1321, or the like to the video processor 1332 is converted to digital image data of a predetermined system such as 4:2:2Y/Cb/Cr system in the video input processing section 1401, and the converted digital image data is sequentially written into the frame memory 1405. The digital image data is read out by the first image scaling section 1402 or the second image scaling section 1403; format conversion to a predetermined system such as 4:2:0Y/Cb/Cr system and enlargement/reduction processing are performed on the digital image data; and the digital image data is written into the frame memory 1405 again. The image data is encoded by the encode/decode engine 1407, and the encoded image data is written into the video ES buffer 1408A as a video stream.

In addition, audio signals inputted from the connectivity 1321, or the like to the video processor 1332 are encoded by the audio encoder 1410 and written as an audio stream into the audio ES buffer 1409A.

The video stream of the video ES buffer 1408 A and the audio stream of the audio ES buffer 1409A are read out by the multiplexing section (MUX) 1412, multiplexed, and converted to a transport stream, file data, or the like. The transport stream generated by the multiplexing section (MUX) 1412 is buffered in the stream buffer 1414, and then outputted to an external network via, for example, the connectivity 1321, the broadband modem 1333, and the like. In addition, the file data generated by the multiplexing section (MUX) 1412 is buffered by the stream buffer 1414, and then outputted to, for example, the connectivity 1321, and the like, and recorded in various recording media.

In addition, the transport stream inputted from the external network to the video processor 1332 via, for example, the connectivity 1321, the broadband modem 1333, and the like is buffered by the stream buffer 1414, and then demultiplexed by the demultiplexing section (DMUX) 1413. Further, for example, the file data read out from various recording media by the connectivity 1321, or the like and inputted to the video processor 1332 is buffered by the stream buffer 1414, and then demultiplexed by the demultiplexing section (DMUX) 1413. That is, the transport stream or file data inputted to the video processor 1332 is separated into a video stream and an audio stream by the demultiplexing section (DMUX) 1413.

The audio stream is supplied to the audio decoder 1411 via the audio ES buffer 1409B and decoded to reproduce audio signals. In addition, after the video stream is written into the video ES buffer 1408B, the video stream is sequentially read out by the encode/decode engine 1407, decoded, and written into the frame memory 1405. The decoded image data is subjected to enlargement/reduction processing by the second image scaling section 1403, and the image data is written into the frame memory 1405. Then, the decoded image data is read out by the video output processing section 1404; format conversion of the decoded image data is performed to a predetermined system such as 4:2:2Y/Cb/Cr system; further, conversion is performed to an analog signal; and a video signal is reproduced and outputted.

In a case where the present technology is applied to the video processor 1332 configured as described above, it is sufficient to apply the present technology according to the foregoing embodiments to the encode/decode engine 1407. That is, for example, the encode/decode engine 1407 may have functions of the image encoder 100 described above or the functions of the image decoder 200 described above, or may have both of the functions. Such a configuration enables the video processor 1332 to achieve effects similar to those of the foregoing embodiments.

It is to be noted that, in the encode/decode engine 1407, the present technology (i.e., the functions of the image encoder 100 or the functions of the image decoder 200, or both of the functions) may be achieved by hardware such as logical circuits or software such as incorporated programs, or may be achieved by both of them.

(Another Configuration Example of Video Processor)

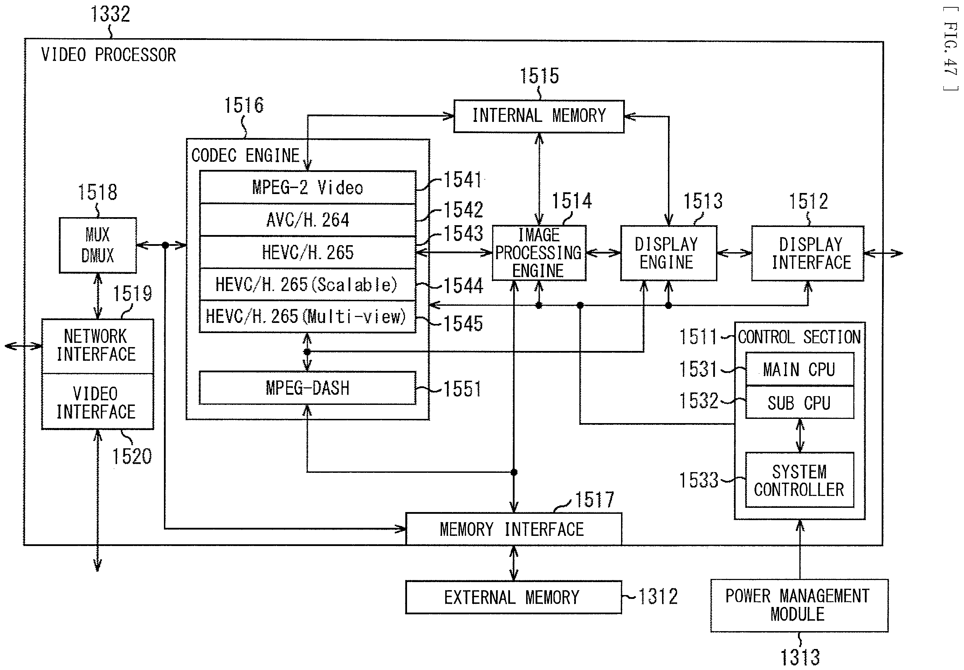

FIG. 47 illustrates another example of a schematic configuration of the video processor 1332 to which the present technique is applied. In the case of the example of FIG. 47, the video processor 1332 has functions of encoding and decoding video data in a predetermined system.

More specifically, as illustrated in FIG. 47, the video processor 1332 includes a control section 1511, a display interface 1512, a display engine 1513, an image processing engine 1514, and an internal memory 1515. In addition, the video processor 1332 includes a codec engine 1516, a memory interface 1517, a multiplexing/demultiplexing section (MUX DMUX) 1518, a network interface 1519, and a video interface 1520.

The control section 1511 controls operations of the respective processing sections in the video processor 1332, such as the display interface 1512, the display engine 1513, the image processing engine 1514, and the codec engine 1516.

As illustrated in FIG. 47, the control section 1511 includes, for example, a main CPU 1531, a sub CPU 1532, and a system controller 1533. The main CPU 1531 executes programs and the like for controlling the operations of the respective processing sections in the video processor 1332. The main CPU 1531 generates a control signal in accordance with the programs, etc., and supplies the control signal to the respective processing sections (i.e., controls the operations of the respective processing sections). The sub CPU 1532 serves an auxiliary role to the main CPU 1531. For example, the sub CPU 1532 executes child processing such as a program executed by the main CPU 1531, a sub routine, and the like. The system controller 1533 controls operations of the main CPU 1531 and the sub CPU 1532, such as designating programs to be executed by the main CPU 1531 and the sub CPU 1532.

The display interface 1512 outputs image data to, for example, the connectivity 1321, and the like under the control of the control section 1511. For example, the display interface 1512 may convert the image data that is digital data to an analog signal, and outputs the converted analog signal to a monitor apparatus, or the like of the connectivity 1321, as a reproduced video signal or as it is as the image data that is the digital data.

Under the control of the control section 1511, the display engine 1513 performs various types of conversion processing such as format conversion, size conversion, and color gamut conversion on the image data to conform to hardware specifications of a monitor apparatus, or the like for displaying the image.

Under the control of the control section 1511, the image processing engine 1514 performs, for example, predetermined image processing, such as filtering processing for improving image quality, on the image data.

The internal memory 1515 is a memory provided inside the video processor 1332 and shared by the display engine 1513, the image processing engine 1514, and the codec engine 1516. The internal memory 1515 is utilized, for example, for exchanging data performed among the display engine 1513, the image processing engine 1514, and the codec engine 1516. For example, the internal memory 1515 stores data supplied from the display engine 1513, the image processing engine 1514, or the codec engine 1516, and supplies the data to the display engine 1513, the image processing engine 1514, or the codec engine 1516 as necessary (e.g., as required). The internal memory 1515 may be achieved by any storage device; however, the internal memory 1515 is typically utilized for storing a small amount of data such as block-by-block image data, parameters, and the like in many cases. Therefore, it is desirable to achieve the storage device by a semiconductor memory having a relatively small capacity (e.g., as compared with the external memory 1312) but a high response speed, such as an SRAM (Static Random Access Memory), for example.

The codec engine 1516 performs processing related to encoding and decoding of the image data. Encoding/decoding methods corresponding to the codec engine 1516 is optional, and the number thereof may be one or plural. For example, the codec engine 1516 may have codec functions of a plurality of encoding/decoding methods, and may encode image data or decode encoded data by a codec function selected from the codec functions.

In the example illustrated in FIG. 47, the codec engine 1516 includes, for example, MPEG-2 Video 1541, AVC/H.264 1542, HEVC/H.265 1543, HEVC/H.265 (Scalable) 1544, HEVC/H.265 (Multi-view) 1545, and MPEG-DASH 1551, as functional blocks of processing related to the codec.

The MPEG-2 Video 1541 is a functional block that encodes and decodes image data by an MPEG-2 method. The AVC/H.264 1542 is a functional block that encodes and decodes image data by an AVC method. The HEVC/H.265 1543 is a functional block that encodes and decodes image data by an HEVC method. The HEVC/H.265 (Scalable) 1544 is a functional block that performs scalable encoding or scalable decoding of image data by the HEVC method. The HEVC/H.265 (Multi-view) 1545 is a functional block that performs multi-view encoding or multi-view decoding of image data by the HEVC method.

The MPEG-DASH 1551 is a functional block that transmits and receives image data by a MPEG-DASH (MPEG-Dynamic Adaptive Streaming over HTTP) method. The MPEG-DASH is a technique for streaming videos using HTTP (HyperText Transfer Protocol) and is characterized in that appropriate encoded data is selected and transmitted on a segment-by-segment basis from a plurality of pieces of encoded data having different resolutions, or the like prepared in advance. The MPEG-DASH 1551 generates a stream conforming to the standard, performs transmission control, etc. of the stream, and utilizes the above-described MPEG-2 Video 1541 or HEVC/H.265 (Multi-view) 1545 for encoding and decoding of image data.

The memory interface 1517 is an interface for the external memory 1312. Data supplied from the image processing engine 1514 or the codec engine 1516 is supplied to the external memory 1312 via the memory interface 1517. In addition, the data read out from the external memory 1312 is supplied to the video processor 1332 (the image processing engine 1514 or the codec engine 1516) via the memory interface 1517.

The multiplexing/demultiplexing section (MUX DMUX) 1518 performs multiplexing and demultiplexing of various types of data related to images, such as bitstream of encoded data, image data, video signals, and the like. This multiplexing/demultiplexing method is optional. For example, at the time of multiplexing, the multiplexing/demultiplexing section (MUX DMUX) 1518 is able to not only aggregate a plurality of pieces of data into one, but also add predetermined header information, or the like to the data. In addition, in demultiplexing, the multiplexing/demultiplexing section (MUX DMUX) 1518 is able to not only divide one data into a plurality of pieces of data, but also add a predetermined header information, etc. to each divided piece of data. That is, the multiplexing/demultiplexing section (MUX DMUX) 1518 is able to perform conversion of data format by multiplexing/demultiplexing. For example, the multiplexing/demultiplexing section (MUX DMUX) 1518 is able to multiplex the bit stream to thereby perform conversion to a transport stream which is a bit stream of a format for transmission or data (file data) of a file format for recording. Needless to say, it is also possible to perform inverse conversion using inverse multiplexing.

The network interface 1519 is, for example, an interface for the broadband modem 1333, the connectivity 1321, and the like. The video interface 1520 is, for example, an interface for the connectivity 1321, the camera 1322, or the like.

Next, description is given of examples of operations of the video processor 1332. For example, when a transport stream is received from an external network via the connectivity 1321, the broadband modem 1333, or the like, the transport stream is supplied to the multiplexing/demultiplexing section (MUX DMUX) 1518 via the network interface 1519, demultiplexed, and decoded by the codec engine 1516. The image data obtained by decoding the codec engine 1516 is subjected to predetermined image processing by, for example, the image processing engine 1514, subjected to predetermined conversion by the display engine 1513, and supplied to, for example, the connectivity 1321, or the like via the display interface 1512, and the image is displayed on the monitor. In addition, for example, image data obtained through decoding by the codec engine 1516 is re-encoded by the codec engine 1516, multiplexed by the multiplexing/demultiplexing section (MUX DMUX) 1518, converted to file data, outputted to, for example, the connectivity 1321, or the like via the video interface 1520, and recorded in various recording media.

Further, for example, file data that is encoded data with image data being encoded, which is read out from an unillustrated recording medium by the connectivity 1321, or the like, is supplied to the multiplexing/demultiplexing section (MUX DMUX) 1518 via the video interface 1520, demultiplexed, and decoded by the codec engine 1516. The image data obtained by decoding the codec engine 1516 is subjected to predetermined image processing by the image processing engine 1514, subjected to predetermined conversion by the display engine 1513, and supplied to, for example, the connectivity 1321, or the like via the display interface 1512, and the image is displayed on the monitor. In addition, for example, image data obtained through decoding by the codec engine 1516 is re-encoded by the codec engine 1516, multiplexed by the multiplexing/demultiplexing section (MUX DMUX) 1518, converted to a transport stream, supplied to, for example, the connectivity 1321, the broadband modem 1333, or the like via the network interface 1519, and transmitted to unillustrated another apparatus.

It is to be noted that the image data and other data are exchanged between the respective processing sections in the video processor 1332 by utilizing, for example, the internal memory 1515 and the external memory 1312. In addition, the power management module 1313 controls, for example, supply of power to the control section 1511.

In a case where the present technology is applied to the video processor 1332 configured as described above, it is sufficient for the present technology according to the foregoing embodiments to be applied to the codec engine 1516. That is, for example, it is sufficient for the codec engine 1516 to have the functions of the image encoder 100 or the function of the image decoder 200 described above, or to have both of them. Such a configuration enables the video processor 1332 to achieve effects similar to those of the foregoing embodiments.

It is to be noted that, in the codec engine 1516, the present technology (i.e., the functions of the image encoder 100) may be achieved by hardware such as logical circuits, software such as incorporated programs, or may be achieved by both of them.

Although two examples of the configuration of the video processor 1332 have been given above, the configuration of the video processor 1332 is optional and may be other than the two examples described above. In addition, the video processor 1332 may be configured as one semiconductor chip, or may be configured as a plurality of semiconductor chips. For example, a three-dimensionally stacked LSI may be adopted, in which a plurality of semiconductors are stacked. Further, the video processor 1332 may be achieved by a plurality of LSIs.

(Example of Application to Apparatus)

The video set 1300 may be incorporated into various apparatuses that process image data. For example, the video set 1300 may be incorporated into the television apparatus 900 (FIG. 41), the mobile phone 920 (FIG. 42), the recording reproduction apparatus 940 (FIG. 43), the imaging apparatus 960 (FIG. 44), etc. Incorporating the video set 1300 enables the apparatus to achieve effects similar to those of the foregoing embodiments.

It is to be noted that even a portion of the components of the video set 1300 described above is able to be implemented as a configuration to which the present technology is applied, as long as the video processor 1332 is included. For example, only the video processor 1332 is able to be implemented as a video processor to which the present technology is applied. Further, for example, the processors indicated by the dotted line 1341, the video module 1311, and the like, as described above, are able to be implemented as the processor, modules, and the like to which the present technology is applied. Further, for example, the video module 1311, the external memory 1312, the power management module 1313, and the front end module 1314 are able to be combined, and implemented as the video unit 1361 to which the present technology is applied. In either case of the configurations, it is possible to achieve effects similar to those of the foregoing embodiments.

That is, it is possible to incorporate any configuration including the video processor 1332 into various apparatuses that process image data, similarly to the case of the video set 1300. For example, it is possible to incorporate the video processor 1332, the processor indicated by the dotted line 1341, the video module 1311, or the video unit 1361 into the television apparatus 900 (FIG. 41), the mobile phone 920 (FIG. 42), the recording reproduction apparatus 940 (FIG. 43), the imaging apparatus 960 (FIG. 44), etc. Incorporating any of the configurations to which the present technology is applied enables the apparatus to achieve effects similar to those of the foregoing embodiments, similarly to the case of the video set 1300.

<Network System>

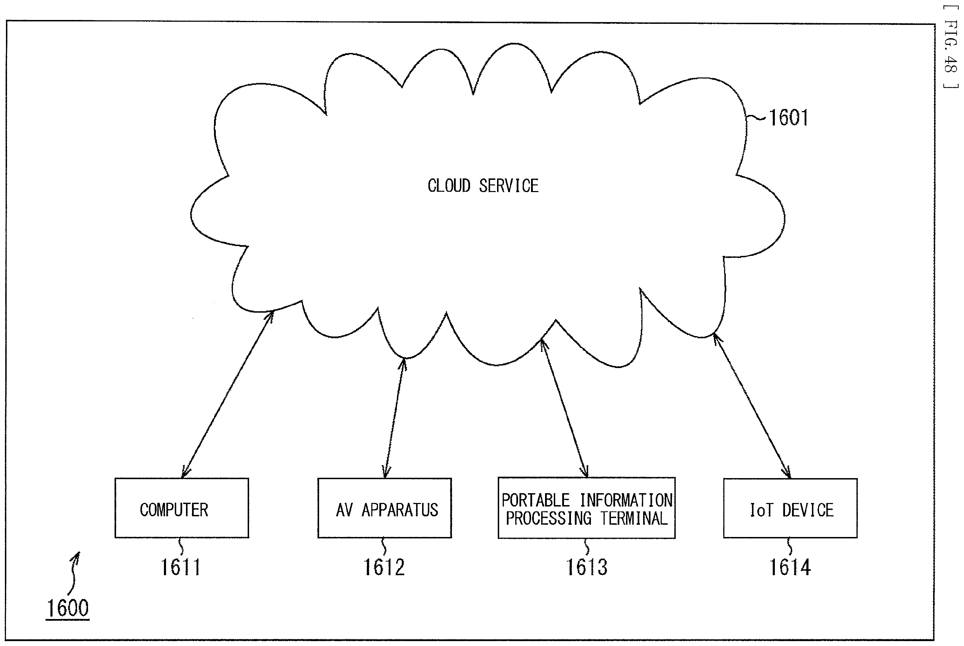

In addition, the present technology is also applicable to a network system configured by a plurality of apparatuses. FIG. 48 illustrates an example of a schematic configuration of a network system to which the present technology is applied.

A network system 1600 illustrated in FIG. 48 is a system in which apparatuses exchange information regarding images (moving images) via a network. A cloud service 1601 of the network system 1600 is a system that provides a service related to images (moving images) to terminals such as a computer 1611, an AV (Audio Visual) apparatus 1612, a portable information processing terminal 1613, and an IoT (Internet of Things) device 1614 that are communicably coupled to the cloud service 1601. For example, the cloud service 1601 provides the terminal with a service for supplying contents of images (moving images), such as so-called moving image distribution (on-demand or live distribution). Further, for example, the cloud service 1601 provides a back-up service for receiving and storing contents of images (moving images) from the terminal. In addition, for example, the cloud service 1601 provides a service for mediating exchange of contents of images (moving images) between terminals.

The physical configuration of the cloud service 1601 is optional. For example, the cloud service 1601 may include various servers such as a server that stores and manages moving images, a server that distributes moving images to terminals, a server that acquires moving images from terminals, a server that manages users (terminals) and billing, and any network such as the Internet and LANs.

The computer 1611 is configured by, for example, an information processor such as a personal computer, a server, or a workstation. The AV apparatus 1612 is configured by, for example, an image processor such as a television receiver, a hard disk recorder, a gaming machine, or a camera. The portable information processing terminal 1613 is configured by, for example, a portable information processor such as a notebook personal computer, a tablet terminal, a mobile phone, or a smartphone. The IoT device 1614 is configured by any object that processes images, such as a machine, a home appliance, furniture, others, an IC tag, or a card-type device. Each of these terminals has a communication function, and is able to be coupled to the cloud service 1601 (establish a session) and to exchange information with the cloud service 1601 (i.e., perform communication). In addition, each terminal is also able to communicate with other terminals. Communication between terminals may be performed via the cloud service 1601, or may be performed without the cloud service 1601.

When exchanging data of images (moving images) between terminals or between a terminal and the cloud service 1601 by applying the present technology to the network system 1600 as described above, the image data may be encoded and decoded as described above in the respective embodiments. That is, the terminal (the computer 1611 to the IoT device 1614) and the cloud service 1601 may each have the functions of the image encoder 100 or the image decoder 200 described above. Such a configuration enables the terminal (the computer 1611 to the IoT device 1614) and the cloud service 1601 that exchange image data to achieve effects similar to those of the foregoing embodiments.

It is to be noted that various types of information related to the encoded data (bitstream) may be transmitted or recorded in a multiplexed manner to the encoded data, or may be transmitted or recorded as separate pieces of data associated with the encoded data without being multiplexed to the encoded data. As used herein, the term "associate" means, for example, that one data may be utilized (may be linked) when processing the other data. In other words, the pieces of data associated with each other may be grouped together as one data, or may be separate pieces of data. For example, information associated with encoded data (image) may be transmitted on a transmission path different from that of the encoded data (image). Further, for example, the information associated with the encoded data (image) may be recorded in a recording medium different from that for the encoded data (image) (or in another recording area of the same recording medium). It is to be noted that this "association" may be performed for a portion of the data instead of the entire data. For example, an image and information corresponding to the image may be associated with each other in an optional unit such as a plurality of frames, one frame, or a portion within the frame.

In addition, as described above, in the present specification, the terms "combine", "multiplex", "add", "integrate", "include", "store", "implant", "interlay", "insert", and the like mean that a plurality of items are combined into one item, for example, encoded data and metadata are combined into one data, and mean one method of the term "associate" described above.

It is to be noted that the effects described in the present specification are merely illustrative and not limiting, and other effects may be provided.

In addition, the embodiment of the present technology is not limited to the foregoing embodiments, and various modifications are possible within a range not departing from the gist of the present technology.

It is to be noted that, the present technology may have the following configurations.

<1> An image processor including a prediction section that generates a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.

<2> The image processor according to <1>, in which the motion compensation mode is selected from the plurality of motion compensation modes having a different number of parameters used for the motion compensation.

<3> The image processor according to <2>, in which the motion compensation mode is selected from the motion compensation modes having a smaller number of the parameters as the POC distance is shorter.

<4> The image processor according to any one of <1> to <3>, in which the motion compensation mode is selected from a translation mode, a complete affine transformation mode, a simple affine transformation mode, a translation rotation mode, and a translation scaling mode, the translation mode performing the motion compensation by translational movement, the complete affine transformation mode performing the motion compensation by affine transformation based on three motion vectors, the simple affine transformation mode performing the motion compensation by the affine transformation based on two motion vectors, the translation rotation mode performing the motion compensation by the translational movement and rotation, the translation scaling mode performing the motion compensation by the translational movement and scaling.

<5> The image processor according to <4>, in which the prediction section performs, in the translation mode, the motion compensation on the reference image on a basis of one motion vector.

<6> The image processor according to <4> or <5>, in which the prediction section performs, in the complete affine transformation mode, the motion compensation by performing the affine transformation based on three motion vectors on the reference image.

<7> The image processor according to any one of <4> to <6>, in which the prediction section performs, in the simple affine transformation mode, the motion compensation by performing the affine transformation based on two motion vectors on the reference image.

<8> The image processor according to any one of <4> to <7>, in which the prediction section performs, in the translation rotation mode, the motion compensation on the reference image on a basis of the one motion vector and a rotation angle.

<9> The image processor according to any one of <4> to <7>, in which the prediction section performs, in the translation rotation mode, the motion compensation on the reference image on a basis of the one motion vector and a difference in a vertical direction between the one motion vector and another motion vector.

<10> The image processor according to any one of <4> to <9>, in which the prediction section performs, in the translation scaling mode, the motion compensation on the reference image on a basis of the one motion vector and a scaling rate.

<11> The image processor according to any one of <4> to <9>, in which the prediction section performs, in the translation scaling mode, the motion compensation on the reference image on a basis of the one motion vector and a difference in a horizontal direction between the one motion vector and another motion vector.

<12> The image processor according to any one of <1> to <11>, in which the prediction section performs the motion compensation in accordance with the POC distance and motion compensation mode information that is set in accordance with the POC distance, the motion compensation mode information representing the motion compensation mode.

<13> The image processor according to <12>, further including a setting section that sets, as the motion compensation mode information, a flag having a smaller number of bits as the POC distance is shorter.

<14> An image processing method including causing an image processor to generate a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.

<15> An image processor including a prediction section that generates a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

<16> The image processor according to <15>, in which the block is divided into a plurality of the unit blocks each sized in accordance with the POC distance.

<17> The image processor according to <16>, in which the block is divided into the plurality of the unit blocks each having a larger size as the POC distance is shorter.

<18> The image processor according to any one of <15> to <17>, in which the prediction section performs motion compensation based on a plurality of motion vectors by

determining a motion vector of the unit block from the plurality of motion vectors, and
translationally moving the reference unit block corresponding to the unit block on a basis of the motion vector of the unit block.

<19> The image processor according to any one of <15> to <18>, in which the prediction section divides the block into a plurality of the unit blocks in accordance with the POC distance.

<20> An image processing method including causing an image processor to generate a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

[Reference Numerals List]

| | |
|---|---|
| 100 | image encoder |
| 101 | control section |
| 119 | prediction section |
| 200 | image decoder |
| 216 | prediction section |

**Claims**

1. An image processor comprising a prediction section that generates a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.

2. The image processor according to claim 1, wherein the motion compensation mode is selected from the plurality of motion compensation modes having a different number of parameters used for the motion compensation.

3. The image processor according to claim 2, wherein the motion compensation mode is selected from the motion compensation modes having a smaller number of the parameters as the POC distance is shorter.

4. The image processor according to claim 3, wherein the motion compensation mode is selected from a translation mode, a complete affine transformation mode, a simple affine transformation mode, a translation rotation mode, and a translation scaling mode, the translation mode performing the motion compensation by translational movement, the complete affine transformation mode performing the motion compensation by affine transformation based on three motion vectors, the simple affine transformation mode performing the motion compensation by the affine transformation based on two motion vectors, the translation rotation mode performing the motion compensation by the translational movement and rotation, the translation scaling mode performing the motion compensation by the translational movement and scaling.

5. The image processor according to claim 4, wherein the prediction section performs, in the translation mode, the motion compensation on the reference image on a basis of one motion vector.

6. The image processor according to claim 4, wherein the prediction section performs, in the complete affine transformation mode, the motion compensation by performing the affine transformation based on three motion vectors on the reference image.

7. The image processor according to claim 4, wherein the prediction section performs, in the simple affine transformation mode, the motion compensation by performing the affine transformation based on two motion vectors on the reference image.

8. The image processor according to claim 4, wherein the prediction section performs, in the translation rotation mode, the motion compensation on the reference image on a basis of one motion vector and a rotation angle.

9. The image processor according to claim 4, wherein the prediction section performs, in the translation rotation mode, the motion compensation on the reference image on a basis of one motion vector and a difference in a vertical direction between the one motion vector and another motion vector.

10. The image processor according to claim 4, wherein the prediction section performs, in the translation scaling mode, the motion compensation on the reference image on a basis of one motion vector and a scaling rate.

11. The image processor according to claim 4, wherein the prediction section performs, in the translation scaling mode, the motion compensation on the reference image on a basis of one motion vector and a difference in a horizontal direction between the one motion vector and another motion vector.

**12.** The image processor according to claim 1, wherein the prediction section performs the motion compensation in accordance with the POC distance and motion compensation mode information that is set in accordance with the POC distance, the motion compensation mode information representing the motion compensation mode.

**13.** The image processor according to claim 12, further comprising a setting section that sets, as the motion compensation mode information, a flag having a smaller number of bits as the POC distance is shorter.

**14.** An image processing method comprising causing an image processor to generate a predicted image of a block to be processed by performing motion compensation in a motion compensation mode selected from a plurality of motion compensation modes in accordance with a POC (Picture Order Count) distance which is a distance between POC of the block and POC of a reference image used for generation of the predicted image of the block.

**15.** An image processor comprising a prediction section that generates a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

**16.** The image processor according to claim 15, wherein the block is divided into a plurality of the unit blocks each sized in accordance with the POC distance.

**17.** The image processor according to claim 16, wherein the block is divided into the plurality of the unit blocks each having a larger size as the POC distance is shorter.

**18.** The image processor according to claim 15, wherein the prediction section performs motion compensation based on a plurality of motion vectors by

determining a motion vector of the unit block from the plurality of motion vectors, and
translationally moving the reference unit block corresponding to the unit block on a basis of the motion vector of the unit block.

**19.** The image processor according to claim 15, wherein the prediction section divides the block into a plurality of the unit blocks in accordance with the POC distance.

**20.** An image processing method comprising causing an image processor to generate a predicted image of a block to be processed in a unit of a unit block by translationally moving a reference unit block of a reference image corresponding to the unit block, the unit block being obtained by dividing the block in accordance with a POC (Picture Order Count) distance which is a distance between POC of the block and POC of the reference image used for generation of the predicted image of the block.

[ FIG. 1 ]

EP 3 675 490 A1

[ FIG. 2 ]

46

[ FIG. 3 ]

[ FIG. 4 ]

[ FIG.5 ]

[ FIG.6 ]

[ FIG. 7 ]

[ FIG. 8 ]

[ FIG. 9 ]

[ FIG. 10 ]

[ FIG. 11 ]

[ FIG. 12 ]

[ FIG. 13 ]

[ FIG. 14 ]

EP 3 675 490 A1

A

PICTURE TO BE PROCESSED

$V_0$

31

p(N−3)  p(N−2)  p(N−1)  p(N)  p(N+1)

DISPLAY ORDER

B

PICTURE TO BE PROCESSED

31

$V_0$  $V_2$

$V_1$

p(N−3)  p(N−2)  p(N−1)  p(N)  p(N+1)

DISPLAY ORDER

[ FIG. 15 ]

EP 3 675 490 A1

| MOTION COMPENSATION MODE | POC DISTANCE = 1 | POC DISTANCE = 2 | POC DISTANCE = 3 | POC DISTANCE >= 4 |
|---|---|---|---|---|
| TRANSLATION MODE | 1 | 1 | 1 | 1 |
| TRANSLATION ROTATION MODE | 0 | 1 | 1 | 1 |
| TRANSLATION SCALING MODE | 0 | 1 | 1 | 1 |
| SIMPLE AFFINE TRANSFORMATION MODE | 0 | 0 | 1 | 1 |
| COMPLETE AFFINE TRANSFORMATION MODE | 0 | 0 | 0 | 1 |

[ FIG. 16 ]

EP 3 675 490 A1

| MOTION COMPENSATION MODE | MOTION COMPENSATION MODE INFORMATION | | | | PARAMETER INFORMATION |
| --- | --- | --- | --- | --- | --- |
| | POC DISTANCE = 1 | POC DISTANCE = 2 | POC DISTANCE = 3 | POC DISTANCE = 4 | |
| TRANSLATION MODE | NONE (0 BIT) | 1 | 1 | 1 | refidx0, mvd0 |
| TRANSLATION ROTATION MODE | — | 01 | 01 | 01 | refidx0, mvd0 refidx1, dr |
| TRANSLATION SCALING MODE | — | 00 | 001 | 001 | refidx0, mvd0 refidx1, ds |
| SIMPLE AFFINE TRANSFORMATION MODE | — | — | 000 | 0001 | refidx0, mvd0 refidx1, mvd1 |
| COMPLETE AFFINE TRANSFORMATION MODE | — | — | — | 0000 | refidx0, mvd0 refidx1, mvd1 refidx2, mvd2 |

[ FIG. 17 ]

[ FIG. 18 ]

```
      ┌──────────────────────────────────┐
      │  START IMAGE ENCODING PROCESSING  │
      └──────────────────────────────────┘
                      │
                      ▼
      ┌──────────────────────────────────┐ S11
      │     SET ENCODING PARAMETERS      │
      └──────────────────────────────────┘
                      │
                      ▼
                   ╱ S12 ╲
             DOES MODE
          INFORMATION INDICATE        NO
          INTER-PREDICTION        ────────────┐
             PROCESSING?                       │
                  │                            ▼
                 YES                 ┌──────────────────┐ S16
                  │                  │     PERFORM      │
                  ▼                  │  INTRA-ENCODING  │
               ╱ S13 ╲              │   PROCESSING     │
            Merge flag=1?    NO      └──────────────────┘
                  │      ──────┐              │
                 YES          │              │
                  │           ▼              │
                  ▼     ┌──────────────┐ S15 │
      ┌──────────────┐  │ PERFORM AMVP  │    │
      │ PERFORM MERGE│  │    MODE       │    │
      │    MODE      │  │  ENCODING     │    │
      │  ENCODING    │  │ PROCESSING    │    │
      │ PROCESSING   │  └──────────────┘    │
      └──────────────┘ S14    │             │
             │                │             │
             ◄────────────────┴─────────────┘
             │
             ▼
         ┌────────┐
         │  END   │
         └────────┘
```

[ FIG. 19 ]

```
        ╭─────────────────────────────────╮
        │   START PROCESSING OF SETTING   │
        │ INTER-PREDICTION PROCESSING MODE │
        ╰─────────────────────────────────╯
                        │
                        ▼
     ┌───────────────────────────────────────────┐ S41
     │  SELECT CANDIDATES FOR MOTION COMPENSATION │
     │    MODE IN ACCORDANCE WITH POC DISTANCE    │
     └───────────────────────────────────────────┘
                        │
                        ▼
     ┌───────────────────────────────────────────┐ S42
     │ SELECT, AS MOTION COMPENSATION MODE, CANDIDATE MODE │
     │ WHICH HAS NOT YET BEEN SET AS MOTION COMPENSATION MODE │
     └───────────────────────────────────────────┘
                        │
                        ▼
     ┌───────────────────────────────────────────┐ S43
     │   PERFORM MERGE MODE ENCODING PROCESSING   │
     │            TO CALCULATE RD COST            │
     └───────────────────────────────────────────┘
                        │
                        ▼
     ┌───────────────────────────────────────────┐ S44
     │    PERFORM AMVP MODE ENCODING PROCESSING   │
     │            TO CALCULATE RD COST            │
     └───────────────────────────────────────────┘
                        │
                        ▼
              ╱─────────────────────╲  S45
             ╱     HAVE ALL           ╲
            ╱   CANDIDATE MODES BEEN    ╲  NO
            ╲ SELECTED AS MOTION COMPENSATION ╱──────┐
             ╲       MODE?              ╱           │
              ╲─────────────────────╱              │
                        │ YES                       │
                        ▼                           │
     ┌───────────────────────────────────────────┐ S46
     │ DETECT MINIMUM RD COST, FOR EACH OF CANDIDATE MODES, │
     │ AMONG RD COST OBTAINED BY MERGE MODE ENCODING │
     │ PROCESSING AND RD COST OBTAINED BY AMVP MODE │
     │ ENCODING PROCESSING                         │
     └───────────────────────────────────────────┘
                        │
                        ▼
              ╱─────────────────────╲  S47
             ╱        IS              ╲
            ╱   MINIMUM RD COST        ╲  NO
            ╲ RD COST OBTAINED BY MERGE MODE ╱──────┐
             ╲   ENCODING PROCESSING?  ╱           │
              ╲─────────────────────╱              │
                        │ YES                       │
                        ▼                           ▼  S49
              ┌──────────────┐ S48          ┌──────────────┐
              │ Merge flag=1 │              │ Merge flag=0 │
              └──────────────┘              └──────────────┘
                        │                           │
                        ▼◄──────────────────────────┘
     ┌───────────────────────────────────────────┐ S50
     │ SET MOTION COMPENSATION MODE INFORMATION REPRESENTING │
     │ CANDIDATE MODE IN WHICH MINIMUM RD COST IS OBTAINED │
     └───────────────────────────────────────────┘
                        │
                        ▼
                  ╭──────────╮
                  │   END    │
                  ╰──────────╯
```

EP 3 675 490 A1

[ FIG. 20 ]

**START MERGE MODE ENCODING PROCESSING**

S101 DETERMINE MOTION COMPENSATION MODE IN ACCORDANCE WITH POC DISTANCE AND MOTION COMPENSATION MODE INFORMATION

TRANSLATION MODE

COMPLETE AFFINE TRANSFORMATION MODE

SIMPLE AFFINE TRANSFORMATION MODE

TRANSLATION SCALING MODE

TRANSLATION ROTATION MODE

S102 DECIDE ONE PREDICTION VECTOR

S103 PERFORM MOTION COMPENSATION IN TRANSLATION MODE FOR REFERENCE IMAGE

S104 DECIDE THREE PREDICTION VECTORS

S105 PERFORM MOTION COMPENSATION IN COMPLETE AFFINE TRANSFORMATION MODE FOR REFERENCE IMAGE

S106 DECIDE TWO PREDICTION VECTORS

S107 PERFORM MOTION COMPENSATION IN SIMPLE AFFINE TRANSFORMATION MODE FOR REFERENCE IMAGE

S108 DECIDE ONE PREDICTION VECTOR AND PREDICTION ANGLE INFORMATION

S109 PERFORM MOTION COMPENSATION IN TRANSLATION ROTATION MODE FOR REFERENCE IMAGE

S110 DECIDE ONE PREDICTION VECTOR AND PREDICTION SCALING INFORMATION

S111 PERFORM MOTION COMPENSATION IN TRANSLATION SCALING MODE FOR REFERENCE IMAGE

PERFORM OPERATION OF DIFFERENCE BETWEEN IMAGE AND PREDICTED IMAGE S112

PERFORM ORTHOGONAL TRANSFORMATION S113

PERFORM QUANTIZATION S114

PERFORM INVERSE QUANTIZATION S115

PERFORM INVERSE ORTHOGONAL TRANSFORMATION S116

PERFORM ADDITION TO PREDICTED IMAGE S117

PERFORM STORING S118

PERFORM ENCODING S119

**END**

[ FIG. 21 ]

START AMVP ENCODING PROCESSING

DETERMINE MOTION COMPENSATION MODE IN ACCORDANCE WITH POC DISTANCE AND MOTION COMPENSATION MODE INFORMATION  S131

TRANSLATION MODE

COMPLETE AFFINE TRANSFORMATION MODE

SIMPLE AFFINE TRANSFORMATION MODE

TRANSLATION SCALING MODE

TRANSLATION ROTATION MODE

DECIDE ONE PREDICTION VECTOR  S132

CALCULATE ONE MOTION VECTOR  S133

PERFORM MOTION COMPENSATION IN TRANSLATION MODE FOR REFERENCE IMAGE  S134

DECIDE THREE PREDICTION VECTORS  S135

CALCULATE THREE MOTION VECTORS  S136

PERFORM MOTION COMPENSATION IN COMPLETE AFFINE TRANSFORMATION MODE FOR REFERENCE IMAGE  S137

DECIDE TWO PREDICTION VECTORS  S138

CALCULATE TWO MOTION VECTORS  S139

PERFORM MOTION COMPENSATION IN SIMPLE AFFINE TRANSFORMATION MODE FOR REFERENCE IMAGE  S140

DECIDE ONE PREDICTION VECTOR AND PREDICTION ANGLE INFORMATION  S141

CALCULATE ONE MOTION VECTOR AND ANGLE INFORMATION  S142

PERFORM MOTION COMPENSATION IN TRANSLATION ROTATION MODE FOR REFERENCE IMAGE  S143

DECIDE ONE PREDICTION VECTOR AND PREDICTION SCALING INFORMATION  S144

CALCULATE ONE MOTION VECTOR AND SCALING INFORMATION  S145

PERFORM MOTION COMPENSATION IN TRANSLATION SCALING MODE FOR REFERENCE IMAGE  S146

PERFORM OPERATION OF DIFFERENCE BETWEEN IMAGE AND PREDICTED IMAGE  S147

PERFORM ORTHOGONAL TRANSFORMATION  S148

PERFORM QUANTIZATION  S149

PERFORM INVERSE QUANTIZATION  S150

PERFORM INVERSE ORTHOGONAL TRANSFORMATION  S151

PERFORM ADDITION TO PREDICTED IMAGE  S152

PERFORM STORING  S153

PERFORM ENCODING  S154

END

[ FIG. 22 ]

EP 3 675 490 A1

IMAGE DECODER
200

[ FIG.23 ]

```
        ┌─────────────────────────────────────────┐
        │    START IMAGE DECODING PROCESSING       │
        └─────────────────────────────────────────┘
                         │
                         ▼
              ┌──────────────────┐  S201
              │ PERFORM          │
              │ DECODING         │
              └──────────────────┘
                         │
                         ▼
              ┌──────────────────┐  S202
              │    SET CU        │
              └──────────────────┘
                         │
                         ▼
                   S203
            ◇ DOES MODE
              INFORMATION INDICATE       NO
              INTER-PREDICTION  ───────────────┐
              PROCESSING? ◇                     │
                         │                      ▼
                        YES          ┌──────────────────┐  S207
                         │           │ PERFORM          │
                         ▼           │ INTRA-DECODING   │
                   S204              │ PROCESSING       │
            ◇ Merge flag=1? ◇        └──────────────────┘
                         │  NO               │
                        YES  ──────────┐     │
                         │             ▼     │
                         ▼        S206       │
              ┌──────────────┐  ┌──────────────┐
              │ MERGE MODE   │  │ AMVP MODE    │
              │ DECODING     │  │ DECODING     │
              │ PROCESSING   │  │ PROCESSING   │
              └──────────────┘  └──────────────┘
                  S205              │
                         │         │
                         ▼◄────────┘
                    ┌─────────┐
                    │   END   │
                    └─────────┘
```

[ FIG. 24 ]

EP 3 675 490 A1

**MOTION COMPENSATION MODE INFORMATION DECODING PROCESSING**

POS DISTANCE == 1?  —S211— YES

NO

POC DISTANCE == 2?  —S212— YES → DECODE 1-bit FLAG OR 2-bit FLAG AS MOTION COMPENSATION MODE INFORMATION  S213

NO

POC DISTANCE == 3?  —S214— YES → DECODE 1-bit FLAG, 2-bit FLAG, OR 3-bit FLAG AS MOTION COMPENSATION MODE INFORMATION  S215

NO

DECODE 1-bit FLAG, 2-bit FLAG, 3-bit FLAG, OR 4-bit FLAG AS MOTION COMPENSATION MODE INFORMATION  S216

END

[ FIG. 25 ]

[ FIG. 26 ]

START AMVP MODE DECODING PROCESSING

PERFORM INVERSE QUANTIZATION | S231

PERFORM INVERSE TRANSFORMATION PROCESSING | S232

S253
DETERMINE MOTION COMPENSATION MODE IN ACCORDANCE WITH POC DISTANCE AND MOTION COMPENSATION MODE INFORMATION

TRANSLATION MODE

COMPLETE AFFINE TRANSFORMATION MODE

SIMPLE AFFINE TRANSFORMATION MODE

TRANSLATION SCALING MODE

TRANSLATION ROTATION MODE

S254
DECIDE ONE PREDICTION VECTOR

S255
CALCULATE ONE MOTION VECTOR

S256
PERFORM MOTION COMPENSATION IN TRANSLATION MODE FOR REFERENCE IMAGE

S257
DECIDE THREE PREDICTION VECTORS

S258
CALCULATE THREE MOTION VECTORS

S259
PERFORM MOTION COMPENSATION IN COMPLETE AFFINE TRANSFORMATION MODE FOR REFERENCE IMAGE

S260
DECIDE TWO PREDICTION VECTORS

S261
CALCULATE TWO MOTION VECTORS

S262
PERFORM MOTION COMPENSATION IN SIMPLE AFFINE TRANSFORMATION MODE FOR REFERENCE IMAGE

S263
DECIDE ONE PREDICTION VECTOR AND PREDICTION ANGLE INFORMATION

S264
CALCULATE ONE MOTION VECTOR AND ANGLE INFORMATION

S265
PERFORM MOTION COMPENSATION IN TRANSLATION ROTATION MODE FOR REFERENCE IMAGE

S266
DECIDE ONE PREDICTION VECTOR AND PREDICTION SCALING INFORMATION

S267
CALCULATE ONE MOTION VECTOR AND SCALING INFORMATION

S268
PERFORM MOTION COMPENSATION IN TRANSLATION SCALING MODE FOR REFERENCE IMAGE

PERFORM ADDITION TO PREDICTED IMAGE | S269

PERFORM STORING | S270

END

70

[ FIG. 27 ]

p11                    hp11

[ FIG. 28 ]

[ FIG. 29 ]

[ FIG. 30 ]

[ FIG. 31 ]

[ FIG. 32 ]

[ FIG. 33 ]

EP 3 675 490 A1

[ FIG. 34 ]

[ FIG. 35 ]

[ FIG. 36 ]

| UNIT BLOCK SIZE | POC DISTANCE = 1 | POC DISTANCE = 2 | POC DISTANCE = 3 | POC DISTANCE >= 4 |
|---|---|---|---|---|
| | 4×4 PIXELS | 2×2 PIXELS | 2×2 PIXELS | 1×1 PIXEL |

[ FIG. 37 ]

```
        ( AUDIO REPRODUCTION )
                   |
                   v
+-----------------------------------------------------------+
| DIVIDE PU INTO UNIT BLOCKS IN ACCORDANCE WITH POC DISTANCE | S301
+-----------------------------------------------------------+
                   |
                   v
+-----------------------------------------------------------+
|          REQUEST MOTION VECTOR v OF EACH UNIT BLOCK        | S302
+-----------------------------------------------------------+
                   |
                   v
+-----------------------------------------------------------+
|                                                           | S303
| GENERATE PREDICTED IMAGE OF PU IN UNIT OF UNIT BLOCK BY    |
| TRANSLATING, ON THE BASIS OF MOTION VECTOR v, REFERENCE    |
| UNIT BLOCK THAT IS BLOCK OF REFERENCE IMAGE HAVING SAME    |
| SIZE AS AND BEING DISTANT FROM UNIT BLOCK BY MOTION VEC    |
| OR v, FOR EACH UNIT BLOCK                                  |
+-----------------------------------------------------------+
                   |
                   v
              (   END   )
```

[ FIG. 38 ]

$$\frac{4}{8} \qquad \frac{6}{8}$$

ACCURACY IN MOTION
VECTOR v

0  1  2  3  4  5

REFERENCE UNIT
BLOCK

v

b12

b11

UNIT BLOCK

31

[ FIG.39 ]

$$\frac{1}{2} \quad \frac{1}{2} \quad 0 \quad 0$$

ACCURACY IN MOTION
VECTOR v

REFERENCE UNIT
BLOCK

v

b12 b13

b11

b14

UNIT BLOCK

31

[ FIG. 40 ]

[ FIG. 41 ]

[ FIG. 42 ]

[ FIG. 43 ]

[ FIG. 44 ]

[ FIG. 45 ]

EP 3 675 490 A1

[ FIG. 46 ]

89

[ FIG. 47 ]

[ FIG.48 ]

## INTERNATIONAL SEARCH REPORT

| International application No. |
| --- |
| PCT/JP2018/029735 |

**A. CLASSIFICATION OF SUBJECT MATTER**
Int. Cl. H04N19/109(2014.01)i, H04N19/157(2014.01)i, H04N19/176(2014.01)i, H04N19/54(2014.01)i

According to International Patent Classification (IPC) or to both national classification and IPC

**B. FIELDS SEARCHED**

Minimum documentation searched (classification system followed by classification symbols)
Int. Cl. H04N19/00-19/98

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 8-223577 A (SONY CORP.) 30 August 1996, | 1-2, 12-14 |
| A | paragraphs [0052]-[0065], fig. 2, 3, 5 & US 6415055 B1, column 9, line 41 to column 11, line 50, fig. 8-9, 11 | 3-11, 15-20 |
| A | Feng Zou et al., Improved affine motion prediction, Joint Video Exploration Team (JVET) of ITU-T SG 16 WP 3 and ISO/IEC JTC 1/SC 29/WG 11, JVET-C0062_v2, 3rd Meeting: Geneva, CH, May 2016, pp. 1-5 | 1-20 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05.10.2018 | 23.10.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/029735 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | CHEN, Jianle et al., Enhanced Motion Vector Difference Coding, Joint Video Exploration Team (JVET) of ITU-T SG 16 WP 3 and ISO/IEC JTC 1/SC 29/WG 11, JVET-DO123_v3, 4th Meeting: Chengdu, CN, October 2016, pp. 1-3 | 1-20 |
| A | CHEN, Jianle et al., Algorithm Description of Joint Exploration Test Model 6 (JEM 6), Joint Video Exploration Team (JVET) of ITU-T SG 16 WP 3 and ISO/IEC JTC 1/SC 29/WG 11, JVET-F1001-v2, 6th Meeting: Hobart, AU, May 2017, pp, i-iv, 15-29 | 1-20 |
| P, A | SUZUKI, Teruhiko, IKEDA, Masaru, and SHARMAN, Karl, Description of SDR and HDR video coding technology proposal by Sony, Joint Video Experts Team (JVET) of ITU-T SG 16 WP 3 and ISO/IEC JTC 1/SC 29/WG 11, JVET-J0028, 10th Meeting: San Diego, US, April 2018, pp, i-iii, 1-9 | 1-20 |

Form PCT/ISA/210 (continuation of second sheet) (January 2015)

## INTERNATIONAL SEARCH REPORT

International application No.

PCT/JP2018/029735

**Box No. II**   **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**   **Observations where unity of invention is lacking (Continuation of item 3 of first sheet)**

This International Searching Authority found multiple inventions in this international application, as follows:

   [see extra sheet]

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
   ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☐ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2018/029735 |

[Continuation of Box No. III]

(Invention 1) Claims 1-14

Claims 1-14 is classified as Invention 1 due to having the special technical feature of performing motion compensation in a motion compensation mode selected from among a plurality of motion compensation modes in accordance with the picture order count (POC) distance, which is a distance between the POC of a block subjected to processing and the POC of a reference image that is used to generate a predicted image of the block, and thereby generating the predicted image.

(Invention 2) Claims 15-20

Claims 15-20 share with claim 1 classified as Invention 1 the feature of generating a predicted image of a block subjected to processing in accordance with the picture order count (POC) distance, which is the distance between the POC of the block and the POC of a reference image that is used to generate a predicted image of the block. However, this feature does not make a contribution over the prior art in the light of the content disclosed in document 1: JP 8-223577 A (SONY CORP), 30 August 1996, paragraphs [0052]-[0065], fig. 2-3, 5 & US 6415055 B1, column 9, line 41 to column 11, line 50, fig. 8-9, 11, and thus this feature cannot be said to be a special technical feature. Moreover, no other identical or corresponding special technical feature exists between these inventions.

In addition, claims 15-20 are not dependent claims of claim 1. Furthermore, claims 15-20 are not substantially identical to or similarly closely related to any of the claims classified as Invention 1.

As such, claims 15-20 cannot be classified as Invention 1.

Claims 15-20 are classified as Invention 2 due to having a special technical feature of: dividing a block subjected to processing in accordance with a picture order count (POC) distance, which is the distance between the POC of the block and the POC of a reference image that is used to generate a predicted image of the block to obtain a unit block; translationally moving a reference unit block of the predicted image, the reference unit block corresponding to said unit block; and thereby generating the predicted image unit by unit of said unit blocks," and are therefore classified as Invention 2.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANLE CHEN et al.** Algorithm Description of Joint Exploration Test Model 4 (JVET-C1001. *JVET of ITU-T SG16 WP3 and ISO/IEC JTC1/SC29/WG11,* 26 May 2016

- **FENG ZOU.** Improved affine motion prediction (JVET-C0062). *JVET of ITU-T SG16 WP3 and ISO/IEC JTC1/SC29/WG11,* 26 May 2016